# EUROPEAN PATENT SPECIFICATION

(11) **EP 2 078 168 B1**
(45) Date of publication and mention of the grant of the patent: **30.03.2011**
(21) Application number: 07861003.7
(22) Date of filing: 08.10.2007
(51) Int. Cl.: F16F 9/32, F16F 9/346, F16F 9/34

(54) **THE SELF-ADJUSTABLE SHOCK ABSORBER, WITH SELF-CORRECTING DAMPING CHARACTERISTIC, HAVING CURVED, CYLINDRICAL AND PLANAR FILLING VALVES.**
SEBSTREGULIERBARER STOSSDÄMPFER MIT SELBSTKORRIGIERENDER DÄMPFUNGSEIGENSCHAFT UND GEKRÜMMTEN ZYLINDRISCHEN UND EBENEN FÜLLVENTILEN
AMORTISSEUR AUTO-REGLABLE D'AUTOMOBILE A AMORTISSEMENT AUTO CORRECTEUR COMPORTANT DES SOUPAPES DE REMPLISSAGE COURBES, CYLINDRIQUES ET PLATES

(30) Priority: 10.10.2006 RO 200600770
(43) Date of publication of application: 15.07.2009
(73) Proprietor: Niculescu, Adrian, Ioan, Bucuresti (RO)
(72) Inventor: Niculescu, Adrian, Ioan, Bucuresti (RO)
(74) Representative: Hano, Christian
(86) International application number: PCT/RO2007/000019
(87) International publication number: WO 2008/044956

(56) References cited:
- EP-A- 1 190 184
- FR-A- 356 042
- GB-A- 728 495

## Description

The invention refers to an automotive self-adjustable shock absorber with self-correcting damping characteristic, filled with curved, cylindrical and planar filling valves, having according to the preamble of claim 1

The self-adjustable shock absorber with self-correcting damping characteristic, filling with curved, cylindrical and planar filling valves, has a progressive damping characteristic, used at vehicles and auto vehicles for wheels, body, chassis, driver and passenger seats, engine group oscillations damping, like in shock bumpers, for impact energy absorption. Depending on the situation it can be used unpressurized, at low pressure for improving the damping characteristic or pressurized at a high pressure for assuring a buoyant force too.

At high pressure it can be used like a stabilizer for the bonnets and door, both for vehicles and motor vehicles

Unpressurized, or medium or high pressurized, it can be used like a stabilizer or tail gate thrust, in aeronautic or naval industry, military technique, for civil and industrial construction, furniture or different sportive and household articles, inclusive like an anti earthquake stabilizer.

Their components can be derived from classic shock absorber/damper, but specific solutions cheaper and more performing and compact are preferable.

The patents RO 118546 and EP 1 190 184 show the principles and sketches for divers self-adjustable shock absorbers with self-correcting damping characteristics, unrevealed solutions for filling valves, for precisely stroke limit at rebound, which due to the new conception is specific, solution for elements (inner cylinder, guide, or guides in cases of twin guides, seal element) aligning.

The problem underlying the invention is to provide by technological simple and reliable means for filling valves, for precisely stroke limit at rebound, for a better element aligning, and for reducing the elements number.

These problems are solved with reliable, compact and cheap solutions, comprising the features of claim 1. Preferred embodiments are claimed in claims 2 to 25.

The shock absorber according to the invention assures an efficient filling on rebound and compression, made by cylindrical filling valves placed inside inner cylinder, at its ends, and solid with this.

The filling valves can be placed the same to the inner annular bodies inside the inner cylinder or on annular cover outside inner cylinder, sealed with the inner cylinder and communicating with this through one or more holes in the inner cylinder, the valves section being curve, with convenient profile, inclusive cylindrical or planar.

The solution eliminates valve body and the holding cup of the upper filling valve, assuring compact and cheap solution.

Due to the valve body eliminating, the axial limitation and centering are assumed by the lower part of the inner cylinder, machined in correspondence with the fastening area shape of the tank cylinder.

For a better fastening and seal, the contact area on the inner cylinder and/or the bottom lid of the tank cylinder is plated with malleable material.

At the solutions that the shock absorber must limits precisely the rebound stroke, round the rod, on the piston, or on the shoulder fasten on the rod, a rigid, semi rigid, or elastic stopper bumper placed, the stopper bumpers being muffed with a rigid/semi rigid restricted ring, at the solutions which the collision stopper bumper area coincide with the valves area.

The balancing chamber is delimitated on height by a cylinder with holes, placed on the inner lid, centered or not radial with the inner lid. For rigidity, simplicity, the inner cylinder is lengthened above the inner cylinder head, forming the balance chamber.

The liquid level in the balancing chamber is stabilized with tranquilizing elements fastened rigidly or elastically on the inner cylinder.

The balance chamber closing and axial fasten is made by in the upper part by a specific outer lid, containing a seal element for rod sealing, and an elastic cloak sealing the outer cylinder. An annular shoulder on the inferior face of the external lid centers the cylinder defining balance chamber

The piston fasten on the rod is made by nut or riveting. For gauge reasons the fasten element e.g. the nut or riveting are buried.

For material economy and relief the piston is empty inside.

For technological and functional reasons the metering holes/slots sideways inner cylinder is/are realized in one or more steps.

According to the invention the shock absorbers has/ have the next advantages:
- the curved/cylindrical filling valves, fasten directly on the inner cylinder , eliminating the valve body and the protector holder of the upper valve, a solution simple , compact and cheap solution;
- placing of the curved/cylindrical/planar filling valves on bodies on the outer side of the inner cylinder shorten the length and permit its placements along all inner cylinder, favoring the filling
- adding a rebound stopper bumper, the precisely stroke limiting is assured
- inner cylinder lengthened above the inner cylinder head for balance chamber forming, reduces costs and increases robustness
- oil tranquillers placed on the balancing chamber fastening by forms, elastic or rigid, permit cheap solutions
- the outer lid assures both the fastening of the cylinder forming balance chamber or inner cylinder fasten (when the balance chamber is made elongating the inner cylinder) and the sealing between the outer cylinder and rod, simple and cheap solution;
- the solution with seal element fastened in the upper inner cylinder part, with the upper inner cylinder centered by outer cylinder shoulder, assuring, simplicity, robustness and cheaper solution;
- for a better sealing the piston is equipped with more segments
- for size and costs reducing the piston on rod fastening is made by riveting, better buried, and for material economy and weight reducing, the piston is empty inside;
- the solutions of the inner valves, outer lid and aligning assures a shock absorber with performances closes by semi-intelligent suspension at similar prices similarly or reduces relative to the standard shock absorbers

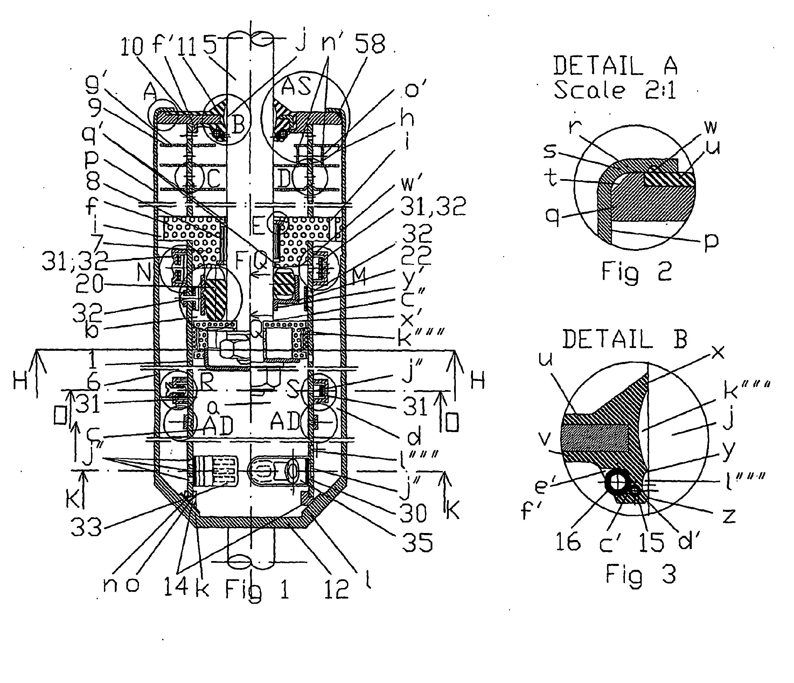

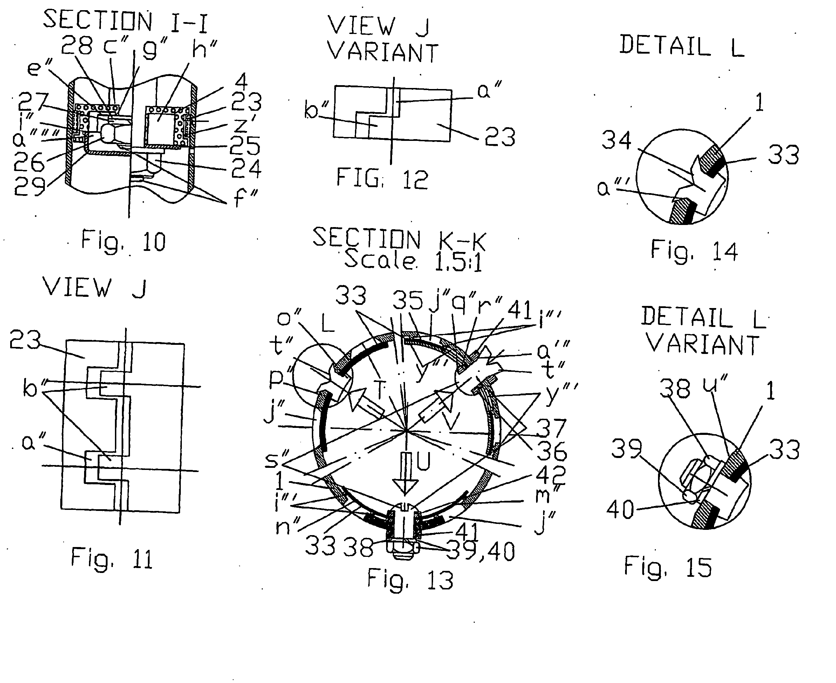

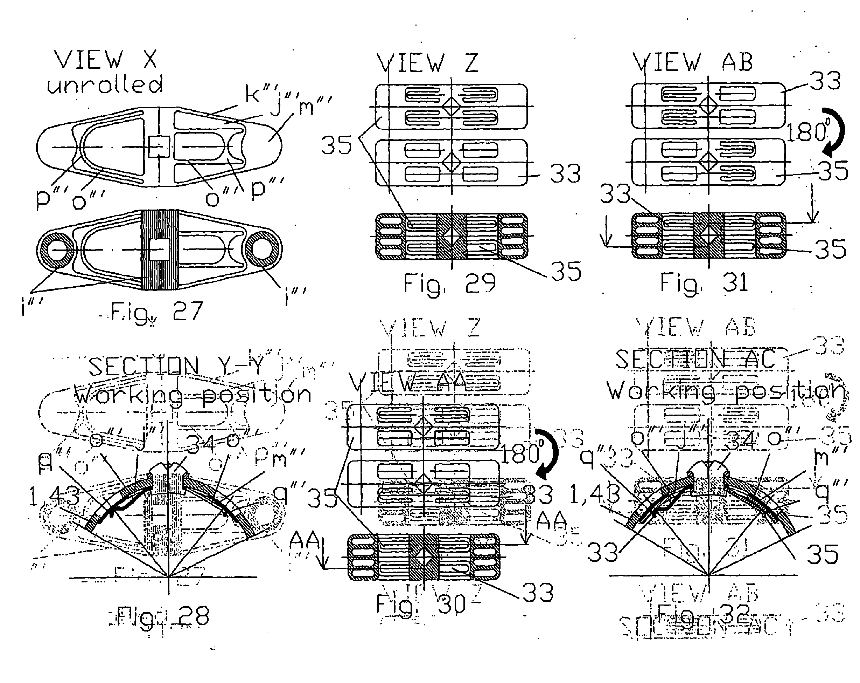

We give 24 examples of achieving the invention in 86 variants referring to figures 1...89 representing:
figure 1: the assembly drawing for the solution with curved/cylindrical inner and external filling valves, with labyrinth system un centered relative the guide and independent to the inner cylinder, fastening hub, according to the first accomplishing example;
figure 2: A detail, for outer cylinder closing-sealing area with the external lid;
figure 3: B detail, for the road slidably sealing
figure 4: C detail, disk soldered/pressed on cylinder, forming labyrinth
figure 5: D detail, for disks or disks assembly forming labyrinth system, fastening by shape
figure 6: E detail, for axial guide limitation
figure 7: F detail, for rebound stopper bumper fastening in the inner trough of the limiting casing
figure 8: G detail, for rebound stopper bumper fastened in limiting casing holes and filling valve fasten nut on the planished surface on the outer face of inner cylinder
figure 9: H-H transverse section in hollow piston/with inner cuttings
figure 10: I-I longitudinal section, in hollow piston/with inner cuttings
figure 11: J side view of large segment
figure 12: J side view of narrow segment
figure 13: K-K section, showing location and fastening for one or more inner filling valve with one or two overlap curved/cylindrical plates:
   - T view: directly on the inner surface of the inner cylinder;
   - U view: on the inner surface of the inner cylinder, remaining prominent after machine/erode of the neighbor surfaces;
   - V view: on curved/cylindrical prominences resulting from material added on the inner surface of the inner cylinder
figure 14: L detail - plate valve fastening with rivet having profiled head
figure 15: L detail - fastening variant with rivet having profiled head

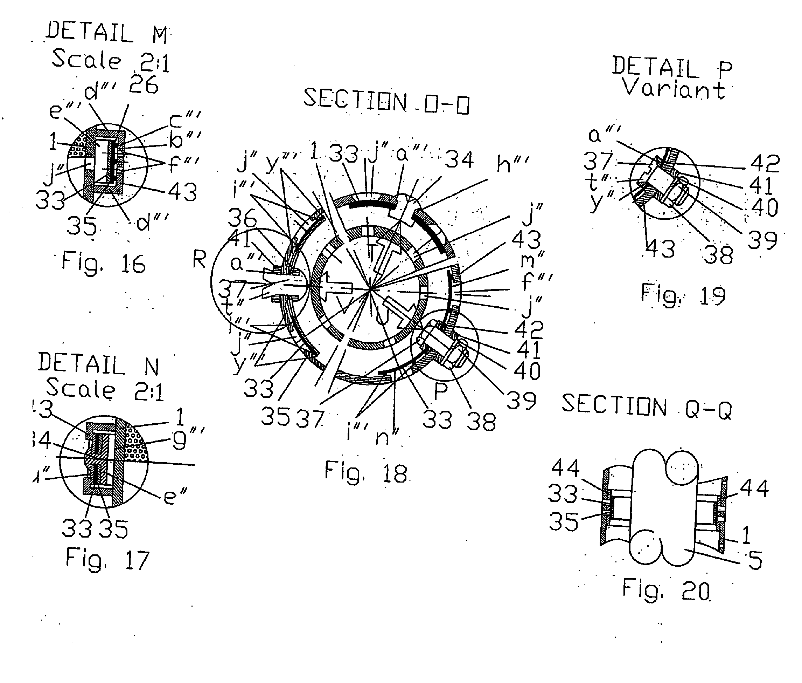

figure 16: M detail - longitudinal section in external filling valve, the filling orifices area
figure 17: N detail - longitudinal section in external filling valve, the fastening area
figure 18: O-O transverse section, in external filling valve, with plates on:
   - in T view: directly on the inner surface of the annular cover;
   - in U view: on the inner surface of the annular cover, remaining prominent after machine/erode of the neighbor surfaces;
   - in V view: on curved/cylindrical prominences resulting from material added on the inner surface of the annular cover
figure 19: P detail -variant for plate valve fastening with screw with buried head, nut and setting hub on plate and annular cover/inner cylinder
figure 20: Q-Q longitudinal section, showing the plates dispose on a prominence of malleable material

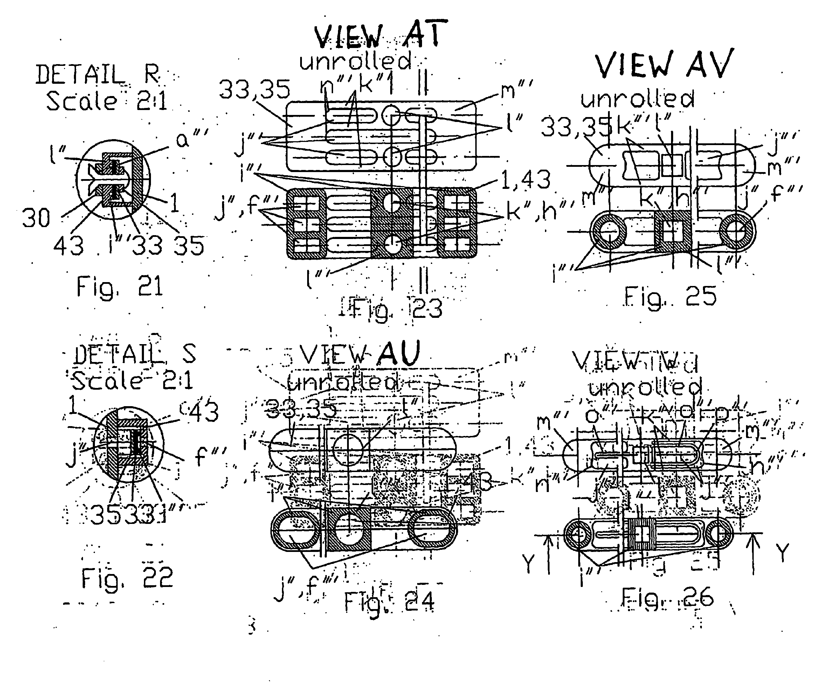

figure 21: R detail-longitudinal section showing the plate fastening on the eternal valve, with standard rivet and with setting hub on plate and annular cover, with sealing area realized by machining /eroding
figure 22: S detail - showing longitudinal section in sealing area, realized by material adding
figure 23: AT view, showing on unroll view:
   - the plate for covering 2x3 filling orifices, with internal channels/slots and 2 fastening holes
   - the plates, filling orifices and fastening area.
figure 24: AU view, showing on unroll view:
   - the plate without internal channels/slots, with a circular fastening boring.
   - the plate, the setting area and circular boring for fastening element
figure 25: AV view, showing on unroll view:
   - The plate with internal channels/slots, square fastening boring
   - The plate and setting areas, on the inner surface of the inner cylinder/annular cover /inner annular body/cast or injected annular body
figure 26: W view showing on unroll view:
   - The plate with internal channels, square fastening boring and simple or double tongue linked by connecting link
   - The plate and setting areas, on the inner surface of the inner cylinder/annular cover /inner annular body/cast or injected annular body
figure 27: X view showing on unroll view:
   - Profiled plate with internal channels, square fastening orifice and simple or double tongues linked by connecting link
   - The profiled plate and setting areas, on the inner surface of the inner cylinder/annular cover /inner annular body/cast or injected annular body
figure 28: Y-Y transverse section showing the plate in working position (shut) and simple or double tongues linked by connecting link
figure 29: Z view showing on unroll view:
   - The plate with 4 internal channels, square fastening boring and 4 simple tongue
   - The plate with internal channels, square fastening boring
   - The overlap plates and setting areas on the inner surface of the inner cylinder/annular cover /inner annular body/cast or injected annular body
figure 30: AA view showing on unroll view:
   - The plate with 4 internal channels, rotate square fastening boring and 2 simple tongue on the same axis, axis differing from the first plate axis (result rotating the first plate with 180°)
   - The overlap plates and setting areas, on the inner surface of the inner cylinder/annular cover /inner annular body/cast or injected annular body
figure 31: AB view showing on unroll view:
   - The plate with 4 internal channels, rotate square fastening boring and 2simple tongue on the same side, the second plate rotated with 180° relative to the first
   - The overlap plates and setting areas, on the inner surface of the inner cylinder/annular cover /inner annular body/cast or injected annular body
figure 32: AC-AC transverse section showing in working situation (shut) the plates and tongues

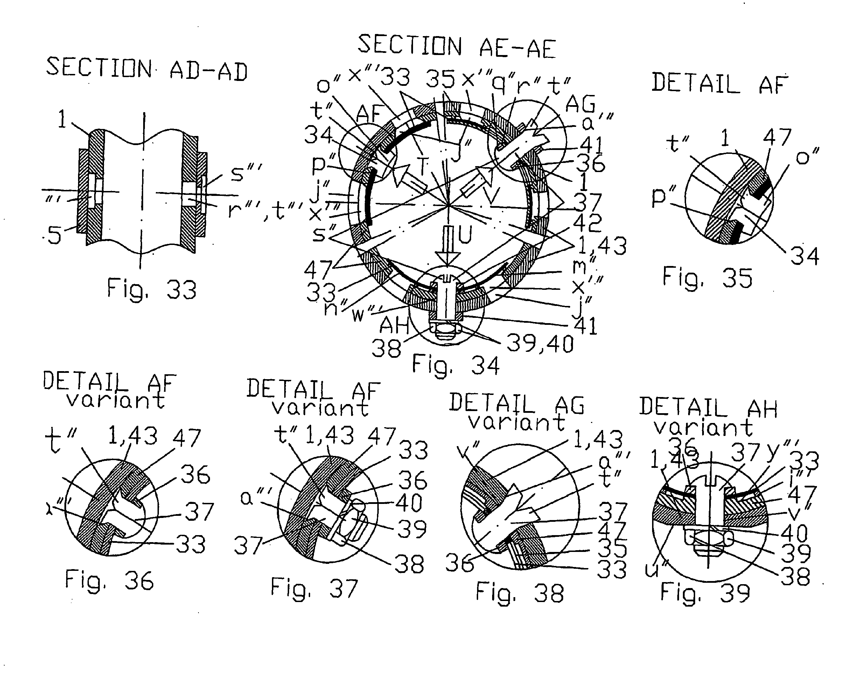

figure 33: AD-AD longitudinal section, showing the annular body with metering holes/slots overlap on the technological or wrong holes
figure 34: AE-AE section in internal/outer filling valve, with curved/cylindrical valve plates on the inner annular body inside the inner cylinder/annular cover:
   - in T view: setting directly on the internal surface of the annular body;
   - in U view: setting on the internal surfaces of the annular body, becoming prominent by neighborhood surface machine/eroding;
   - in V view: setting on the curved/cylindrical prominences resulting with material added on the inner surface of the annular body figure 35: AF detail for the transverse section in the plate on inner annular body, inside the inner cylinder/annular cover, fastened using rivet with profiled head figure 36: AF detail -variant-for transverse section in plate on inner annular body, inside the inner cylinder/annular cover, fastened using rivet with buried head and setting hub on the plates
figure 37: AF detail-variant- for transverse section in plate on internal annular body, inside the inner cylinder/annular cover, fastened using screw with buried head and setting hub on the plates
figure 38: AG detail for transverse section in plate on internal annular body, inside the inner cylinder/annular cover, fastened using rivet with normal head and plates setting hub, riveted in the inner cylinder/annular cover.
figure 39: AH detail for transverse section in plate on internal annular body, inside the inner cylinder/annular cover, fastened using screw with spherical head, plates setting hub and nut on a planished surface on the inner cylinder/annular cover.

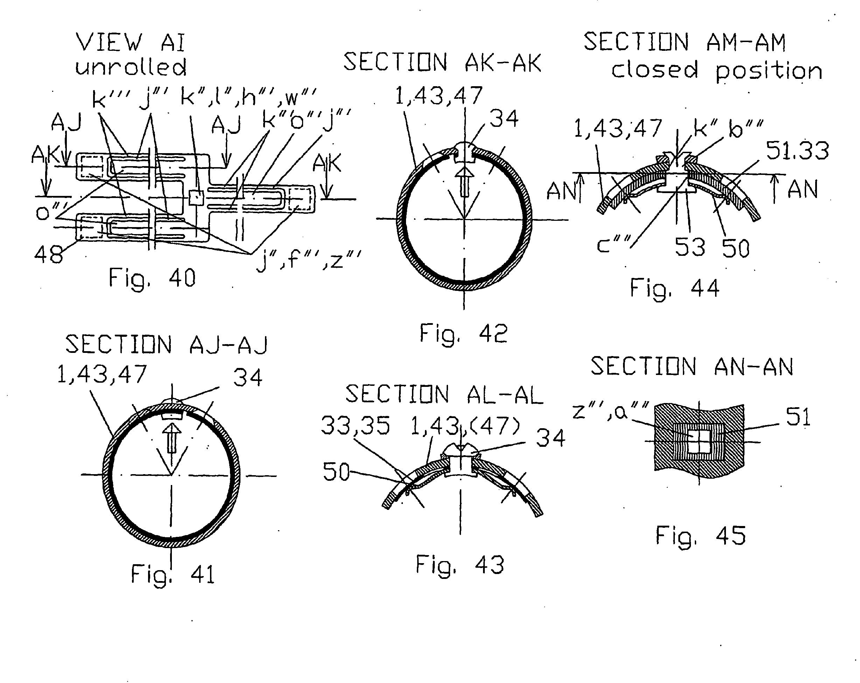

Figure 40: showing the plates unrolled, for small diameters of inner cylinder situation
Figure 41: showing in the working position (shut) a transverse section in the postponement arm relative to the fastening boring, placed in the inner cylinder/annular cover/annular body
Figure 42: showing in working position (shut) a transverse section in the arm prolonged at the fastening boring
Figure 43: showing in working position a transverse section in elastic plate and spring plate
Figure 44: shows in transverse section the variant with rigid/semi rigid/elastic plate and spring plate
Figure 45: shows the section AN-AN in plate guiding area

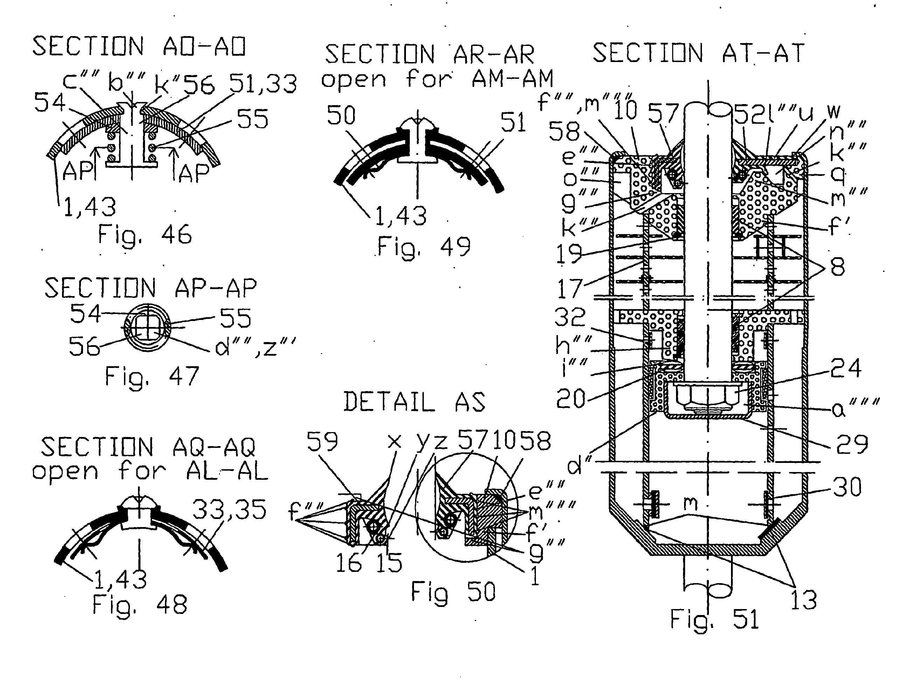

Figure 46: shows the section AO-AO for rigid/semi rigid/elastic/plate, controlled by helicoidally spring
Figure 47: shows the square section AP-AP in the plates fastening area
Figure 48: shows transverse section AQ-AQ, at variants with elastic plate with own strengthened tongues and spring plate, in working position (open)
Figure 49: shows transverse section AR-AR at variant with rigid/semi rigid/elastic/plate and spring plate in working position (open)
Figure 50: shows details for removable sealing device in outer lid, and for fastening in inner cylinder variant
Figure 51: longitudinal section in double guiding shock absorber

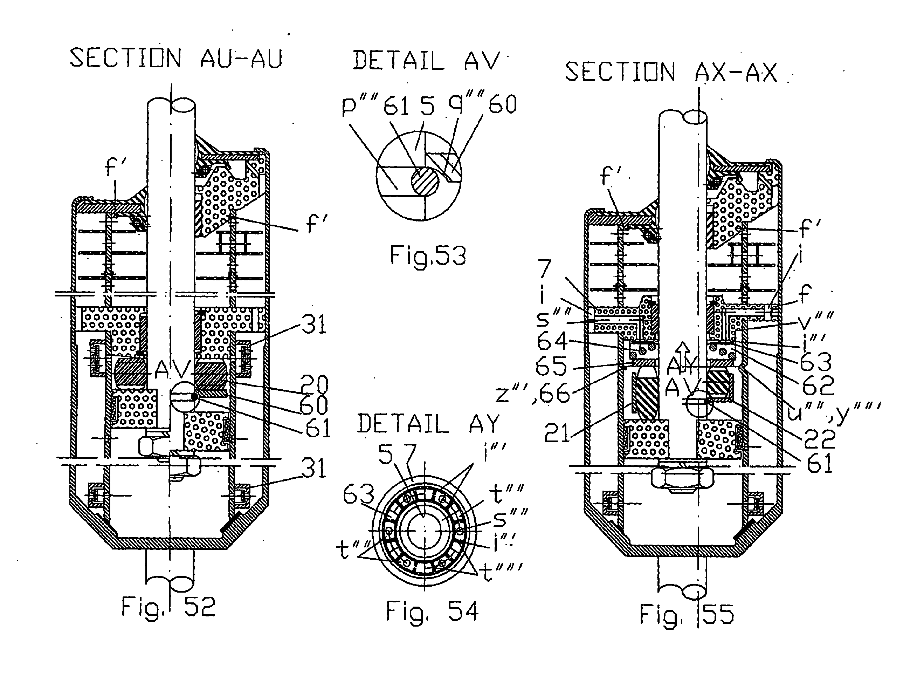

Figure 52: longitudinal section in single and double guiding shock absorber with rebound stopper bumper
Figure 53: rebound stopper bumper hanger fastening detail
Figure 54: superior planar axial body valve detail
Figure 55: longitudinal section in self correcting shock absorber with superior planar axial body valve using disk plate and helicoidally spring, inner inferior curved/cylindrical filling valve and rebound stopper bumper on piston with limiting casing/cup hanger

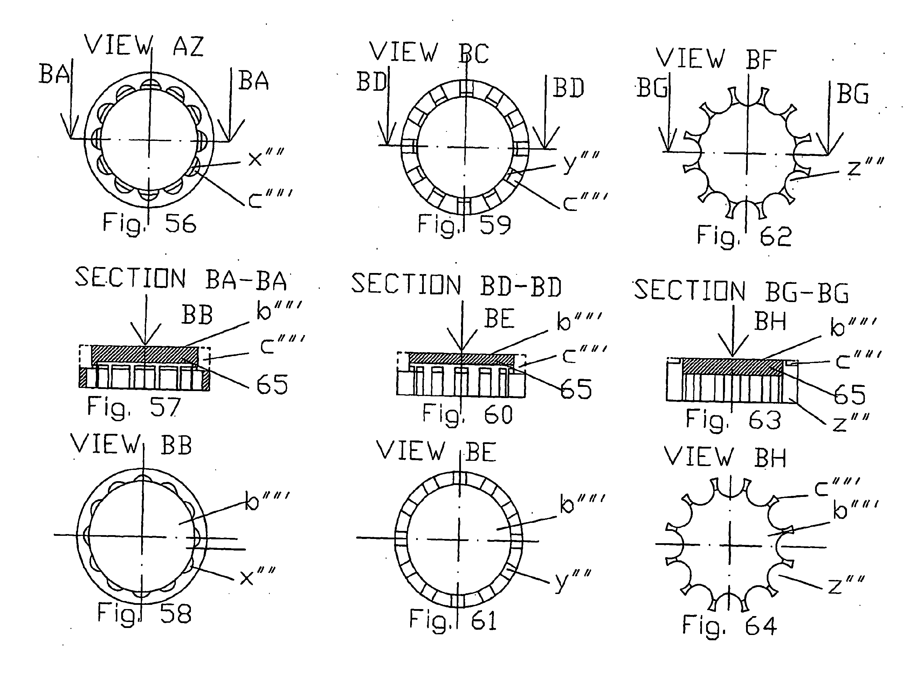

Figure 56: lower view cup hanger with inner cuttings
Figure 57: longitudinal section in cup hanger with inner cuttings
Figure 58: top view valve cup hanger with inner cuttings
Figure 59: bottom view cup hanger with slots
Figure 60: longitudinal section in cup hanger with slots
Figure 61: top view cup hanger with slots
Figure 62: lower view cup hanger with outer cuttings
Figure 63: longitudinal section in valve cup hanger with outer cuttings
Figure 64: top view cup hanger with outer cuttings

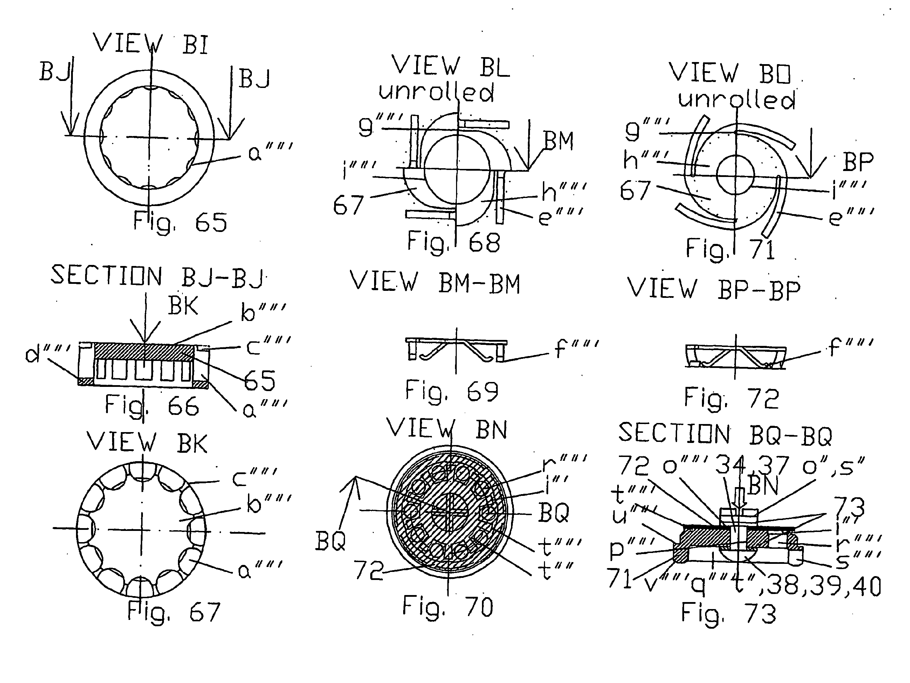

Figure 65: lower view cup hanger with outer cuttings and setting collar
Figure 66: longitudinal section in cup hanger with outer cuttings and setting collar
Figure 67: top view cup hanger with outer cuttings and setting collar
Figure 68: unroll view spring disk with legs
Figure 69: side view spring disk with legs
Figure 70: top view valve body for lower planar filling valve
Figure 71: unroll view valve disk plate with legs
Figure 72: side view valve disk plate with legs
Figure 73: longitudinal section in valve body with lower filling valve

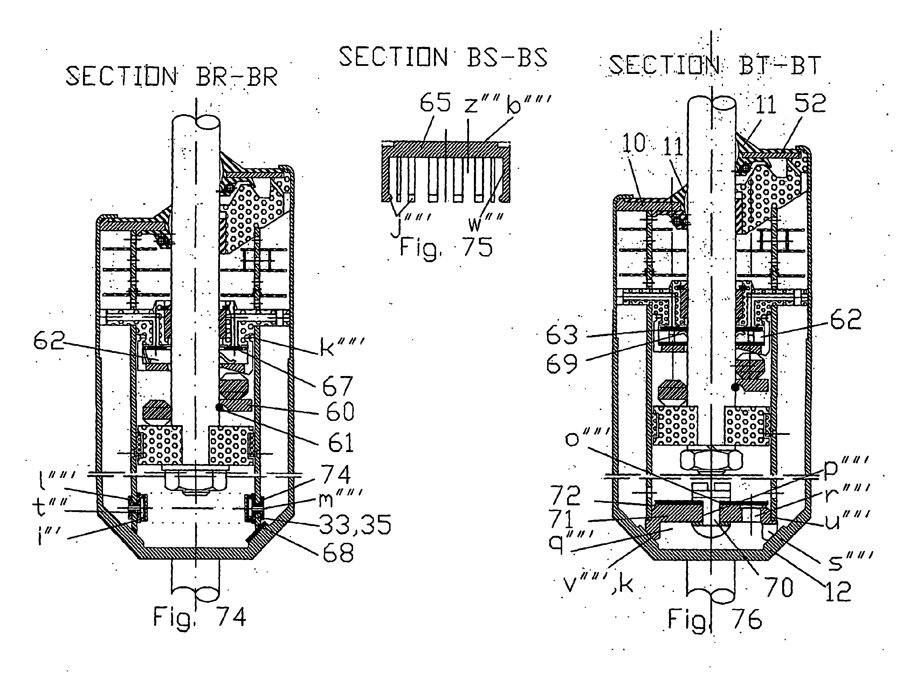

Figure 74: longitudinal section in self adjustable shock absorber with double/simple guide, filling on compression with planar upper valve with disk plate with legs and filling on rebound with curved/cylindrical inner valve placed on the cast/injected annular body
Figure 75: longitudinal section in cup with legs (slots) and fastening collar
Figure 76: longitudinal section in self-adjustable shock absorber with double/simple guide filling on compression with planar upper valve with disk acts with spring plate with legs, and filling on rebound with planar lower valve, with rebound stopper bumper on piston/annular hunger.

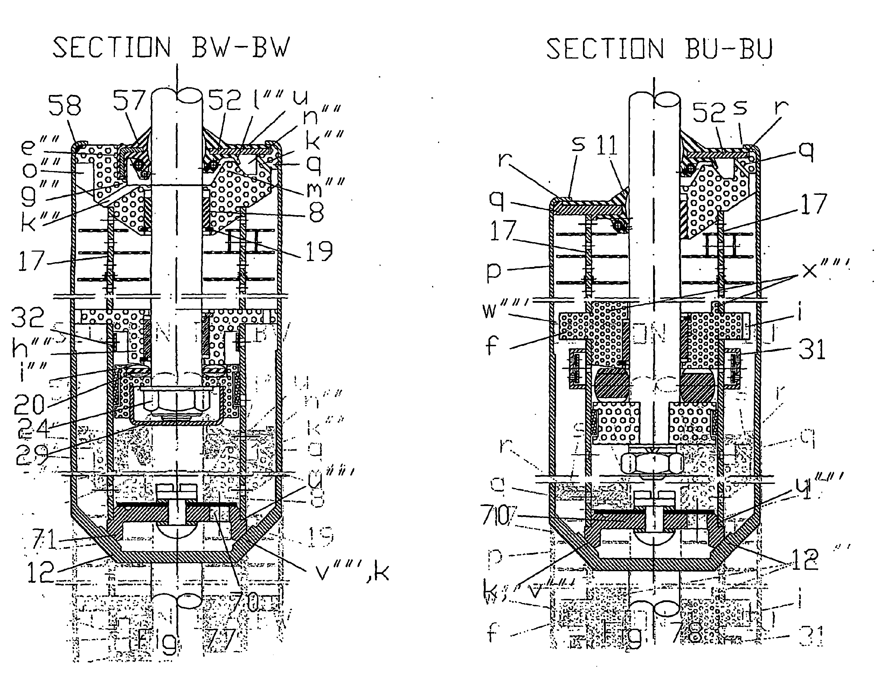

Figure 77: longitudinal section in self-adjustable shock absorber with double guide, with sealing element in outer lid/removable seal, filling on compression with curved/cylindrical inner valve and with planar valve on rebound, with rebound stopper bumper in piston.
Figure 78: longitudinal section in self-adjustable shock absorber with double/simple guide, with balance chamber cylinder centered by collar on the upper inner cylinder head, filling on compression with curved/cylindrical external valve, and filling on rebound with planar lower valve, with rebound stopper bumper on piston.

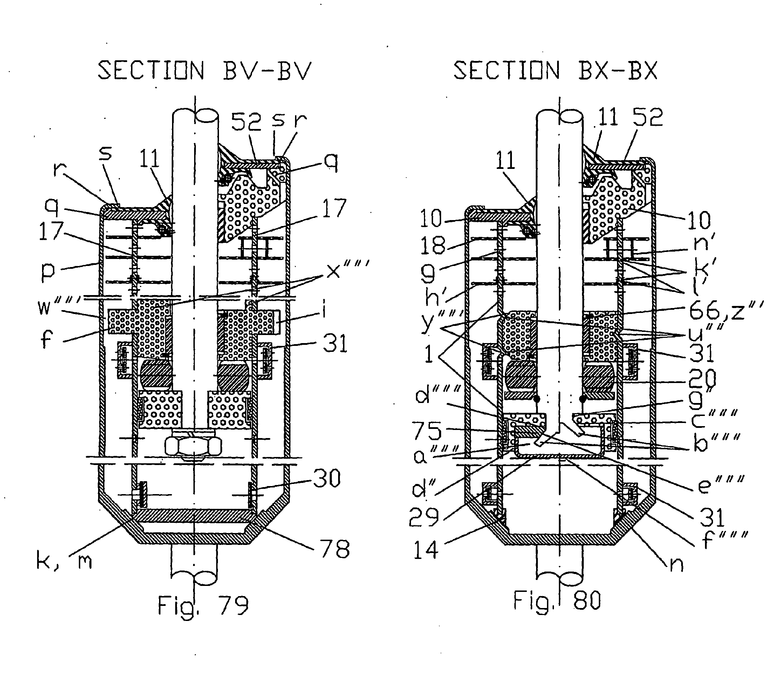

Figure 79: longitudinal section in self-adjustable shock absorber with double/simple guide, with balance chamber cylinder centered by collar on the upper inner cylinder head, filling on compression with curved/cylindrical external valve, and filling on rebound with curved/cylindrical internal valve, with rebound stopper bumper on piston and lower inner cylinder head.
Figure 80: longitudinal section in self-adjustable shock absorber with double/simple guide, with inner cylinder lengthened above the inner cylinder head, forming the balance chamber, filling on compression and rebound with curved/cylindrical external valve, with rebound stopper bumper on annular hunger, piston fastened inside with rod flange/rim, and inner cylinder fastening hub on the bottom outer lid.

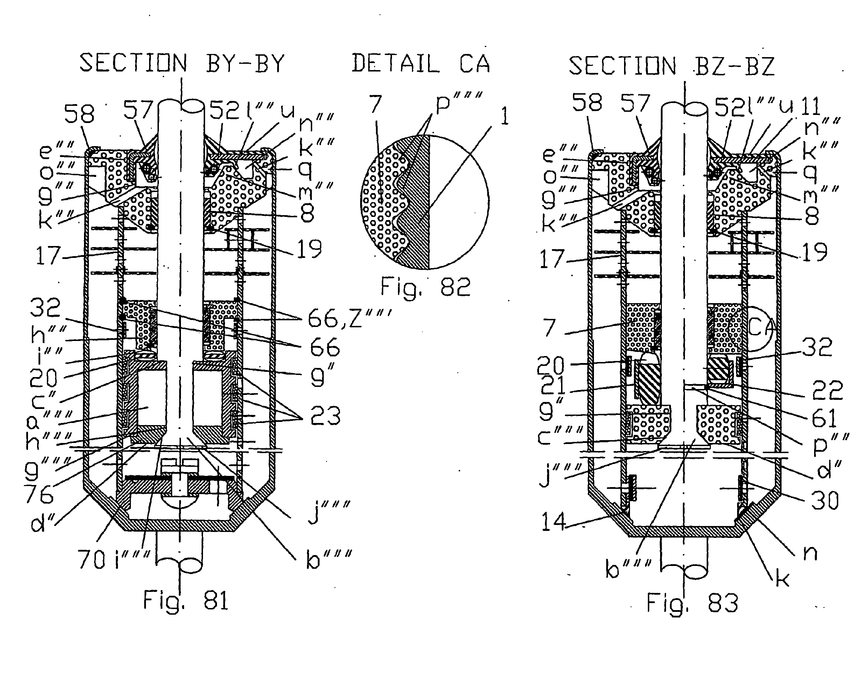

Figure 81: longitudinal section in self-adjustable shock absorber with double guide, with the seal element in the outer lid/removable seal, having inner cylinder lengthened above the inner cylinder head, forming the balance chamber, filling on compression with curved/cylindrical internal valve, filing on rebound with planar inferior valve, with rebound stopper bumper in piston, hollow piston fastened outside with rod flange/rim, and equipped with three segments.
Figure 82: longitudinal section detail for inner cylinder head with inner cylinder fastening area.
Figure 83: longitudinal section in self-adjustable shock absorber with double guide, with the seal element in the outer lid/removable seal, having inner cylinder lengthened above the inner cylinder head, forming the balance chamber, filling with curved/cylindrical internal valves, with rebound stopper bumper on piston equippeg with limiting casing /rebound stopper bumper in cup hanger, inner cylinder setting on fastening hub placed on bottom outer lid.

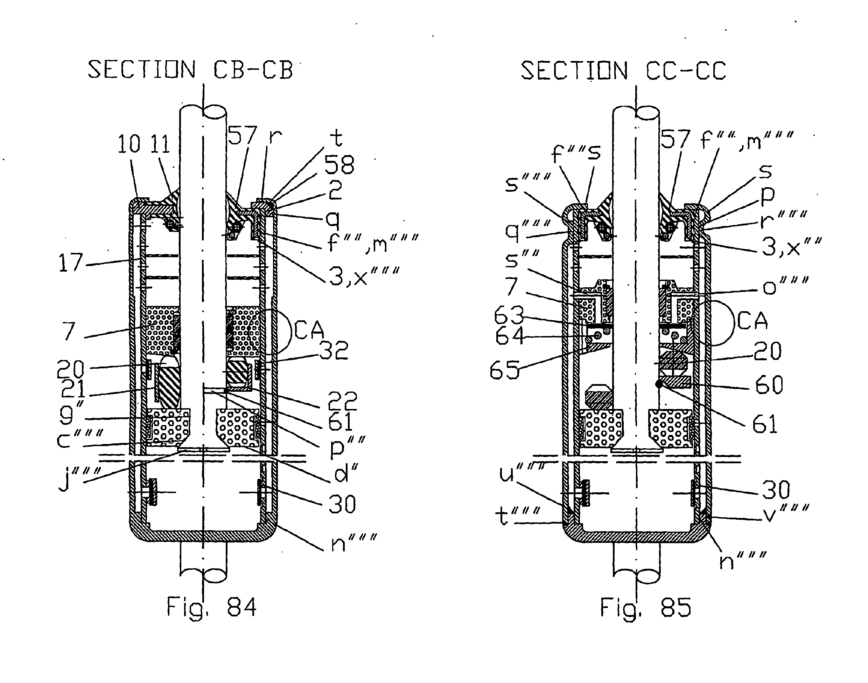

Figure 84: longitudinal section in self-adjustable shock absorber with single guide, with the seal element in the outer lid/removable seal in inner cylinder, having inner cylinder lengthened above the inner cylinder head, forming the balance chamber, filling with inner curved/cylindrical valves, with rebound stopper bumper on piston equipped with limiting casing /rebound stopper bumper in cup hanger, inner cylinder setting on bottom outer lid cutting.

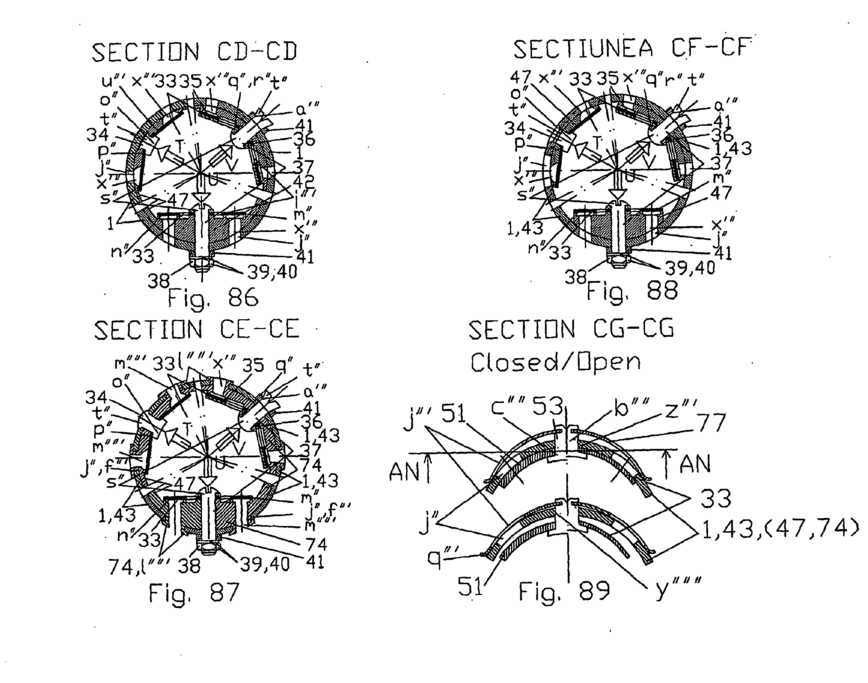

Figure 85: longitudinal section in self-adjustable shock absorber with single guide, with the removable seal member in inner cylinder, having inner cylinder lengthen forming balance chamber, filling on compression by planar valve with disk plate and helicoidally spring, filling on rebound by inner curved/cylindrical valves, with rebound stopper bumper on piston/hunger, inner cylinder setting in bottom outer lid cutting. Figure 86: transverse section in filling valve with planar plates placed on internal annular body inside the inner cylinder:
   - in T view: directly on internal surface of the inner annular body;
   - in U view: on internal surface of the inner annular body remained prominent by neighborhood surfaces machine/eroding;
   - in V view: on curved/cylindrical prominences made with material adding on the inner surfaces of the inner annular body
Figure 87: transverse section in filling valve with planar plates placed on cast annular body inside the inner surface of the inner cylinder/inner surface of the annular cover, setting on:
   - in T view: directly on inner surfaces of the cast annular body;
   - in U view: on internal surface of the cast annular body remained prominent by neighborhood surfaces machine/eroding;
   - in V view: on curved/cylindrical prominences made with material adding on the inner surfaces of the cast annular body
Figure 88: transverse section in filling valve with planar plates placed on inner annular arcs, setting on:
   - in T view: directly on inner surfaces of the inner annular arcs;
   - in U view: on internal surface of the inner annular arcs remained prominent by neighborhood surfaces machine/eroding;
   - in V view: on curved/cylindrical prominences made with material adding on the inner surfaces of the inner annular arcs
Figure 89: transverse section in curved/rigid/semi rigid/elastic filling valve with external plate spring, open and shut variants

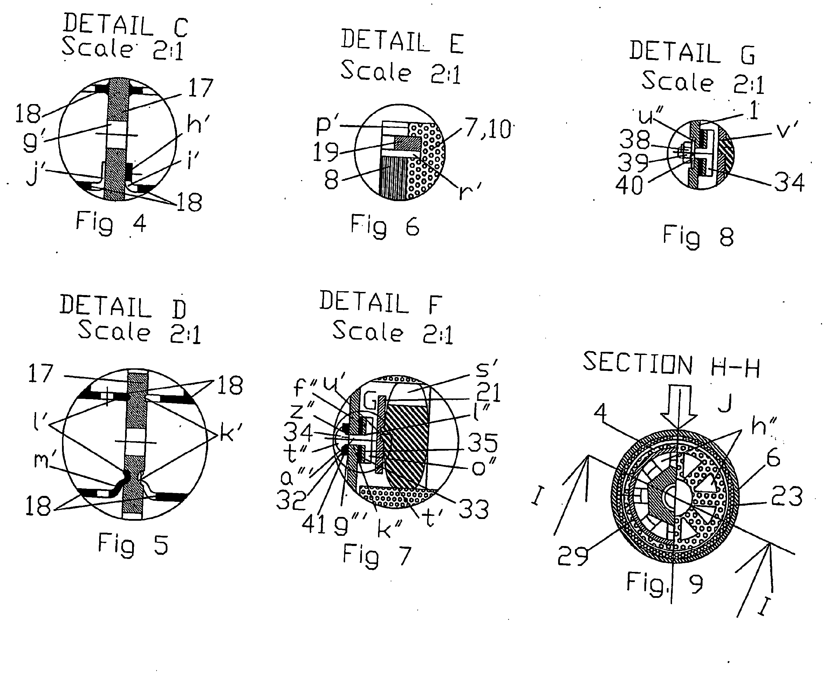

Automotive self-adjustable shock absorber with self-correcting damping characteristic, having curved, cylindrical and planar filling valve according to the first accomplishing example - Fig. 1-33, 81 presents the ensemble design, for the shock absorber solution with curved/cylindrical filling valve, rebound stopper bumper and discharged metering holes/slots. An inner cylinder (1) forming a working chamber (a), the inner cylinder being provided along the length thereof with a plurality of rebound check metering holes/slots (a') and compression check metering holes/slots (b').
A piston (4) slidably mounted within the working chamber (a) and separating the working chamber (a) into a rebound compartment (b) and a compression compartment (c), the volumes of which vary in accordance with the position of the piston (4) in the working chamber (a).
A piston rod (5) connected to the piston (4) and extended for the end of the working chamber (a) adjacent to the rebound chamber (b) moves piston (4) inside the working chamber (a).
An outer cylinder (6) is disposed around the inner cylinder (1), the space between both cylinder forming a reservoir chamber (d).
An inner cylinder head (7), of the inner cylinder (1) close the end of the working chamber (a) adjacent the rebound compartment (b).
The inner cylinder head (7) is provided with an annular piston rod guide (8) or a central aperture (e), being sized to slidably engage around the piston rod (5) and with a collar (f) rigid with the inner wall of the outer cylinder (6).
A labyrinth system (9) with passages (g) for working liquid passing, sustained on the upper part of the inner cylinder head (7), is upper limited by an outer upper lid (10), the compartment between the inner cylinder head (7), the outer upper lid (10), piston rod (5) and outer cylinder (6) forming a balance chamber (h).
A fluid fills the working chamber (a) and at least partially fills the balance chamber (h).
Some slots or holes (i) in collar (f) of the inner cylinder head (7) ensure the oil passing between the balance chamber (h) and reservoir chamber (d).
The outer upper lid (10) is provided with a seal member (11) having a center aperture (j) sized to slidably engage around the piston rod (5).
The outer cylinder (6) is closed in lower part with an bottom outer lid (12), having inside a prominence (k) whose face (l) is planed, conic, or spherical, machined, for inner cylinder (1) setting-centering using a fastening hub (14) made of metallic, plastic, elastic or elastic -plastic material, for better seal-centering.
The fastening hub (14) covering inside and/or outside the lower extremity of the inner cylinder (1), the fastening hub (14) having the inner faces (n) for the location of the inner cylinder (1) and the face (o) for its location on the prominence (k), with forms correlated with the forms of the mating members, its lower face (m) being processed in correlation with the face (l) of the prominence (k).
In the upper area, the outer cylinder (6) has its inner surface processed on the area (p) for assuring the alignment with side (1) on the prominence (k) in its lower area. The outer upper lid (10) has its circular edge (q) firm with the outer cylinder (6) in the upper processed area (p), being axially fixed through the side (r) to a closing flange (s) of the upper end of the outer cylinder (6). The closing flange (s) is allowed by the dull edge (t) in the outer upper lid (10). The sliding sealing member (11) of the piston rod (5) has two extensions, an upper one (u) and a lower one (v) which coat the outer upper lid (10) and they are secured to this.
The outer upper lid (10) sealing is done as to the outer cylinder (6) by the upper extension (u) of the sliding sealing member (11) of the piston rod (5) which is preferable to have to its extremity a circular prominence (w) of a suitable cross section which deforms when the outer cylinder inflecting (s), assuring the contact pressure needed for sealing at high pressures. The prominence (w) is represented in a free state.
The opening (j) of the seal member (11) is endowed with three lips (x), (y), (z) limiting two chambers (k''''''), (l''''''). Behind the lower chamber (l'''''') there is a circular trough (c') where a ring spring (15) is inserted to increase the lips (y), (z) tightening power. The lower lip (z) gauging is made through a dull edge (d'). A second trough (e') where a second ring spring (16) is inserted is provided for high pressures sealing. The trough (c') or the troughs (c'), (e') position and the spring (15) forces, (15), (16) respectively is done function of the version so that one can obtain the desired tension distribution on the seal lips.
The outer upper lid (10) is provided at its lower edge with a centring circular tab (f'), which poses radially the labyrinth system (9).
The labyrinth system (9) is made up of a cylinder (17) with holes (g) for the liquid passing and of some disks (18) provided with the communication holes (g). The disks (18) are fastened on the outer and/or inner side of the cylinder (17), either rigidly by pressing or welding or by moulding. When attaching it by pressing, it should be provided with a collar (h) with some holes (i') or slots (j') for favoring the moulding. When moulding it, on the cylinder (17) there are some troughs or hollows (k') where one attaches elastically or by moulding/pressing the prominences (l') of the disks (18). The prominences (l') of the disks (18) should be inclined in the preterminal part (m'). For stiffing, in the case of several disks (18) these can be coupled two or several through connecting links (n') provided with holes (o') for oil passing.
For the axial limiting of the guide (8), the upper inner cylinder head (7) is provided in the trough (p') with a tab (q') and a trough (r') where an elastic ring is inserted (19). The tab (q') can be placed either at the upper extremity or the lower one of the upper inner cylinder head (7), the position of the trough (r') and of the ring (19) being correlated to the chosen version. For the firm limiting of the rebound stroke on the piston (4), around the piston rod (5), there is a rebound stopper bumper (20) which is coated in a rigid (metallic) limiting casing (21) when there are holes or valves in the rebound stopper area, defined by the inner part of the upper area of the inner cylinder (1) and on the lower part of the upper inner cylinder head (7). The limiting casing (21) is less high than the stopper bumper (20) so that the stopper bumper (20) should come out of the either side of the limiting casing (21). The stopper bumper (20) should be conical or elliptical. The upper (s') and lower (t') sides of the stopper bumper (20) should be smooth or shaped according to the desired deformation characteristic. To maintain the relative position of the limiting casing (21), as to the stopper bumper (20), these are permanently or temporarily joined either by sticking the stopper bumper (20), in the limiting casing (21) or by the shape of the parts joined in the central part that is through a trough (u') or several holes (v') in the limiting casing (21) penetrated by the bumper material (20). By a suitable choosing of materials and shapes, the limiting casing (21) can be cast together with the buffer (20) in one body.
In the case of a maximum rebound, the distance between the upper side of the piston (x') and the lower side of the upper lid (w') is big, the stopper bumper (20) is located on an annular hanger (60) or is introduced in a cup hanger (22) fastened on the piston rod (5), through a tab (y') or through an elastic ring (61), Fig.52, Fig.55, the bumper (20) height being bigger than the depth of the cup.
The upper lid and the piston should have attack sides of the bumper (w'), (x') horizontal or conical, inclined from the upper side or the lower one, correlated to the desired deformation characteristic for the bumper (20) and the valve position for a better ventilation. For improving the piston sealing (4) the cylinder area is provided with one or several troughs (z') where one or several segments (23) are inserted, Fig. 81, which has a slot (a") cut in a zigzag with right edges for a better sealing. Function of the width and strength considerations, the segment (23) will have one (Fig.12) or several steps (b") (fig.11).
The piston (4) on the piston rod (5) fastening is done axially in the upper area through a tab (c") of the rod (5) and in the lower part with an auto locking collared nut (24) on a flat washer (25) or with an a usual nut (26), a Grower washer (27) and a flat washer (28), Fig.10, applied directly on the inner side (d") of the piston (4) or on a milling (e"), provided on the lower side of the piston (4).
That is the reason why the lower end of the piston rod (5) is provided with a thread (f"). The radial fastening of the piston (4) on the piston rod (5) is achieved through a hole (g") in the central part of the piston assuring its stiffness with the rod. For the reduction of the material consumption there is a cutting/recess (a""") or there are some cavities (h") of a favorable shape inside the piston. When the attaching elements are buried in the piston, a tab (i") in which a lid (29) is fixed is provided to prevent a gas blanket from appearing which should lead to an elastic behavior.
The filling on the rebound stroke is done through one or several inner rebound filling valves (30), placed right on the inner side (v") of the inner cylinder (1), and/or through outer filling valves (31), all placed in the lower part of the inner cylinder (1).
The filling on the compression stroke is done through one or several inner compression filling valves (32) placed right on the inner side of the inner cylinder (1) and/or through the outer filling valve (31), all placed in the upper side of the inner cylinder (1). For improving the filling, one can place along the inner cylinder (1) several outer filling valves (31), these working at rebound when the piston (4) is above them and at compression, when the piston (4) is below them. Irrespective of the filling valve type, the working liquid access is done inside the inner cylinder (1) through holes/slots (j") provided in the inner cylinder (1).
The inner rebound filling valves (30) and the compression filling valves (32) are made up of a curved/cylindrical plate (33), on the inner side of the inner cylinder (1), the plate (33) being fixed with a rivet or screw (34), with profiled head, whose body passes through a boring (k") provided in the wall of the inner cylinder (1) and a boring (l") in the plate (33). For a better attachment and for avoiding the rotation one can use either several rivets or screws with profiled heads (34) placed on the generator of the inner cylinder (1) or in a normal plan on the radial cylinder axis or according to parallel axes, either rivets / screws or hubs which coat the rivet/screw, with a cross section different from the round one (square, rectangular or any other shape). In both cases the number and the shape of borings (k"),(l") will be correlated with the number and shape of the fixing element (34). The plate can have one or two symmetrical arms (m"), (n"), or asymmetrical, whose ends cover the holes (j") provided in the inner cylinder.
The access of the liquid from the reservoir chamber (d) inside the inner cylinder (1) is done due to the negative pressure in the inner cylinder (1) which, due to the power it generates on the arms (m"), (n") of the elastic plate (33) opens the holes (j") in the inner cylinder, allowing the liquid transfer.
The plate (33) can be strengthened with one or several additional identical or different elastic plates (35) provided on the inside, over the plate (33), for achieving the desired elastic characteristic and strength. The plate/plates (33)/(35) are fixed on the inner wall of the inner cylinder (1), either directly through the profiled head (o") of the rivet/rivets or screw/screws with profiled head/s (34) when their placing side (p") on the plate has the width and the shape of the plates, either through the hub for the inner head (36), with the side (q") to the plate profiled in connection to the width and the shape of the plate and with side (r"), to the head (s") of the rivet/screw with planar head (37) correlated or not-hub(42), with their side (flat or conical). When the rivet/screw with planar head (37) is with a buried head, the boring (v") will have the part (a"') toward the head (t"), conically machined correlated to the head shape (t"), of the rivet/screw (37) - Fig.19. It is recommended that the width of the head (o") of the rivet/screw with a profiled head (34) and of the hub (36) should be equal or bigger than the width of the plates the fix. A superior surface of the sides (p")/(r") can assure a tighter tightening at ends. Outer the rivet (34)/(37) is fixed with an outer head (t"). When using a screw, the outer fixing is done with a self-blocking nut (38) or a simple nut (39) and the Grower washer (40). The outer head (t") of the rivet (34)/(37), the nut (38), the Grower washer (40) and the nut (39) can be placed directly on the inner cylinder (1). It is advisable that a milling (u") should be done in the cylinder (1). For a good placing between the outer head (t") of the rivet or nut (38)/Grower washer (40) and nut (39) there is inserted a hub (41) which has the side (w") in contact with the outer head of the rivet /screw (34)/(37) or with the nut (38)/Grower washer (40) and the flat nut (39) and the side (x") in contact with the inner cylinder (1), cylindrical with the diameter correlated to the inner cylinder (1). The borings (y")/(z") provided in the hubs (36)/(41)/(42) for the passing of the rivet/screw body (34)/(37), have their shapes correlated to the shape of the rivet/screw (34)/(37). For a better riveting the boring (k") in the cylinder (1) and the boring (z") in the hub (41) should be conical in the terminal part (a'") from over the rivet head.
The outer filling valves (31) have the same construction as the inner rebound filling valves (30) and the inner compression filling valves (32), the only difference being the fact that for the outer filling valves (31),the plate/plates either curved/cylindrical (33),(35) are placed on the inner cylindrical side (b'") of the lateral body (c'") of the annular cover (43) whose annular tabs (d'") coats one or several holes (j") and are fixed and sealed on the outer side of the inner cylinder (1). The inner sides of the lateral body (c'") and of the annular tabs (d'") form a torrical enclosure (e'") together with the outer surface (g'") of the inner cylinder (1). In the lateral body (c'") of the annular cover (43), to the arm ends (m"), (n") of the curved/cylindrical plate (33), (35) there are holes or slots (f'") to allow the liquid passing from the reservoir chamber (d) in the torrical enclosure (e'"). The fixing of the curved/cylindrical plates (33)/(35) is done through the rivet/screw (34), (37) whose body passes through a boring (h'") provided in the lateral body (c"') of the annular cover (43) and the boring (l") provided in the plate (33), (35). The filling of the inner cylinder (1) with liquid from the reservoir chamber (d) is done through the holes (f"), in the torric enclosure (e"') and from there through the hole/slot (j") in the inner cylinder (1), due to the force exercised by the liquid when the under pressure appears in the inner cylinder (1), which is transmitted through the holes (j") in the torric enclosure (e"') determining the deformation of the lamella arms (m"), (n") to the inside and thus opening the hole (f'") of the outer filling valve (31).
For improving the sealing of the filling valves, the whole area around the valves can be locally coated with a tin layer (44) or another soft material, so that after a short running in, the seal should be perfect.
At the inner filling valves (30), (32) the plates (33), (35) can be placed directly on the cylindrical inner surface (v") of the inner cylinder (1)- Fig.13 - Area T, and for the outer filling valves (31) the plates (33), (35) can be placed directly on the inner cylindrical surface (b'") of the annular cover (43) - Fig.18 - Area T, but in both cases, one should carry out the placement on some prominences (i"') which result from adding or cutting (y"') of material on/from the locating surfaces (v"), (b'") respectively. In this way the contact pressure of the plates on the locating sides increases, improving the seal and the contact area of the plates with the liquid can be increased, over the one of the access holes, favoring the opening and a uniform flow. In the case of placing on prominences (i'"), their profile is curved with the suitable shape or cylindrical. Obtaining the shapes (i"') by adding material (electrolysis, plating, coating etc) is shown for the inner filling valves (30), (32), in Fig.13 -U view and for the outer filling valves in Fig.18 - U view. The shape achieving (i"') for placing the filling valves plates by cutting material (electrolysis, plating, coating) is shown for the inner filling valves (30), (32), in Fig.13 - V view, and for the outer filling valves in Fig. 18- V view. For the outer valve, the fixing of the plates in the case of shape (i"'), achieved by erosion is shown in detail R - Fig.21, and the area of the liquid penetration in the version with a form achieved by adding material, in detail S-Fig.22. The form of the plates curved/cylindrical (33), (35) is shown in detail together with the shape of the placing surfaces of the plates, which is shown with dashed line and hatch. For increasing the arms (m"), (n") flexibility we provided channels (j"') which can be symmetrical or asymmetrical and which form one or several arms (k"') which connect the fixing area (l'") to the sealing area of the plates (m"), (n"). The channels sides (j"') will be filleted (n"') in the joining area for eliminating the breaking prime. By a convenient profiling of the borings (j"') in the plates (33), (35) one or several tongues (o"') are formed starting from under the profiled head (o") of the rivet/screw (34) or from under the hub of the inner head (36). For tongues stiffening (o"'), these can be united at their top or to the inside trough a link element (p"') of a convenient shape. It's advisable that the tongues should be bordered (q'") to slide on the plate. The curvature of the curved/cylindrical plates (33), (35) when free is chosen so that when mounted to sit perfectly on the holes of the oil penetration (j"), (f"'). The tongues (o"') have a smaller curvature than that of the arms (k'") so that, although being shorter they impress on the sealing area (m"'), contributing to a better setting of the plates on holes and to achieving a more suitable elastic characteristic. In Fig.27 there is a shape, which increases the radial flexibility, increasing the axial rigidity and thus improving the setting on the sealing area. When several plates (33), (35) one or both can have tongues (o'") in which case the borings and tongues are correlated, the tongues of both plates impressing above the sealing area (m"') of the plate (35). Fig. 29 shows two superimposed plates, the plate (33) not having tongues and the plate (35) has four tongues. To reduce the number of manufacturing devices one can use identical plates having two tongues (o"') placed on the same part of one of the symmetry axes. Then one of the two plates is used rotated so that the tongues (o"') of the plate (33) go through the slots (j'") of the plate (35).
Fig.30, 31 show two ways of achieving some identical plates (33), (35) but used rotated and Fig. 32 shows a section showing a valve achieved with the two identical plates in working position.
The pressure of opening the valves (30), (31), (32) is regulated by controlling the curvature of their arms (k'"), the thickness of each plate (33), (35), the number of plates, the outer and inner shape (the boring shape) and the sizes and shape of the tongues (o"')
Fig. 48-left section shows a valve with elastic plates, open.
The metering holes (a'), (b') can be achieved directly or gradually, or in steps, depending on the technology used.
If the size and/or the shape of the metering holes (a'), (b') provided in the inner cylinder (1) can't be controlled, in the inner cylinder (1) there are functional holes (r'"). An annular body (45) placed on the inner cylinder (1) cover the functional holes (r"'). The annular body (45) is placed so that the metering hole (s'") provided in it to center over the hole (r"'). The same thing is done when the hole (t''') provided in the inner cylinder (1) has been wrongly processed; over it there is an annular body (45) with the hole (s'"), suitably processed. The hub (45) can contain several holes differently processed and the optimum hole (s'") should be applied over the hole (r'")/(t"').
When the hole (t"') has been positioned by mistake in that position, the annular body (45) does not have a hole or is fixed with the hole rotated as the wrong one - Fig.33.
The surfaces (b"') of the annular cover (43) and the prominences (i"') can have a curved/cylindrical/planar shape and the plates will have the surfaces correlated with these.

Automotive self-adjustable shock absorber with self-correcting damping characteristic, having curved, cylindrical and planar filling valves, according to the second accomplishing example - Fig. 34-39, uses for filling one or more rebound and/or compression filling valves (46) on the inner annular body, located on the inner annular body (47), formed from the symmetric or asymmetric plate (33) and eventually one or more additional symmetric or asymmetric plates (35), the plate (33) being placed on the inner face (u"') on the inner annular body (47) rigidly and tightly placed inside the inner cylinder (1). For this purpose the inner annular body (41) has the outer face (v"') processed in correlation with the inner face of the inner cylinder (1). The plates are fixed through the rivet/screw (34)/(37), passing through the boring (w"'), from the inner annular body (47). The rivet/screw (34)/(37), either has the heads (t") , (s"), buried in the annular body (47), in order not to exceed the inside diameter of the inner cylinder (1), or it also passes through a boring (k") carried out in the inner cylinder (1), they being fixed on its exterior through one of the previous procedures, used at the inner valves (30), (32) or at the outer filling valves (31).
There are some borings (x'") for the penetration of the motive fluid in the inner annular body (47), under the arms (m"), (n"), of the plates (33). The borings (x"') from the inner annular body (47) correspond to the borings (j") from the inner cylinder (1). Fig. 34 represents in the area T, the solution for the location of the plate (33) directly on the inner face (u"') of the inner annular body (47), in the U area there is the solution for the location of the plate (33) on the prominences (i"') applied on the inner face (u"') , of the inner annular body (47), and in the V area there is the solution for the location of the plate (33) on the prominences (i'"), resulted from the cutting of some troughs (y'") in the inner face (u'"), of the inner annular body (47).
The solutions are similar to those from the inner valves (30), (32)- Fig. 13 and outer filling valves (31)-Fig 18. Figs. 34-39 show more achievement solutions, with the fastening of the rivet/screw (34)/(37), with the head (o")/(s"), towards the interior of the inner annular body (41), or towards its exterior, of the inner cylinder (1) respectively. When the location of the rivet/screw head (34)/(37), is done directly on the outer face (v"'), of the inner annular body (47), or outside the inner cylinder (1), depending on the fastening element, at the end of the borings (w"')/(k"), for the passing of the rivet/screw (34)/(37), a planished surface (u"), or a conical boring (a"') are carried out. When the fastening is done through the rivet/screw head (34)/(37), passing through a boring (k"), carried out in the inner cylinder will, the inner annular body (47), can be replaced by one or more arcs of annular body that contain fastening elements and valves.
Through the same procedures, the inner annular body (47), or arcs from it are applied inside the annular cover (43), of the outer filling valve (31).
The surfaces (b"')/(u"'), of the annular cover (43)/of the inner annular body (47) and the prominences (i"') can have a curved/cylindrical/planar shape and the plates will have the surfaces correlated with these.

Automotive self adjustable shock absorber with self-correcting damping characteristic, having curved, cylindrical and planar filling valves, according to the third accomplishing example - Fig.40-42, uses for filling on rebound and/or compression one or more inner filling valves (30)/(32), located on the inner cylinder (1) and/or one or more filling valves on the inner annular body (46), and/or one or more outer filling valves (31), formed by the three arm symmetric or asymmetric plate (48) and eventually one or more three arm additional symmetric or asymmetric plates (49). The plate (48) is located at the inner filling valves (30), (32) on the inner face (v") of the inner cylinder (1) at the outer filling valves (31) on the inner face (b"') of the annular cover (43), at the valves on the inner annular body (46), on the inner face (u"'), of the inner annular body (47).
The additional plates (49), are located over the plates (48), all of them being fixed through the rivet/screw (34), (37), passing through the boring (1"), from the plates (48), (49) and the borings (k") from the inner cylinder (1) at the inner valves (30), (32), through the boring (h"), at the outer filling valves (31) and through the boring (w"'), (k"') eventually, at the valves on the inner annular body (46).
The filling orifices (j"), from the inner cylinder (1), at the inner filling valves (30), (32), the filling orifices (f"') from the annular cover (43) respectively, at the outer filling valves (31), the filling orifices (x"') , on the inner annular body (47) respectively, at the valves on the inner annular body (46), are located on one side and the other of the orifices (k"), for fastening of the plates (48)/(49), symmetrically or asymmetrically - Fig. 40-42. In order to increase the radial flexibility in the arms (m"), (n") of the plates (48), (49), there are some slots (j"'), that form the arms (k"') and if it is necessary some tongues (o"'), that are provided with an inflection/rim (q"') at the end.
The tongues (o"') are profiled in such a way as to be located on the seal area (m"'), of the plate (48), for the one plate solution, and of the last plate (49), for the more plates solution, respectively. The location of the plate (48) can be done directly on the inner curved/cylindrical surface (v")/(b"')/(u"'), of the inner cylinder (1)/annular cover (43) /of the inner annular body (47), at the inner valves (30), (32)/the outer filling valves (31)/the valves on the inner annular body (46), or on the prominences (i"') applied on the inner curved/cylindrical surface of the inner cylinder (1) /of the annular cover (43) /of the inner annular body (47), at the inner valves (30), (32)/ outer filling valves (31) /the valves on the inner annular body (46), or on the prominences (i"') resulted from the cutting of the material (y"'), from the inner curved/cylindrical face (v")/(b"')//(u"'), of the inner cylinder (1) of the annular cover (43)/of
the inner annular body (47), at the inner valves (30), (32)/outer filling valves (31)/the valves on the inner annular body, (46).
The surfaces (b"')/(u'"),of the annular cover (43)/of he inner annular body (47) and the prominences (i"') can have a curved/cylindrical/planar shape and the plates will have the surfaces correlated with these.

Automotive self adjustable shock absorber with self-correcting damping characteristic, having curved, cylindrical and planar filling valves, according to the fourth accomplishing example -Fig.43, uses, for filling on rebound and /or compression one or more inner filling valves (30)/(32) placed on the inner cylinder (1) and/or one or more filling valves on the inner annular body (46) and/or one or more outer filling valves (31), made up of the symmetrical or asymmetrical plate, with two arms (33) and eventually one or more symmetrical or asymmetrical additional plates, with two arms (35), over which a spring plate (50) is placed, having one or two symmetrical or asymmetrical arms, which has a fastening area (1"'), continued with two tongues (o"'), finished with an inflexion/rim (q"'), that setting on the seal area (m"'), of the plates (33), in case of one-plate variant, respectively on the last plate (35), in case of more-plates variant. The rivet/screw (34)/(37), squeezes between the face (p"), the profiled head (o") or the face (q"), of the inner head hub (36) and the inner face (v"), of the inner cylinder (1), for the inner valves (30), (32), respectively the face (b"'), of the annular cover (43) for the outer filling valves (31), respectively the face (u"')/(v"') of the annular body (47)/of the inner cylinder (1), for the valves on the inner hub (46). The valves operate by elasticity of the plates (33), (35), and of the tongues (o"'), of the spring plate (50)-Fig. 43. The setting of the plate (33) can be made directly on the curved/cylindrical inner surface (v")/(b"')/(u'"), of the inner cylinder (1)/of the annular cover (43)/of the inner annular body (47), for the inner valves (30), (32)/outer filling valves (31)/the valves on the inner annular body (46), or on the protuberances (i'") applied on the curved/cylindrical surface (v")/(b'")/ (u"'), of the inner cylinder (1)/annular cover (43)/inner annular body (47), for the inner valves (30), (32)/outer filling valves (31)/the valves on the inner annular body (46), or on the protuberances (i"') resulted by material cutting off (y"'), from the curved/cylindrical inner surface (v")/(b'")/ (u"'), of the inner cylinder (1)/of the annular cover (43)/of the inner annular body (47), for the inner valves (30), (32)/the outer filling valves (31)/the valves on the inner annular body (46).
The surfaces (b"')/(u"'), of the annular cover (43)/of the inner annular body (47) and the prominences (i"') can have a curved/cylindrical/planar shape and the plates will have the surfaces correlated with these.
In the Fig. 48-right section, the open situation is presented.

Automotive self-adjustable shock absorber with self-correcting damping characteristic, having curved, cylindrical and planar filling valves, according to the fifth accomplishing example-Fig. 44-45, uses, for filling on rebound and/or compression one or more inner filling valves (30)/(32) placed on the inner cylinder (1) and/or one or more filling valves on the inner annular body (46) and/or one or more outer filling valves (31), made up of the rigid or semi rigid/elastic plate (51)/(33), which is pushed over the holes of oil passing, by a spring plate (50). The plates (51)/(33), (50) have a guide area (1"), continued with two arms (m"). (n"). In the center of the guide area (1") of the plates (51)/(33), one or more borings (z'"), respectively (a"") in the plate (50), are machined, the ones by which the rivet/screw (53) with profiled head and body, passes. When a sole rivet/screw (53) is used, its body, in the guiding area (c""), as well as the borings (z"'), (a""), have a non-circular form (square, rectangular, oval, star-like), in order to prevent the gyration. When more rivets/screws (53) are used, the guide area (c""), the borings (z"'), respectively (a""), can be circular. The dimensions of the borings (z"') , (a""), are such so that they ensure the sliding of the plates (51)/(33)/(50) on the guiding area (c"'), of the rivet/screw (53). In the end area the rivet/screw (53), has a collar (b""), with which it is fastened in the boring (k"), from the inner cylinder (1), at the inner valves (30), (32), respectively in the boring (h"'), from the annular cover (43), at the outer filling valves (31), respectively in the boring (w"'), from the inner annular body (47), at the valves (46) on the inner annular body. The guiding area (c""), of the rivet/screw (53), is longer than the total value of the thickness of the plates (51)/(33), (50), so that the force of the liquid from the reservoir chamber (d), pressing over the plate (51), is transmitted to the arms of the spring plate (50), which, by elastic deformation allow the removing of the plate (51)/(33), of the inner side (v") of the inner cylinder (1), at the inner valves (30), (32), respectively of inner side (b"'), of the annular cover (43), at the outer filling valves (31), respectively of inner side (u'"), of the inner annular body (47), at the valves on the inner annular body (46). The spring plate arms form (50), and the length of the guiding area (c""), of the rivet /screw (53), are such so that the desired elasticity is reached. For the relief and when one desired the plate (51) to operate in an elastic manner, in the arms (m"), (n"), troughs of desired form are made.
In Fig (49), a valve with rigid plate (51), opened, is represented.
The fastening of the rivet /screw (53), outside, is made by riveting/nut, as for the previous solutions of inner valves (30), (32), outer filling valves (31), or on the inner annular body (40), The setting of the plate (51)/(33) can be made directly on the curved/cylindrical inner surface (v")/(b"')/(u"'), of the inner cylinder (1)/of the annular cover (43)/of the inner annular body (47), at the inner valves (30), (32) /outer filling valves (31)/valves on the inner annular body (46), or on the protuberances (i"') applied on the curved/cylindrical inner surface (v")/(b"')/(u"'), of the inner cylinder (1)/of the annular cover (43)/of the inner annular body (47), at the inner valves (30), (32)/outer filling valves (31)/valves on inner annular body (46), or on the protuberances (i"') resulted by material cutting off (y"') from the curve/cylindrical surface (v")(b")/(u"'), of the inner cylinder (1)/of the annular cover (43)/of the inner annular body (47), at the inner valves (30), (32)/outer filling valves (31)/valves on the inner annular body (46).
The surfaces (b"')/(u"'), of the annular cover (43)/of the inner annular body (47) and the prominences (i"') can have a curved/cylindrical/planar shape and the plates will have the surfaces correlated with these.

Automotive self-adjustable shock absorber with self-correcting damping characteristic, having curved, cylindrical and planar filling valves, according to the sixth accomplishing example-Fig. 46-47, uses, for filling on rebound and/or compression one or more inner filling valves (30)/(32) placed on the inner cylinder (1) and/or one or more filling valves on the inner annular body (46) and/or one or more outer filling valves (31), made up of the rigid/semi rigid/elastic plate (51)/(33), which is pressed over the oil holes, by a press beam (54), operated by a cylindrical spring (55), which leans against the profiled head (o"), of the rivet/screw (56). The press beam (54) is provided with one or more borings (d'"'), in the central area, for sliding in the area (c""), of the rivet/screw (56). The plate (51)/(33) has a guide area (1"), continued with two arms (m"), (n"), In the center of the guiding area (1") of the plate (51)/(33), one or more borings (z'") are made, by which the rivet/screw (56), having profiled head and body, passes. When a sole rivet/screw (56) is used, to prevent rotation, its body, in the guide area, (c""), and the borings (z"'), (d""), preferable to have a non-circular form (square, rectangular, oval, star-like. When more rivets/screws (56) are used, the guide area (c""), the borings (z"'), respectively (d""), can be annular. The numbers of the spiral springs (55), and the length of the guiding area (c""), are correlated with the number of the rivets/screws (56) and the desired elastic characteristic. The dimensions of the borings (z"'), (d""), are such so that they assure the gliding of the plate (51)/(33) and of the press beams (54) on the guiding area (c"") , of the rivet/screw (56). In the end area, the rivet/screw (56), has a collar (b""), with which it is fastened in the boring (k"), from the inner cylinder (1), at the inner valves (30), (32), respectively in the boring (h"'), from the annular cover (43), at the outer filling valves (31), respectively in the boring (w"'), from the inner annular body (47), at the valves on the inner annular body (46). The guiding area (c"") off the rivet/screw (56), is longer than the total value of the thickness of the plate (51)/(33), of the press beam (54) and of the spring coils (55), so that the force with which the liquid in the reservoir chamber (d), is pressing over the plate (51)/(33), is transmitted by the press beam (54) of the spring (55), which, by elastic deformation allows the removing of the plate (51)/(33), of the inner side (v") of the inner cylinder (1), at the inner valves (30), (32), respectively of inner side (b"'), of the annular cover (43), at the outer filling valves (31), respectively of the inner side (u'''), of the inner annular body (47), at the valves on the inner annular body (46). The fastening of the rivet/screw (56), outside, is made by riveting/nut, as for the previous inner valves solutions (30), (32), outer filling valves (31), or on the inner annular body valves (40), The press beam (54) may be absent, in which situation we recommend modeled according to the spring (55), setting area on the plate (51)/(33). For relief and when the plate (51) needs operating in an elastic manner, in the arms (m"), (n"), channels of desired form are made. The location of the plate (51)/(33) can be made directly on the curved/cylindrical inner surface (v")/(b'")/(u"'), of the inner cylinder (1)/of the annular cover (43)/of the inner annular body (47), at the inner valves (30), (32)/the outer valves (31)/the valves on the inner annular body (46), or on the protuberances (i"') applied on the curved/cylindrical inner surfaces (v")/(b"')/(u"'), of the inner cylinder (1)/of the annular cover (43)/of the inner annular body (47), at the inner valves (30), (32)/the outer valves (31)/the valves on the inner annular body (46), or on the protuberances (i'") resulted by material cutting off (y"'), from the curved/cylindrical inner surface (v")/(b'")/ (u'"), of the inner cylinder (1)/of the annular cover (43)/of the inner annular body (47), at the inner filling valves (30), (32)/the outer filling valves (31)/the filling valves on the inner annular body (40). The surfaces (b"')/(u'"), of the annular cover (43)/of the inner annular body (47) and the prominences (i"') can have a curved/cylindrical/planar shape and the plates will have the surfaces correlated with these.

Automotive self-adjustable shock absorber with self-correcting damping characteristic, having curved, cylindrical and planar filling valves, according to the seventh accomplishing example -Fig. 50, 1, 3, has a sliding seal of the piston rod (5), made with a seal member (57), fastened in an aperture (e''''), of the outer upper lead (10). The seal of the outer upper lead (10), is made against the outer cylinder (6), by a gasket ring (58), of O type, introduced in an annular dell (t), made in the outer upper lid (10) and compressed by a closing rim (s), of the outer cylinder (6). The opening (j) of the seal member (57) is provided with lips (x), (y), (z) which separate two chambers (k"""), (1"""). Behind the lower chamber (1""") there is a circular trough (c') where a ring spring (15) is inserted to increase the lips (y), (z) tightening power. The lower lip (z) gauging is made through a dull edge (d'). A second trough (e') where a second ring spring (16) is inserted is provided for high pressures sealing. The trough (c') or the troughs (c'), (e') position and the spring (15), respectively (15), (16) is done function of the version so that one can obtain the desired tension distribution on the seal lips. The specific elements are shown in Fig 3. The gasket (57) resistance is ensured by the inner reinforcement (59). In order to seal improving, some annular protuberances (f"") with appropriate section are provided on the side and on the front surfaces. The aperture (e"") may be applied for the upper or the lower side of the outer upper lid (10), so that the collar (g"") of axial limitation of the joint (57) can be placed upper or lower-Fig. 50. For a better fastening/sealing, the aperture (e"") has some annular troughs (m""") in which the protuberances (f"") are fastened/sealed.

Automotive self-adjustable shock absorber with self-correcting damping characteristic, having curved, cylindrical and planar filling valves, according to the eighths accomplishing example - Fig. 51, 6, 2, has the lower area (w') of the upper inner cylinder head (7), continued with a circular extension (h"") with a smaller diameter than that of the inner cylinder (1), in order to ensure a protected area for the inner compression filling valves (32).
In order to reduce the length of the bumper, on the upper face (x') of the piston (4) a circular recess (i""), is carried out, where the rebound stopper bumper (20) enters totally or partially. The diameter of the recess (i"") is bigger than that of the extension (h""), in order to make possible the compression of the rebound stopper bumper (20).
In this way, the displacement during the rebound is controlled by the limitation of the deformation of the stopper bumper (20), through the limitation of the volume of the enclosure defined by the extension (h""), and the recess (i""). For the reduction of the overall dimensions, at the bottom of the piston (4), there is a recess (a"") , where the self-locking collared nut (24) is buried.
In order to avoid the building up of the gas pocket, a mould lid (29), is pressed in the recess (a"""), preferably up to the bottom of the recess, so that not to move at high pressures. The lower face (f""") of the lid (29) shall be under the level of the inner face (d") of the piston (4). The shock absorber is provided with filling valves applied directly on the inner cylinder (1), one or more compression inner filling valves (32), located at the top of the inner cylinder (1), protected by the circular extension (h"") and by one ore more rebound inner filling valves (30), located at the bottom of the inner cylinder (1).
In order to improve the guiding and taking over the side forces, the central area of the outer upper lid (10) is provided with a circular opening (e) slide adjusted with the rod (5), or an aperture (p'), where an additional guide (8), slide adjusted with the rod (5) is introduced, the guiding being limited axially by a tab (q') and eventually by the safety ring (19), fixed in a trough (r'). The outer upper lid (10), at the top is provided with a central aperture (e""), where a gasket (57), limited axially by the tab (g""), is introduced. For improving the seal, some circular prominences (f"") with convenient section are provided on the side face and on the front faces. For a better fastening/sealing the aperture (e"") has some circular borings (m"") where the prominences (f"") are fixed/sealed.
The fastening of the outer upper lid (10) against the outer cylinder (6), is done radial through the tab (q), rigidly located on the processed area (p), of the outer cylinder (6), and axially through the edge (s), of the outer cylinder (6). The fastening of the outer upper lid (10) against the inner cylinder (1) is done through the tab (f').
A gasket (58), located into the annular dull (t) achieves the outer upper lid (10) sealing against the outer cylinder (6). An enclosure (n'"') collects the oil rabble out by the gasket that is sent back in the reservoir chamber (d), through a boring (k"").
In order to eliminate the gasket (58)-Fig. 51 right, the central aperture (e"") is increased and it receives a lid (52), with the slide gasket (11) of the rod and with an upper extension (u) of the gasket (11) up to the end of the lid (52). The extension (u) is provided with a circular prominence (w), which improves the seal through the deformation. The axial fastening is done through the closing rim (s), of the outer cylinder (6). The gasket (11) has all the elements previously defined and in addition a annular tongue (l""), that is supported on a prominence (m""), of the outer upper lid (10), defining the enclosure (n""), that communicates with the reservoir chamber (d), through the discharge boring (k""), impeding the oil penetration from the reservoir chamber (d), into the enclosure (n""), but making possible the discharge of the rabble out oil into the reservoir chamber (d).
For the weight saving and material economy, some millings (o"") are provided on the side face of the outer upper lid (10). The outer cylinder (6) is closed at the bottom by a bottom outer lid (12) that inside, at the bottom, has a prominence (k), its face (1) being plane, conically or spherically processed for the location-alignment of the inner cylinder (1), whose lower face (m) is processed in correlation with the face (1) of the prominence (k).
For a better setting - sealing, it is useful to coat the lower face (m) of the inner cylinder (1) and/or of the face (1) of the prominence (k), with an easily deformable material (13).

Automotive self-adjustable shock absorber with self-correcting damping characteristic, having curved, cylindrical and planar filling valves, according to the ninth accomplishing example - Fig. 52-53 is shown in the simple and double guiding version, simple, rebound stopper bumper (20), located on the piston (4), or on the annular hanger (60) and outer curved/cylindrical/ filling valves (31), placed in the upper area of the inner cylinder (1) for compression and at the bottom of the inner cylinder (1) for rebound. The annular hanger (60), of the rebound stopper bumper (20), is fixed on the rod (5) through a securing ring (61), located in a trough (p"") carried out in the piston rod (5). For this purpose, the hanger (60) has an annular recess (q"") for the location of the securing ring (61).

Automotive self-adjustable shock absorber with self-correcting damping characteristic, having curved, cylindrical and planar filling valves, according to the tenth accomplishing example - Fig. 54-67, 82 is shown in the simple and double guiding version, rebound stopper bumper (20), with limiting casing (21), setting on the piston (4), or on the cup hanger (22), fixed through the safety ring (61), the outer curved/cylindrical rebound filling valve (31), located at the bottom of the inner cylinder (1) and the upper planar compression filling valve (62). The upper planar compression filling valve (62) is formed by a an annular plate (63), pressed on the lower face (w'), of the upper inner cylinder head (7), or on some prominences (i"'), by a cylindrical or conical spiral spring (64), located on the inner face (r""), of a cup (65), fixed between the upper inner cylinder head (7) and the inner cylinder (1).
The prominences (i'"), surrounding the supply borings (s'"'), form one or more enclosures (t""), connected to one or more circular troughs (t""'), the size of the enclosures (t""), being correlated with the strength of the plates.
On rebound, the annular plate (63) closes the borings (s""), or the enclosure/enclosures (t"") formed by the prominences (i"'). The borings (s"") communicate with the holes/millings (i) carried out in the collar (f) of the inner cylinder head (7). During the compression, the negative pressure under the annular plate (63) creates a force that deforms the spring (64), leading to opening of the upper planar valve (62), making possible the oil supply from the reservoir chamber (d).
The cup (65) is fixed on the inner cylinder (1), either by pressing/binding, favored by some circular, fine mini-troughs (p"""), in the inner cylinder head (7) and the cup (65) - Fig. 82, or by a continuous or discontinuous annular tab (u""), carried out in the inner cylinder (1), located on an annular dell/dull (y""') of the inner cylinder head (7), or by a securing ring (66), introduced into a trough (z""') from the inner cylinder (1).
For a good closing of the planar valve (62), it is recommendable that the cup (65) to be located on an annular tab (v"") of the inner cylinder head (7), positioned above the lower face (w') of the upper inner cylinder head (7). In order to ensure the oil transference from the cup (65) outwards in the skirt (w""), there are some inner troughs (x"") or perforated cuttings/slots (y""), or outer troughs (z""), (a""').
If the shock absorber has no rebound stopper bumper (20) the cuttings can be applied on the whole length of the cup (65). When the rebound stopper bumper (20) is used, in order to avoid the obstructing of the cuttings by it and the deterioration of the stopper bumper caused by the edges, the cuttings (x""), (y"") shall be stopped under the face (b""') of the cup (65), and the cuttings (z"") (a""'), are made outside the cup (65).
A circular trough (c'""), carried out in the face (b""'), outwards, joins the borings (x""'), (y""), (z""), (a""'). For the versions of cuttings (x""), (y""), that do not perforate the face (b'""), the trough (c""') is compulsory.
At the version with the trough (a""') that are not applied on the whole length of the cup (65), the skirt (w"") stays intact in area of location on the inner cylinder head (7), forming a continuous collar (d""') that setting improves.

Automotive self-adjustable shock absorber with self-correcting damping characteristic, having curved, cylindrical and planar filling valves, according to the eleventh accomplishing example - Fig. 71,72,74,75,87, is shown in the simple and double guiding version, rebound stopper bumper on the piston or on an annular hanger (60), fixed on the piston rod (1).
The upper planar valve (62) uses a spring plate (67), with the elastic legs (e"'"), right or curved, bent against the plane of the plate, the elasticity of the legs (e""'), ensuring the running of the valves (62).
At the lower end, the legs (e""') have an inflexion/rim (f""'), in order to slip on the inner face of the cup (65). A fillet (g'"") ensures the elimination of the concentrators in the fastening area of the legs on the disc (h""') of the plate (67). An aperture (i'""), in the disc (h""'), ensures the passing of the rod (5). The cup of the valve (65) has the skirt (w""), provided at the bottom with prominences (j'""), that ensures the fastening into a trough (k""'), carried out in the inner cylinder head (7).
The filling on rebound is achieved through a valve on the cast annular body (68), composed of curved/cylindrical/planar/ plates (33), (35) setting directly on the curved/cylindrical/planar/ inner surfaces of the cast annular body (74), or on the curved/cylindrical/planar prominences (i"') from the inner surfaces of the cast annular body (74), made from easily fusible material or injected from resistant plastic material, inside the inner cylinder (1), or inside the annular cover (43). The cast annular body (74), contains the filling borings (m'""), the borings (w"'), for the passing of the rivet/screw (34)/37), for the valves fastening and outer prominences (l'""), for sealing/fastening. The prominences (i"') form the enclosures (t"").
The plates (33), (35), are fastened through the previous procedures, shown at the valves on the inner annular body (46), or at the outer filling valves (31). The annular body (74) can be continuous or divided into arcs containing the seal and fastening areas, in this situation the fastening being ensured through the outer prominences (l"'"), extended from inside the inner cylinder (1)/annular body (47), through the increased filling orifices (j")/(f").

Automotive self-adjustable shock absorber with self-correcting damping characteristic, having curved, cylindrical and planar filling valves according to the twelfth accomplishing example - Fig. 68, 69, 70, 73, 75, 76 are presented in the simple and double guiding version, rebound stopper bumper on piston or on annular hanger (60), fastened on the piston rod (1). The filling on compression is made by the upper planar valve (62), which uses an annular plate (63), and a disk spring (67) with legs (e""') upward (69). The legs (e""'), press by elasticity over the plate (63), ensuring the operation of the valve (62). At the lower end the legs (e""'), have an inflection/rim (f'""), to glide on the interior side of the plate (63). A fillet (g""') ensures me elimination of the concentrators in the area where the legs are connected to the disk (h""') of the plate (67). A central aperture (i"") ensures the piston rod (5) passing. For higher pressures the plate (67) has the legs downward its disk overleaping on the plate (63).
The filling on rebound is ensured by a lower planar filling valve (70), made up of the valve body (71), on whose upper planar side (n""'), or on some protuberances (i"') the elastic plate (72) is put, fastened on the valve body (71), through a rivet screw (34)/(37) which goes though the canal (o'"") from the plate (72) and through the canal (p""') from the valve body (71). Between the head (s") of the rivet/screw with planar head (37) and the plate (63) and the lower side of the valve body (71) and the lower head (t") of the rivet (34)/(37)/nut (38)/(39) a planar washer (73) is placed. In the lower area, the valve body (71) has an opening (q""'), which is connected to the compressing compartment (c) through some borings (r""') and with the reservoir chamber (d) through some borings/millings (s""'), made in the lower part of the valve body (71).
The protuberances (i"') which surround the borings (r'""), make up one or more enclosures (t""), connected to one or more circular troughs (t""'), the size of the enclosures (t'"') being correlated with the plates resistance.
The fastening of the valve body (71) is made towards the inner cylinder (1) through a collar (u""') and towards the protuberance (k) from the bottom outer lid (12), by an area (v""') with the form correlated with (k).

Automotive self-adjustable shock absorber with self-correcting damping characteristic, having curved, cylindrical and planar filling valves according to the thirteenth accomplishing example - Fig. 77 is shown in the variant with double guide, gliding sealing towards the piston rod (1), with the removable member seal (57) and towards the outer cylinder (6), through the gasket ring O (58), or with outer upper lid (10), containing gliding sealing members of the piston rod and seal towards the outer cylinder (6), rebound stopper bumper in the piston, filling on compression through the inner curved/cylindrical valve (32), placed on the upper side of the inner cylinder (1), protected by the lower extension (h"") of the inner cylinder head (7) and the planar rebound filling valve (70) placed on the lower side of the inner cylinder (1).

Automotive self-adjustable shock absorber with self-correcting damping characteristic, having curved, cylindrical and planar filling valves according to the fourteenth accomplishing example - Fig. 78 is shown in the variant with simple and double guiding version, rebound stopper bumper (20) on the piston (4), filling on compression with outer curved/cylindrical filling valves (31) placed on the upper side of the inner cylinder (1), filling on rebound through the planar filling valve (70), placed on the lower side of the inner cylinder (1).
The upper inner cylinder head (7) has a collar (f) with the diameter smaller than the inner diameter of the outer cylinder (6), so that those two parts, respectively the inner cylinder head (7) and the outer cylinder (6) are not in contact in the collar (f) area, where an annular enclosure (w""') separates them, the collar (f) having only the purpose of attenuating the liquid movement in the reservoir chamber (d). A full or annular collar (x""') on the upper side of the inner cylinder head (7) ensures the alignment of the cylinder (17) towards the upper inner cylinder head (7). Thus the assembly made up of the outer upper lid (10), the cylinder (17) of the balance chamber, the upper inner cylinder head (7), the inner cylinder (1), the valve body (71) are aligned/fastened towards the lower outer cylinder (6), lower through the surface (v""') from the valve body (71), put on the collar (k) from the outer cylinder (6) and upper by the collar (q), and the face (r), of the outer upper lid (10), set on the face (p), respectively on the closing rim (s), of the outer cylinder (6). Thus are ensured a perfect alignment of the elements: piston (4), inner cylinder (1), guide (8) in the upper inner cylinder head (7), additional guide (8), in the outer upper lid (10), removable seal member (57), respectively the gasket (11) applied on the outer lid (52).

Automotive self-adjustable shock absorber with self-correcting damping characteristic, having curved, cylindrical and planar filling valves according to the fifteenth accomplishing example -Fig. 79, is shown in the simple and double-guide version, rebound stopper bumper (20), on the piston (4), filling on compression with the outer curved/cylindrical valve (31), placed on the upper side of the inner cylinder (1), filling on rebound with the inner curved/cylindrical valve (30), placed on the lower side of the inner cylinder (1). The upper inner cylinder head (7), has the collar (f), with a diameter smaller than the inner diameter of the machined area (p) of the outer cylinder (6), so that the two parts, respectively the inner cylinder head (7) and the outer cylinder (6), are not in contact, in the collar (f) area, where an annular enclosure (w"'") separates them, the collar (f) having only the purpose of attenuating the liquid movement in the reservoir chamber (d). A full or annular collar (x'"") on the upper side of the upper inner cylinder head (7) ensures the alignment of the cylinder (17) to the upper inner cylinder head (7).
On the lower side the inner cylinder (1), is closed with the lower inner cylinder head (78) towards which is aligned by the collar (u""'). The lower inner cylinder head (78) set against and is aligned with the surface (v""'), on the inner collar (k), of the bottom outer lid (12), of the outer cylinder (6).
Thus the assembly made up of the outer upper lid (10), the cylinder (17) of the balance chamber, the upper inner cylinder head (7), the inner cylinder (1), the lower inner cylinder head (78), are aligned/fastened to the outer inner cylinder (6), lower through the surface (v""'), from the lower inner cylinder head (78), placed on the collar (k) from the outer cylinder (6) and upper through the collar (g), and the face (r), of the outer upper lid (10), placed on the face (p), respectively the closing rim (s), of the outer cylinder (6). Thus is ensured a perfect alignment of the elements: piston (4), inner cylinder (1), guide (8) in the upper inner cylinder head (7), additional guide (8), in the outer upper lid (10), seal member (11), in the outer lids (10) or (52).

Automotive self-adjustable shock absorber with self-correcting damping characteristic, having curved, cylindrical and planar filling valves according to the sixteenth accomplishing example - Fig. 80, Fig. 4, Fig. 5, Fig. 82, Fig. 83, is shown in the simple and double-guide variant, rebound stopper bumper (20) on the annular hanger (60), filling on compression through the curved/cylindrical outer filling valves (31), placed on the upper side of the inner cylinder (1), filling on rebound through the curved/cylindrical outer filling valves (31), placed on the lower side of the inner cylinder (1).
The inner cylinder (1), is extended on the upper side at the level of the outer upper lid (10), fastening/aligning itself on its collar (f'), taking over even the cylinder (17) function that of forming the balance chamber (h), and for this purpose it contains holes (g), for the liquid flow and also disks (18) provided with the holes (g') of communication.
The disks (18) are fastened outside and/or inside the inner cylinder (1), either in a rigid manner, by pressing or by soldering, or by form. A collar (h') with some holes (i'), or channels/slots (j'), facilitates the cupping. At form fastening, on the inner cylinder (1), are provided some troughs or hollows (k'), where the prominences (l') of the disks (18) are fastened. It is advisable that the protuberances (l') of the disks (18) are inclined in the pre-closing area (m'). For stiffening, in case of more disks (18), these can assembly two or more by connecting links (n') provided with holes (o'). The upper inner cylinder head (7) has the diameter correlated with the inner diameter of the inner cylinder (1), in order to enter pressed in it. The fastening of the upper inner cylinder head (7) in the inner cylinder (1), is made by pressing/binding favored by some fine circular troughs (s"") in the inner cylinder head (7) and the inner cylinder (1), either by one or more annular cupping (u""), continuous or discontinuous, in the inner cylinder (1), put on annular dell/dull (y'"") of the inner cylinder head (7), either by safety rings (66), introduced in hollows (z'"") from the inner cylinder (1).
The piston (4) has a cutting (a'""') on the lower side, where there is the flanged head (b'""'), formed by flanging/molding (at cool) of the lower end of the piston rod (5). The head (b"""), fastens the piston (4), on the piston rod (5), directly, when, in order to facilitate the flanging/molding the boring (g") for piston rod passing (5), is conic in the lower area (c"""), either indirectly, by means of a washer (75), which has in the boring (d"""), for the piston rod passing, the lower part conic (e""") thus facilitating the flanging.
So that an elastic gas layer does not form, the cutting (a"""), is closed with a lid (29), which leans directly on the bottom of the cutting (a'""'), respectively on the washer (75), thus the lower side (f"""), of the lid (29), is under the lower side (d"), of the piston (4).

Automotive self-adjustable shock absorber with self-correcting damping characteristic, having curved, cylindrical and planar filling valves according to the seventeenth accomplishing example - Fig. 81, is shown in the single-guide variant, rebound stopper bumper (20), fastened on the piston rod (1), placed in the piston (4), the filling on compression with inner curved/cylindrical valve (32), placed on the upper side of the inner cylinder (1), filling on rebound with the planar rebound filling valve (70), placed on the lower side of the inner cylinder (1).
In order to ensure a protected area for the inner valves (32), for filling on compression, the inner part (w') of the inner cylinder head (7), is continued with a circular extension (h"") having a diameter smaller than that of the inner cylinder (1).
The inner cylinder (1), is extended on the upper side at the level of the outer upper lid (10), fastening/centering itself on its collar (f'), taking over also the cylinder (17) function of forming the balance chamber (h), and for this purpose, it contains slots (g'), for the liquid passing and also some disks (18) provided with holes (g) for communication. The disks (18) are fastened outside and/or inside the inner cylinder (1), either in a rigid manner, by pressing or by soldering, or by form. A collar (h') with some holes (i'), or channels/slots (j'), facilitates the cupping. At form fastening, on the inner cylinder (1), are provided some troughs or hollows (k'), where the prominences (l') of the disks (18) are fastened. It is advisable that the protuberances (l') of the disks (18) are inclined in the pre-closing area (m'). For stiffening, in case of more disks (18), these can assembly two or more by connecting links (n') provided with holes (o').
The upper inner cylinder head (7) has the diameter correlated with the inner diameter of the inner cylinder (1), in order to enter pressed in it. The fastening of the upper inner cylinder head (7) in the inner cylinder (1), is made by pressing/binding allowed by some fine circular troughs (s"") in the inner cylinder head (7) and the inner cylinder (1), either by one or more annular cupping (u'"'), continuous or discontinuous, in the inner cylinder (1), put on annular dell/dull (y"") of the inner cylinder head (7), either by safety rings (66), introduced in hollows (z""') from the inner cylinder (1).
In order to reduce the shock absorber length, on the upper surface (x') of the piston (4) an annular cupping (i"") is made, and the rebound stopper bumper (20) enters totally or partially in this cutting. The diameter of the cupping (i'"') is bigger that that of the extension (h""), in order to allow the compression of the rebound stopper bumper (20). Thus, the rebound movement is checked by the bumper (20) deformation limited by the volume enclosure defined by the extension (h"") and the cupping (i'"').
The piston (4), has, on the lower side, a cutting (a'""'), for the material economy, closed with a lid (76) on the lower side, a lid which is provided, on the upper side, with an annular collar (g'"'"), assuring the radial alignment against to the cutting (a'""') and the axial fastening/ setting on the lower surface (d"), of the piston (4). The lid (76) is provided with a central aperture (h"""), by which the piston rod will passes being aligned in a radial manner.
The head (b"'"'), formed by heat flanging of the lower end of the piston rod (5) fastens with the collar (c") of the piston rod (5) the assembly piston (4), the lid (76). In order to facilitate the flanging of the head (b"""), the boring (h'""'), is conic on the lower side (i"""). We recommend the indentations (j"""), from the flanged head are horizontal or inclined so that the vapor lock does not appear, for this purpose their level being under the level of the lower surface (d"), of the piston (4).

Automotive self-adjustable shock absorber with self-correcting damping characteristic, having curved, cylindrical and planar filling valves according to the eighteenth accomplishing example -Fig. 82, 83 is shown in the double guide variant, sealing with removable gasket (57), or with seal member (11) applied on the lid (52), rebound stopper bumper (20), with limiting casing (21), on the piston (4), or stopper bumper (20), in the cup hanger (22), fastened on the piston rod (1), by a safety ring (61), filling on compression with the inner curved/cylindrical valve (32), placed on the upper side of the inner cylinder (1), filling on rebound with the inner curved/cylindrical valve (30), placed on the lower side of the inner cylinder (1).
The inner cylinder (1), is extended on the upper side at the level of the outer upper lid (10), fastening/aligning itself on its collar (f), taking over also the cylinder (17) function of forming the balance chamber (h), purpose for which it contains holes (g'), for the liquid passing and also some disks (18) provided with holes (g) for communication. The disks (18) are fastened outside and/or inside the inner cylinder (1), either rigidly by pressing or soldering, or by form. A collar (h') with some holes (i'), or channels/slots (j'), facilitates the cupping. When form fastening, some troughs or hollows (k') are provided on the cylinder (1), in which the protuberances (l') of the disks (18) are fastened in an elastic manner or by pressing. It is preferable that the protuberances (l') of the disks (18) are inclined in the pre-closing area (m'). For stiffening, in case of more disks (18) these can couple two or more by connecting links (n') provided with holes (o').
The upper inner cylinder head (7) has the diameter correlated with the inner diameter of the inner cylinder (1), in order to enter pressed in this. The fastening of the upper inner cylinder head (7) in the inner cylinder (1) is made by pressing/binding. In order to improve the fastening by binding, the surfaces in contact of the inner cylinder (1) and of the upper inner cylinder head (7), are processed for the creation of the rugosity and preferably, by making some circular mini-troughs (p'""'), so that the protuberances of a part gets into the dimples of the other one. - Fig 82. The troughs shape and the steps are chosen so that to facilitate the auto setting and to avoid the wrong troughs overlap.
The piston rod (5) passes through the boring (g") of the piston (4), against to which is fastened in a radial manner. The axial fastening of the piston (4), to the piston rod (5), is made between the collar (c") of the piston rod (5) and the head (b"""), formed by heat flanging of the lower end of the piston rod. (5). In order to facilitate the flanging of the head (b"""), the boring (g"), is conic on the lower side (c"""). We recommend the indentations (j'""'), from the flanged head should be horizontal or inclined so that the gas/vapor lock is not formed, their level being, for this purpose, under the level of the lower surface (d"), of the piston (4).
Lower, the inner cylinder (1) is fastened on the protuberance (k) of the bottom outer lid (12), through a fastening hub (14), towards which it is fastened/aligned on its surfaces (u).

Automotive self-adjustable shock absorber with self-correcting damping characteristic, having curved, cylindrical and planar filling valves according to the nineteenth accomplishing example-Fig. 84 is shown in the single guide variant, seal by removable joint (57), or seal member (11) applied on the outer lid (52), rebound stopper bumper (20) with limiting casing (21), on the piston (4), or stopper bumper (20) in cup hanger (22), fastened on the piston rod
(1), through the safety ring (61), filling on compression with the inner curved/cylindrical valve (32), placed on the upper side of the inner cylinder (1), filling on rebound with the inner curved/cylindrical valve (30), placed on the lower side of the inner cylinder (1) and the piston (4), fastened by flange on the piston rod (5).
The removable seal member (57) is directly fastened in the inner cylinder (1), at the upper end of this, provided with some circular borings (m"""), with need shape, in which the protuberances (f"") get. In order to make a most secure fastening we recommend using a safety ring (3) fastened on the trough (x""").
The fastening/aligning of the inner cylinder (1), against the outer cylinder (6), is made on the upper side through the annular lid (2), with section having "L" shape, the vertical crown (q) ensuring the radial fastening to the inner surface (p), machined/not machined, of the outer cylinder (6), and, the horizontal crown (r), the axial fastening with the closing rim (s), of the outer cylinder (6).
The fastening/alignment of the inner cylinder (1), to the outer cylinder (6), is made on the lower side through the collar (n"""), placed in the bottom outer lid (12), the collar being aligned to the inner surface (p), machined/not machined, of the outer cylinder (6).

Automotive self-adjustable shock absorber with self-correcting damping characteristic, having curved, cylindrical and planar filling valves according to the twentieth accomplishing example-Fig. 85 is shown in the single guide variant, seal by removable joint (57), rebound stopper bumper (20), on the piston (4), or stopper bumper (20), on the annular hanger (60), fastened on the piston rod (1), through the safety ring (61), filling on compression with the upper planar valve formed from the upper inner cylinder head (7), the annular plate (63), the spiral spring (64) and a cup (65), placed on the upper side of the inner cylinder (1), filling on rebound with the inner curved/cylindrical valve (30), placed on the lower side of the inner cylinder (1) and the piston (4), fastened by flanging on the piston rod (5). The upper inner cylinder head (7), and the cup (65), are fastened in the inner cylinder (1), by pressing/binding, purpose in which recommends that contact surfaces be machined with fine mini-troughs (p""").
For the access of oil in the inner cylinder (1), borings (o'""'), in correspondence with the borings (s'"'), from the upper inner cylinder head (7), are provided.
The removable gasket (57), is fastened directly in the inner cylinder (1), on the upper end of it, provided with circular borings (m"""), having the desired shape, in which the protuberances (f"') fasten. For a strong fastening a safety ring (3), introduced in a circular trough (x""") is provided.
The fastening/centring of the inner cylinder (1), against to the outer cylinder (6), is made in the upper area, axially with the rim (s) and radial with the longitudinal indentation (q"""), or with the annular collar (r"""), which have the inner surfaces (s""") processed in order to rigid with the inner cylinder (1), and in the lower part by the collar (n"""), placed in the bottom outer lid (12).
The longitudinal indentation (q""") can be extended downward for the stiffening and improvement of the cooling, when their inner surfaces (s""") are partially processed on the entire surface for fastening with the inner cylinder (1).
The assembling of the bottom outer lid (12) is made by the outer (t""") and inner (u""") solder cordons, and /or by solder in tabs (v""").

Automotive self-adjustable shock absorber with self-correcting damping characteristic, having curved, cylindrical and planar filling valves according to the twenty-first accomplishing example -Fig. 86, show variant of the valve on the inner annular body (46), placed inside the inner cylinder (1), with planar surfaces (u"'), respectively prominences (i"'), for plates (33), (35) setting. The solutions are identical with those valid for the variant with curved/cylindrical setting surfaces, the areas T, U, V showing the plates setting surfaces:
- in the T view: directly on the inner planar surfaces (u"'), of the inner annular body (47), placed inside the inner cylinder (1);
- in the U view: on the inner planar prominences (i"'), of the annular body (47), remained prominent by erosion of the neighbor surfaces, the annular body (47) placed inside the inner cylinder (1);
- in the V view: on the inner planar prominences (i"'), of the annular body (47), resulted by addition of material, , the annular body (47) placed inside the inner cylinder (1);
The surfaces (u"') and prominences (i"') can have a curved/cylindrical/planar shape and the plates will have the surfaces correlated with these.

Automotive self-adjustable shock absorber with self-correcting damping characteristic, having curved, cylindrical and planar filling valves according to the twenty-second accomplishing example -Fig. 87, show the valve on cast/injected annular body variant (68), placed inside the inner cylinder (1), or inside the annular cover (43), with the planar surfaces (u'''), respectively prominences (i"'), for plates (33), (35) setting. The solutions are similar to those from the variant with curved/cylindrical setting surfaces, the areas T, U, V showing the plates setting surfaces:
- in the T view: directly on the inner planar surfaces (u'"), of the cast inner annular body (74), placed inside the inner cylinder (1);
- in the U view: on the inner planar prominences (i"'), of the cast inner annular body (74), remained prominent by erosion of the neighbor surfaces, the annular body (74) placed inside the inner cylinder (1);
- in the V view: on the inner planar prominences (i'"), of the cast annular body (74), resulted by addition of material, the annular body (74) placed inside the inner cylinder (1);
The existence of the fastening collars (1""") allows the using also as annular segments valves The surfaces (u'") and prominences (i'") can have a curved/cylindrical/planar shape and the plates will have the surfaces correlated with these.

Automotive self-adjustable shock absorber with self-correcting damping characteristic, having curved, cylindrical and planar filling valves according to the twenty-third accomplishing example -Fig. 88, show variant of the valve on the inner annular body (46) arcs, placed inside the inner cylinder (1), or inside the annular cover (43), with the planar surfaces (u"'), respectively prominences (i"'), for plates (33), (35) setting. The solutions are identical with previous variants with planar/curved/cylindrical setting surfaces, the differences being that every valve is placed on an arch of inner annular body, every arc fastened on the inner cylinder (1), or on the inner annular body (47). The areas T, U, V show the plates setting surfaces:
- in the T view: directly on the inner planar surfaces (u'"), of the inner annular body (47) arc, placed inside the inner cylinder (1);
- in the U view: on the inner planar prominences (i'"), of the annular body (47) arc, remained prominent by erosion of the neighbor surfaces, the annular body arc (47) placed inside the inner cylinder (1);
- in the V view: on the inner planar prominences (i"'), of the annular body (47) arc, resulted by addition of material, , the annular body (47) placed inside the inner cylinder (1);
The surfaces (u'") and prominences (i"') can have a curved/cylindrical/planar shape and the plates will have the surfaces correlated with these.

Automotive self-adjustable shock absorber with self-correcting damping characteristic, having curved, cylindrical and planar filling valves according to the twenty-fourth accomplishing example -Fig. 89, shows the solution of curved filling valve, with rigid/semi rigid/elastic plates, with outer plate spring. It is made up of a rigid/semi rigid/elastic plate (51)/(33), placed inside the inner cylinder (1), or of the inner annular body (47), or of the annular cover (43), or of the injected/cast annular body (74), directly, or on protuberances (i"'), covering or not the holes (j") for oil penetration. The plate rigid/semi rigid (51), or elastic (33), are fastened on the rivet/ screw (53) through the hole (z"'), both having a rectangular or oval section so that the rotation is not allowed. The rivet/ screw (53) glides in the boring (y"""), of inner cylinder (1)/annular cover (43)/annular body (47)/ cast/injected annular body (74), controlled by the spring plate (77), fastened at its end by riveting or nut. In order to allow the liquid access, the spring arms have borings/slots (j"').
The surfaces (u"') and prominences (i"') can have a curved/cylindrical/planar shape and the plates will have the surfaces correlated with these.

## Claims

1. Automotive self-adjustable shock absorber with self-correcting damping characteristic, having curved, cylindrical and planar filling valves comprising:
an inner cylinder (1) forming a working chamber (a), the inner cylinder (1) being provided along the length thereof with a plurality of rebound damping metering
holes/slots (a') and compression damping metering holes/slots (b'). a piston (4) slidably mounted within the working chamber (a) and separating the working
chamber (a) into a rebound compartment (b) and a compression compartment (c), the volumes of which vary in accordance with the piston (4) position, in the working chamber (a);
a piston rod (5) connected to the piston (4) and extended for the end of the working chamber (a) adjacent to the rebound chamber (b) moves piston (4) inside the working chamber (a);
an outer cylinder (6) disposed around the inner cylinder (1), the outer cylinder (6) forming a reservoir chamber (d), between the inner cylinder (1) and the outer cylinder (6).
an inner cylinder head (7), of the inner cylinder (1) closing the end of the working chamber (a) adjacent the rebound compartment (b), the inner cylinder head (7) being provided with an annular piston rod guide (8) or a central aperture (e), being sized to slidably engage around the piston rod (5) and with a collar (f) rigid with the inner wall of the outer cylinder (6);
an outer upper lid (10) provided with a seal member (11), having a central aperture (j), sized to slidably engage around the piston rod (5);
a labyrinth system (9) with passages (g) for working liquid passing, sustained by the upper part of the inner cylinder head (7), and upper limited with an outer upper lid (10),
the compartment between the inner cylinder head (7), of the inner cylinder (1), the outer upper lid (10), piston rod (5) and outer cylinder (6) forming a balance chamber (h);
a fluid fills the working chamber (a) and at least partially fills the balance chamber (h);
some slots or holes (i) in the collar (f) of the inner cylinder head (7) ensure the oil passing between the balance chamber (h) and the reservoir chamber (d);
a plurality of rebound filling valves (30), at the lower end of the inner cylinder (1);
a plurality of compression filling valves (32), at the upper end of the inner cylinder (1);
a plurality of rebound and compression filling valves (31), are provided on the inner cylinder (1) between the rebound filling valves (30) and the compression filling valves (32);
**characterized in that**:
inside, the bottom outer lid 12 has a prominence (k) with a face (1) which is flat, tapered or spherically processed, for the location-alignment of the inner cylinder (1), through a fastening hub (14) of metallic, plastic, elastic or elastic-plastic, easy deformable material, for improving the seal-centering, the fastening hub (14) covering inside and/or outside the lower extremity of the inner cylinder (1), the fastening hub (14) having the inner faces (n) for the location of the inner cylinder (1) and the face (o) for its location on the prominence (k), with forms correlated to the forms of the mating members, its lower face (m) being processed in correlation with the face (1) of the prominence (k);
the outer surface (q) of the outer upper lid (10) and the inner upper area (p) of the outer cylinder (6), are preferably machined, in order to achieve the alignment of the assembly formed by the inner cylinder (1), the upper inner cylinder head (7), the balance chamber cylinder (17), the outer upper lid (10), with the face (1) from the prominence (k) from the lower side of the bottom outer lid (12).
the outer upper lid 10 has the annular edge (q) rigid with the outer cylinder (6) in the upper processed area (p) being axially fixed through the face (r) with a rimed edge (s) of the upper end of the outer cylinder (6), the closing flanging (s) being allowed by the dull (t) machined in the outer upper lid (10);
the slidably seal member (11) of the piston rod (5) has two extensions, the upper one (u) and the lower one (v) that covers the outer upper lid (10) being fixed on it;
the seal of the outer upper lid (10) is done relative to the outer cylinder (6) through the upper extension (u) of the slidably seal member (11) of the piston rod (5), which towards its extremity has preferably an annular prominence (w) with a convenient section, which is deformed at the molding (s) of the outer cylinder, so providing the contact pressure necessary for the seal at the top pressure;
the opening (j) of the seal member (11) is provided with three lips (x), (y), (z), that confines an upper chamber (k""") and a lower one (l"""), behind the lower chamber (1""") there is an annular trough (c') which a ring spring 15 is introduced in order to increase the tightening force of the lips (y), (z), the calibration of the lower lip (z) being carried out through a dull surface (d'), a second annular trough (e'), which a second ring spring (16) is introduced, is provided for the seal at high pressures;
at the bottom of the outer upper lid (10) a centering collar (f') positioning the system of labyrinths (9) radial;
the system of labyrinths (9) is formed by a cylinder (17) with orifices (g) for the liquid passing and from some disks (18) provided with the communication orifices (g), the disks (18) being fixed on the exterior and/or on the interior of the cylinder (17), the fastening can be a rigid one, by pressing or by weld, or by form, at the fastening by pressing the disks have an edge (h'), provided with some orifices (i') or trough (j'), in order to improve the cupping, and for fastening by form, on the cylinder (17) there are some troughs or hollows (k') where the prominences (1') are fastened elastically or by moulding/pressing, preferably inclined in the pre-terminal area (m'), and in the case of several disks (18), two or more can be coupled by connecting links (n') provided with orifices (o');
the upper inner cylinder head (7) is provided in the aperture (p') for introducing of the guide with a tab (q') and an annular trough (r') where a safety ring (19) is introduced, the tab (q') can be placed either at the upper extremity, or at the lower extremity of the upper inner cylinder head (7);
it is provided with a rebound stopper bumper (20) with planar or profiled upper (s') and lower (t') faces, the section of the stopper bumper having a shape correlated with the desired elastic characteristic, the stopper bumper being placed on the piston (4), around the piston rod (5) or on a annular hanger (60), or it is introduced into a cup hanger (22), fixed on the piston rod (5) by a tab (y'), or by a safety ring (61) the height of the stopper bumper (20) being bigger than the depth of the cup, the stopper bumper (20) placed on the piston being provided with a rigid (metallic) limiting casing (21) less higher than the stopper bumper (20) so that the stopper bumper (20) can get out on both sides of the limiting casing (21), the maintaining of the relative position of the limiting casing (21), towards the stopper bumper (20), is made either by sticking the stopper bumper (20) on the limiting casing (21), or by a trough (u') or by many orifices (v') carried out in the limiting casing (21) where the material of the stopper (20) enters, or the stopper bumper and the limiting casing are mono-body cast;
the upper inner cylinder head (7) and the piston (4) will have the contact faces of the stopper bumper (w'). (x') horizontal or conical, inclined upwards or downwards , correlated with the elastic characteristic and the ventilation;
in the cylindrical area the piston (4) is provided with one or more annular troughs (z') where one or more segments (23) are introduced, with the slot (a") cut like a zigzag with right edges, having one or more steps (b");
the fastening of the piston (4) on the piston rod (5) is done axially in the upper area, through a tab (c") of the piston rod (5), and in the lower area with an auto locking collar nut (24) on a flat washer (25) or with the common nut (26) a Grower washer (27) and a flat washer (28) applied directly on the lower face (d") of the piston (4) or on a milling (e"), carried out in the lower face of the piston (4), the nuts being fixed on a thread (f") at the lower end of the piston rod (5), the radial fastening of the piston (4) on the piston rod (5), being achieved through an aperture (g") carried out in the central area of the piston;
there is a cutting (a""") inside the piston, or some cavities (h") of a convenient shape, closed by a lid (29), sustained on the bottom cavity, or inside a tab (i");
the inner rebound (30) and compression (32) filling valves are formed by a curved/cylindrical plate (33), placed on the inner face (v"), of the inner cylinder (1) or on some prominences (i'"), as a result of material addition or cutting (y'") on/from the setting surfaces (v"), the plate (33), being fixed, by a rivet or by screw with profiled head (34), its body passing through a boring (k") carried out in the wall of the inner cylinder (1) and an aperture (l") carried out in the plate (33), in order to avoid rotation we can use either more rivets or more screws with profiled heads (34) placed on the generator of the inner cylinder (1), or in a normal plane on the radial axis of the cylinder or after parallel axes, either rivets/screws or hub that cover the rivet/screw, with a section different from the round one (square, rectangular or some other shape), the number and the shape of the borings (k"), (l") being correlated with the number and the shape of the fastening element with profiled head (34);
the plate (33) has one or two symmetrical or asymmetrical arms (m"), (n"), their extremities covering the orifices (j") carried out in the inner cylinder (1);
the plate (33) can be reinforced with one or more elastic identical or different additional plates (35), located inside, over the plate (33), the plate/s (33)/(35) being fixed on the inner wall of the inner cylinder (1), either directly through the profiled head (o") of the rivet/rivets with profiled head (34), or of the screw/screws with profiled head (34), when their setting surface (p"), on the plate has the width and the shape of the plates, either trough the hub for inner head (36), with the face (q"), towards the plate shaped in correlation with the width and the shape of the plate and the face (r"), towards the head (s") of the rivet/screw with planar head (37) correlated or not-hub (42) with their face (flat, conical) for the rivet/screw with planar buried head (37), the boring (y") having the side (a'"), towards the head (t"), conically shaped, correlated with the shape of the head (t"), of the rivet/screw with buried head (37);
outside the rivet/the screw (34)/(37) are fixed with an exterior head (t"), with a self-locking nut respectively (38), or a common nut (39) and the Grower washer (40), the exterior head (t"), of the rivet/screw (34)/(37), the nut (38), the Grower washer (40), and the nut (39), being placed directly on the inner cylinder (1), but preferably on a planished surface (u"), in the cylinder (1), or on a hub (41) that has the face (w") in contact with the exterior rivet/screw head (34)/(37), or with the nut (38), the Grower washer (40), and the planar nut (39), and the cylindrical face (x"), in contact with the inner cylinder (1), with the diameter correlated with that of the of the inner cylinder (1), the borings (y")/(z"), carried out in the hubs (36)/(41)/(42), for the passing of the rivet/screw body (34)/(37), having the shape in correlation with the shape of the rivet/screw (34)/(37), and the boring (k") from the cylinder (1), and the boring (z") from the hub (41), being conical in the end area (a'") towards the head of the rivet;
the outer filling valves (31), with the construction similar to the inner rebound filling valves (30) and compression filling valves (32), with the difference that at the outer ones (31), the curved/cylindrical plate/plates (33), (35) are placed on the cylindrical inner face (b'"), or on some prominences (i"'), resulted from material addition or cutting (y"') on/from the setting surfaces (b'"), on the side body (c'") of an annular cover (43), its annular tabs (d'"), covering one or more orifices (j") and being fixed and sealed on the exterior of the inner cylinder (1), the inner faces of the side body (c'") and of the annular tabs (d"') of the annular cover (43) forming together with the exterior surface (g'") of the inner cylinder (1), an torrical enclosure (e'"), in the side body (c'") of the annular cover (43), towards the extremities of the arms (m"), (n") of the curved/cylindrical plate (33), (35), some orifices or slots (f"') are carried out, the fixation of the curved/cylindrical plate (33), (35), being done by the rivet/screw (34), (37), its body passes through a boring (h''') carried out in the side body (c'") of the annular cover (43) and the boring (l") carried out in the plates (33), (35);
the curved/cylindrical plates (33), (35) have, in their arms (m"), (n"), slots (i'"), filleted (n'"), at endings, the channels can be symmetrical or asymmetrical and they form one or more arms (k'") that link the fixation area (l'"), with the sealing area of the plates (m'"), and one or more tongues (o'"), preferably starting under the profiled head (o"), of the rivet/screw (34), or under the hub of the inner head (36), for reinforcing the tongues (o'"), can be united at the top , or inside through a linking element (p'") of a convenient shape, the tongues (o'") are inflected/rimed (q'"), at ends, in order to slip on the plate, the tongues of the plates (33), (35), being correlated, in order to run over the sealing area (m"'), the plates (33), (35), can be identical but in a rotated position;
a tin layer (44), or another mouldable material is applied on the whole surface plates valves setting;
the metering holes/slots (a'), (b'), can be achieved directly or in steps, according to the used technology;
in the inner cylinder (1), on the technological holes (r'"), or on the mistaken metering holes (t'"), there is located one of the metering holes (s'"), carried out in the annular body (45), correcting the adjustment and when the obstructing of the technological orifices (r'"), or of the mistaken metering orifices (t'") is desired, the metering orifices (s'") are located displaced in comparison to the orifices (r'")/ (t'"), or (s'") orifices are missed;
the surfaces (b'") of the annular cover (43) and prominences (i'") carried out in/on the inner cylinder (1), respectively in/on the annular cover (43), are convenient curb/cylindrical/planar shapes, correlated with the plates (33) shapes.

2. Automotive self-adjustable shock absorber with self-correcting damping characteristic, having curved, cylindrical and planar filling valves, according to the claim 1, **characterized in that**:
for filling it uses one or more rebound and/or compression filling valves (46), on the inner annular body formed by the symmetric or asymmetric curved/cylindrical/planar plate (33) setting directly on the inner curved/cylindrical/planar face (u'"), of the annular body (47) or on the curved/cylindrical/planar prominences (i'") applied on the inner surface (u"'), or on curved/cylindrical/planar prominences (i'"), resulting from the cutting of some troughs (y"') in the inner surface (u'"), of the annular body (47) and one or more curved/cylindrical/planar, additional symmetrical or asymmetrical plates (35), located on the plate (33);
the annular body (47) is rigidly and tightly inside the inner cylinder (1), or inside the annular cover (43), the inner annular body (47) having the outer face (v'") machined in correlation with the inner face of the inner cylinder (1), or (b"') of the annular cover (43);
the fastening of the plates (33), (35) is done through the rivet/screw (34)/(37), passing through the aperture (l"), from the plates (33), (35) and the boring (w'"), from the inner annular body (47);
the rivet/screw (34)/(37), either has the endings (t"), (s"), buried in the annular body (47) in order to avoid the exceeding of the inner diameter of the inner cylinder (1), or of the annular cover (43), or it passes through a boring (k"), carried out in the inner cylinder (1), (h") respectively, carried out in the annular cover (43), being fixed on their exterior using one of the previous procedures, used for the inner valves (30), (32), or at the outer valves (31;
for the fluid access in the inner annular body (47), under the arms (m"), (n"), of the plates (33), some borings (x'"), are carried out, corresponding to the borings (j") from the inner cylinder (1), (f'") respectively, in the annular cover (43);
when the screw/rivet (34)/(37) head setting, is done directly on the outer face (v'"), of the inner annular body (47), or on the exterior of the inner cylinder (1), or on the annular cover (43), depending on the fastening element, at the ending of the borings (w''')/(k'')/(h''), for rivet/screw (34)/(37) passing, a planished surface (u"), or a conical boring (a'") is machined;
when the rivet/screw (34)/(37), passes through the inner cylinder (1), or the annular cover (43), the inner annular body (47) can be replaced by one or more arcs of annular body containing fastening elements and valves;
the surfaces (b'")/(u'"), of the annular cover (43)/of the inner annular body (47) and the prominences (i'") can have a curved/cylindrical/planar shape and the plates will have the surfaces correlated with these.

3. Automotive self-adjustable shock absorber with self-correcting damping characteristic, having curved, cylindrical and planar filling valves, according to the claim 1 or 2, **characterized in that**:
for the filling at rebound and/or compression it uses one or more inner filling valves (30)/(32) located on the inner cylinder (1), and /or one or more filling valves (46) on the inner annular body and/or one or more outer filling valves (31), formed by the symmetric or asymmetric,
three arm plate (48) and eventually one or more additional symmetric or asymmetric, three arm plates (49) located overlap the plate (48);
the plate (48) is located at the inner valves (30), (32) on the inner face (v") of the inner cylinder (1), at the outer valves (31) on the inner face (b"') of the annular cover (43), respectively at the valves on the inner annular body (46), on the inner face (u'"), of the annular body (47) or on the prominences (i"'), as a result of material addition or cutting;
the plates (48), (49), are fixed by the rivet/screw (34), (37), that passes through the aperture (l"), from the plates (48), (49), and the borings (k") from the inner cylinder (1), to the inner valves (30), (32), through the aperture (h'"), to the outer valves (31) and through the boring (w'''), eventually (k"), at the valves on the inner annular body (46);
the filling holes (j"), from the inner cylinder (1), at the inner filling valves (30), (32), respectively the filling holes (f") from the annular cover (43), at the outer filling valves (31), respectively the filling holes (x'''), on the inner annular body (47), at the valves on the inner annular body (46), are placed symmetrically or asymmetrically relative the fastening holes (k") of the plates (48)/(49);
in the arms (m"), (n") of the plates (48), (49), some slots (j"'), form the arms (k''') and if necessary, some tongues (o"'), that are provided with an inflection/rim (q"') at the ending, the tongues (o"'), being profiled in such a way as to be located on the sealing area (m'''), of the plate (48), for the one plate solution, and the last plate (49), for the several plates solution, respectively.
the surfaces (b"')/(u"'), of the annular cover (43)/of the inner annular body (47) and the prominences (i"') can have a curved/cylindrical/planar shape and the plates will have the surfaces correlated with these.

4. Automotive self-adjustable shock absorber with self-correcting damping characteristic, having curved, cylindrical and planar filling valves, according to one of the claims 1 to 3, **characterized in that**:
for the filling at rebound and/or compression it uses one or more inner filling valves (30)/(32) located on the inner cylinder (1), and/or one or more filling valves (46) on the inner annular body and/or one or more outer filling valves (31), formed by the symmetric or asymmetric, two arm plates (33) and eventually one or more additional symmetric or asymmetric, two arm plates (35) on which there is a spring plate (50), with one or two symmetric or asymmetric arms, that have a fastening area (l"'), that is continued with two tongues (o'''), finished by an inflection/rim (q"'), that setting over the sealing area (m"'), of the plates (33), for the one plate version and on the last plate (35), respectively, for the several plates version;
the rivet/the screw (34)/(37), passes through the apertures (l") of the plates (33), (35), the borings (k") from the inner cylinder (1), at the inner valves (30), (32), through the boring (h"') at the outer valves (31), and through the boring (w"') at the valves on the inner annular body (46) and it is tightened between the face (p") of the profiled head (o"), or the face (q") of the hub (36) for the inner head, and the inner face (v"), of the inner cylinder (1), at the inner valves (30), (32), respectively the face (b"') of the annular cover (43), at the outer valves (31), respectively the face (u'")/(v"), of the inner annular body (47)/of the inner cylinder (1), at the valves (46) on the inner annular body;
the plate (33) setting can be done directly on the inner curved/cylindrical surface (v")/(b'")/(u"'), of the inner cylinder (1)/of the annular cover (43)/of the inner annular body (47), at the inner valves (30), (32)/the outer valves (31)/the valves on the inner annular body (46), or on the prominences (i'") applied on the inner surface, or as a result of material cutting (y"'), from the inner curved/cylindrical surface (v")/(b'")/(u'"), of the inner cylinder (1)/ of the annular cover (43)/of the inner annular body (47) at the inner valves (30), (32)/the outer valves (31)/the valves on the inner annular body (46);
the surfaces (b"')/(u"'), of the annular cover (43)/of the inner annular body (47) and the prominences (i"') can have a curved/cylindrical/planar shape and the plates will have the surfaces correlated with these.

5. Automotive self-adjustable shock absorber with self-correcting damping characteristic, having curved, cylindrical and planar filling valves, according to one of the claims 1 to 4,
**characterized in that:**
for the filling at rebound and/or compression it uses one or more inner filling valves (30)/(32) located on the inner cylinder (1), and/or one or more filling valves on the inner annular body (46) and/or one or more outer filling valves (31), formed by the rigid or semi rigid/elastic plate (51)/(33), that is pressed on the holes for the oil penetration, by a spring plate (50);
the plates (51)/(33), (50) have a guiding area (1"), continued by two arms (m"), (n"), in the centre of the guiding area (1") one or more borings (z"') in the plates (51)/(33), respectively (a"') in the plate (50), are carried out, through which the rivet/the screw (53) with head and profiled body passes;
when a single rivet/screw (53), is used, its body in the guiding area (c""), and the borings (z"'), (a""), have a non-circular shape (square, rectangular, oval, star-shaped) in order to impede the rotation, when more rivets/screws (53) are used, the guiding area (c""), the borings (z"'), (a""), respectively, can be circular;
the dimensions of the borings (z"'), (a""), are so, as to ensure the sliding of the plates (51)/(33), (50) on the guiding area (c""), of the rivet/screw (53), and the guiding area (c""), of the rivet/screw (53), is longer than the sum of the plates (51)/(33), (50) thickness;
in the ending area the rivet/screw (53), has a tab (b""), with which it is fixed in the boring (k"), from the inner cylinder (1), at the inner valves (30), (32), in the boring (h"') respectively, from the annular cover (43), at the outer valves (31), in the boring (w"') respectively, from the inner annular boy (47), at the valves on the inner annular body;
for the relief and when one desired the plate (51) to operate in an elastic manner, in the arms (m"), (n"), troughs of desired form are made;
the fastening of the rivet/screw (53) outside, is done through riveting/nut in the same way as the previous solutions on the inner valves (30), (32), outer valves (31), or valves on the inner annular body (46);
the location of the plate (51)/(33) can be done directly on the inner curved/cylindrical surface (v")/(b"')/(u"'), of the inner cylinder (1)/of the annular cover (43)/of the inner annular body (47), at the inner valves (30), (32)/the outer valves (31)/the valves on the inner annular body (46), or on the applied prominences (i"') or on the prominences (i"') as a result of material (y"') cutting, from the inner curved/cylindrical surface (v")/(b"')/(u"'), of the inner cylinder (1)/of the annular cover (43)/of the inner annular body (47) at the inner valves (30), (32)/the outer valves (31)/the valves on the inner annular body (46):
the surfaces (b"')/(u"'), of the annular cover (43)/of the inner annular body (47) and the prominences (i"') can have a curved/cylindrical/planar shape and the plates will have the surfaces correlated with these.

6. Automotive self-adjustable shock absorber with self-correcting damping characteristic, having curved, cylindrical and planar filling valves, according to one of the claims 1 to 5, **characterized in that:**
for the filling at rebound and/or compression it uses one or more inner filling valves (30)/(32) located on the inner cylinder (1), and /or one or more filling valves on the inner annular body (46) and/or one or more outer filling valves (31), formed by the rigid or semi rigid plate (51)/elastic plate (33), that is pressed on the holes for the oil penetration, by a press beam (54), acted by a spiral spring (55), that is supported by the profiled head (o"), of the rivet/screw (56), the press beam (54), being provided with one or more borings (d"") in the central area, for sliding on the area (c"") of the rivet/screw (56);
the plate (51)/(33), has a guiding area (1"), continued by two arms (m"), (n"), in the center of the guiding area (1"), of the plate (51)/(33), being carried out one or more borings (z"'), through which the rivet/screw (56) with profiled head and body passes,
when a single rivet/screw (56) is used, its body in the guiding area (c""), and the borings (z"'), (d""), have a non-circular shape (square, rectangular, oval, star-shaped) in order to impede the rotation, when more rivets/screws (56) are used, the guiding area (c""), the borings (z"'), (d""), respectively, can be circular;
the number of the spiral springs (55), and the length of the guiding area (c""), are correlated to the number of rivets/screws (56) and the desired elastic characteristic, the shape and the dimensions of the borings (z"'), (d""), being so, as to ensure the sliding of the plate (51)/(33) and of the press beam (54) on the guiding area (c""), of the rivet/screw (56);
in the ending area the rivet/screw (56), has a tab (b""), with which it is fixed in the boring (k"), from the inner cylinder (1), at the inner valves (30), (32), in the boring (h"') respectively, from the annular cover (43), at the outer valves (31), in the boring (w"') respectively, from the inner annular body (47), at the valves on the inner annular body (46);
the guiding area (c""), of the rivet/screw (56), is longer than the sum of the thickness of the plate (51)/(33), of the press beam (54) and of the coils of the spring (55);
the fastening of the rivet/screw (56), outside, is done through riveting /nut in the same way as the previous solutions on the inner valves (30), (32), outer valves (31), or valves on the inner annular body (46);
the press beam (54) can miss, and in this case it is recommendable that the setting surface of the spring (55), on the plate (51)/(33), to be shaped accordingly;
in order to be easier and when it is desired that the plate (51) run elastically, some slots (j"') of a desired shape are carried out in the arms (m") (n");
the location of the plate (51)/(33), can be done directly on the inner curved/cylindrical surface (v")/(b"')/(u"'), of the inner cylinder (1)/ of the annular cover (43)/of the inner annular body (47) at the inner valves (30),(32)/the outer valves (31)/the valves on the inner annular body (46), or on the prominences (i"') applied on the inner surface, or on the prominences (i"') as a result of material (y"') cutting, from the curved/cylindrical surface (v") /(b'")/(u"'), of the inner cylinder (1)/of the annular cover (43)/of the inner annular body (47) at the inner valves (30), (32)/the outer valves (31)/the valves on the inner annular body (46);
the surfaces (b'")/(u'"), of the annular cover (43)/of the inner annular body (47) and the prominence (i"') can have a curved/cylindrical/planar shape and the plates will have the surfaces correlated with these.

7. Automotive self-adjustable shock absorber with self-correcting damping characteristic, having curved, cylindrical and planar filling valves, according to one of the claims 1 to 6, **characterized in that**:
it has the slide seal of the piston rod (5), achieved by a gasket (57), fixed in an aperture (e""), of the outer upper lid quid, the seal of the outer upper lid (10), being done relative to the outer cylinder (6), through a ring gasket (58), O type, introduced into a circular dull (t), carried out in the outer upper lid (10) compressed through the closing flange (s), of the outer cylinder (6);
the opening (i) of the seal member (57) is provided with three lips (x), (y), (z) confining two chambers (k"""), (l"""), behind the lower chamber (l""") there is a circular trough (c') where a ring spring (15) is introduced and a second circular trough (e') where the second ring spring is introduced (16), the calibration of the lower lip (z), being done through a dull edge (d);
the strength of the gasket (57) is ensured by an inner reinforcement (59); there are some circular prominences (f"") of convenient section on the side face and the front faces;
the aperture (e"") can be applied at the upper or lower part of the outer upper lid (10), so the confine collar (g"") of the gasket (57) may be placed upper or lower part;
the aperture (e"") has some circular troughs (m""") where the prominence (f"") are fixed/sealed.

8. Automotive self-adjustable shock absorber with self-correcting damping characteristic, having curved, cylindrical and planar filling valves, according to one of the claims 1 to 7, **characterized in that**:
the lower part (w') of the upper inner cylinder head (7) is continued by a circular extension (h"") with a lower diameter in comparison with that of the inner cylinder (1);
a circular recess (i""), in which the rebound stopper bumper (20), enters totally or partly, is carried out in the upper face (x') of the piston (4), the diameter of the cupping (i"") being bigger than that of the extension (h"");

9. Automotive self-adjustable shock absorber with self-correcting damping characteristic, having curved, cylindrical and planar filling valves, according to one of the claims 1 to 8, **characterized in that**:
the outer upper lid (10) is provided in the central area with a circular opening (e) slidably adjusted with the piston rod (5), or a recess (p'), where an additional guide (8), is introduced slideably adjusted with the piston rod (5), the guide being limited axially by a tab (q') and by the safety ring (19) eventually, fixed in a trough (r');
in the top area of the outer upper lid (10), there is a central aperture (e""), that has some circular troughs (m"""), in the aperture (e""), there is introduced a gasket (57), provided with some circular, with convenient section prominences (f"") that are fixed/sealed in the troughs (m""), the recess being axially limited by the tab (g"");
the fastening of the upper outer upper lid (10) against the outer cylinder (6), is radially done through the tab (q), rigidly placed on the machined area (p), of the outer cylinder (6) and axially through the edge (s), of the outer cylinder (6);
the fastening of the upper outer upper lid (10) against the inner cylinder (1), is done through the tab (f');
the sealing of the upper outer upper lid (10), at the outer lid (6), is achieved by a circular gasket (58), placed in the circular dull (t);
an enclosure (j""), collects the oil rabbled out by the gasket, that is sent back in the reservoir chamber (d), through a boring (k"").
some millings (o"") are provided on the side face of the outer upper lid (10) for weight reducing and material economy

10. Automotive self-adjustable shock absorber with self-correcting damping characteristic, having curved, cylindrical and planar filling valves, according to one of the claims 1 to 9, **characterized in that**:
the central aperture (e""), of the outer upper lid (10), is increased and receives a lid (52), with the slide gasket (11) of the piston rod and with an upper extension (u) of the gasket up to the end of the outer upper lid (10), the extension (u) being provided with a circular prominence (w);
the fastening of the outer upper lid (10) against the inner cylinder (1), is done through the flange (s), of the outer cylinder (6);
the gasket has all the previous defined elements and in addition it has a circular tongue (l""), that is supported on a prominence (m""), of the outer upper lid (10), defining the enclosure (n""), that communicates with the reservoir chamber (d), through the exhaust hole (k""), impeding the penetration of the oil from the reservoir chamber (d) in the enclosure (n""), but making possible the discharge of the rabbled oil in the reservoir chamber (d);
some millings (o"") are provided on the side face of the outer upper lid (10) for weight reducing and material economy.

11. Automotive self-adjustable shock absorber with self-correcting damping characteristic, having curved, cylindrical and planar filling valves, according to one of the claims 1 to 10, **characterized in that**:
the outer cylinder (6) is closed in the lower area by a bottom outer lid (12), that inside, in the lower area, has a prominence (k) with the face (l) planar, conically or spherically processed for the location-alignment of the inner cylinder (1), whose lower face (m) is processed in correlation with the face (l) of the prominence (k), lower face (m) of the inner cylinder (1),
and/or of the face (l) of the prominence (k), are coated with an easily deformable material (13).

12. Automotive self-adjustable shock absorber with self-correcting damping characteristic, having curved, cylindrical and planar filling valves, according to one of the claims 1 to 11, **characterized in that**:
it has an upper compression planar filling valve (62), formed by an annular plate (63), pressed on the lower face (w'), of the inner cylinder head (7), or on some prominences (i"'), by a spiral, cylindrical or conical spring (64), placed on the inner face (r""), of a cup (65), fixed between the upper inner cylinder head (7) and the inner cylinder (1);
the prominences (i"'), surround the supply boring (s""), making one ore more enclosures (t""), connected between them by one or more circular troughs (t""');
the borings (s"") start from the lower face (w') of the inner cylinder head (7), and they communicate with the holes/milling (i) carried out in the collar (f) of the inner cylinder head (7);
the cup (65) is fixed on the inner cylinder (1), either by pressing/binding, improved with some circular mini-troughs (p"""), applied on the faces of the fixed parts, or by a circular continuous or discontinuous tab (u""), carried out in the inner cylinder (1), located on an annular dell/dull (y""') of the inner cylinder head (7), or by a safety ring (66), introduced into a trough (z""') from the inner cylinder (1), or by prominences (j""'), fastening in a trough (k""'), made in the inner cylinder head (7), or with one or more combinations of these;
it is recommendable that the cup (65) setting on an annular tab (v"") of the inner cylinder head (7), placed above the lower face (w') of the upper inner cylinder head (7);
in the skirt area (w"") of the cup (65) there are either inner troughs (x"") or some perforated cuttings/slots (y""), that perforate the annular area or some outer troughs (z""), (a""'), the cuttings being done on the whole height of the cup (65), or they are shorter;
a circular trough (c""'), carried out in the face (b""'), outwards, connects the troughs/slots (x""), (y""), (z""), (a""');
at the versions of cutting (x""), (y""), that do not perforate the face (b""'), the trough (c""') is compulsory;
at the versions with the troughs (a""') that are not applied on the whole length of the cup (65), the skirt area (w"") stays intact in the setting area on the inner cylinder head (7), forming a continuous collar (d""');

13. Automotive self-adjustable shock absorber with self-correcting damping characteristic, having curved, cylindrical and planar filling valves, according to one of the claims 1 to 12, **characterized in that**:
the upper planar valve (62), uses a spring plate (67), with elastic legs (e""'), right or curved, bent against the plan of the plate, at the lower end the legs (e""'), have an inflection/rim (f""'), a fillet (g""'), ensuring the elimination of the concentrators in the are of the legs fixing on the disk (h""'), of the plate (67), and a central aperture (i""''), in the disk (h""'), ensures the passing of the piston rod (5);
a disk plate (63), setting on the spring plate (67), increases the pressure resistance;
when the disk plate (63) uses, the spring plate (67) inverted (69) increases the valve sensibility.

14. Automotive self-adjustable shock absorber with self-correcting damping characteristic, having curved, cylindrical and planar filling valves, according to one of the claims 1 to 13, **characterized in that**:
it uses one or more filling valves (68) on the cast annular body, composed of the annular body (74), that is cast from easily fusible materials or injected from resistant plastic material, inside the inner cylinder (1), or inside the annular cover(43), the annular body (74) containing the filling boring (m"'), the aperture (w"') for the rivet/screw passing, and some outer prominences (l""');
the curved/cylindrical/planar plates (33), (35), set directly on the inner curved/cylindrical/planar surfaces (u"'), of the cast annular body (74), or on curved/cylindrical/planar prominences (i"'), made on the inner surfaces of the cast annular body (74);
the curved/cylindrical/planar plates of the valves (33), (35), are fixed using the previous procedures, shown at the valves on the inner annular body (46), or at the outer valves (31);
the annular body can be continuous or divided into arcs of annular body that include the filling areas, seal-fastening and outer prominences (l""'), extended from inside the inner cylinder (1)/annular body (43), through the increased filling orifices (j")/(f").

15. Automotive self-adjustable shock absorber with self-correcting damping characteristic, having curved, cylindrical and planar filling valves, according to one of the claims 1 to 14, **characterized in that**:
for the filling at rebound it uses one lower planar filling valve (70), formed by the valve body (71), on its upper planar face (n""'), or on some prominences (i'"), the elastic plate (72) setting, fixed on the valve body (71), by a rivet/screw (34)/(37), passing through the aperture (o""'), from the plate (72), and through the aperture (p""'), from the valve body (71);
between the head (s"), of the rivet/screw with planar head (37), and the plate (63) and the lower part of the valve body (71) and the lower head (t") of the rivet (34)/(37)/of the nut (38)/(39), there is a planar washer (73);
in the lower area, the valve body (71) has an opening (q""') that communicates with the compression compartment (c) through some borings (r""') and with the reservoir chamber (d) through some borings/millings (s""'), carried out in the lower part of the valve body (71);
the prominences (i"'), surrounding the supply borings (r""'), form one or more enclosures (t""), connected to one or more circular troughs (t""'), the size of the enclosures (t""), being correlated with the strength of plates;
the fastening of the valve body (71) is done against the inner cylinder (1) through a tab (u'"") and against the prominence (k) on the bottom outer lid (12), through an area (v""') with shapes correlated with (k).

16. Automotive self-adjustable shock absorber with self-correcting damping characteristic, having curved, cylindrical and planar filling valves, according to one of the claims 1 to 14, **characterized in that**:
the upper inner cylinder head (7), has the collar (f), with a smaller diameter than the inside diameter of the outer cylinder (6), so that there is no contact between the two parts, the inner cylinder head (7) and the outer cylinder (6) respectively, an annular enclosure (w""') existing between them, the collar (f), having only the part to attenuate the motion of the liquid in the reservoir chamber (d);
a full or annular tab (x'""), on the upper face of the upper inner cylinder head (7), ensures the cylinder (17) alignment, relative to the upper inner cylinder head (7);

17. Automotive self-adjustable shock absorber with self-correcting damping characteristic, having curved, cylindrical and planar filling valves, according to one of the claims 1 to 16, **characterized in that**:
at the bottom the inner cylinder (1) is closed by the lower inner cylinder head (78), being aligned against it through the tab (u""'), the lower inner cylinder head (78), being supported and aligned with the surface (v""'), on the inner tab (k), of the bottom outer lid (12) of the outer cylinder (6).

18. Automotive self-adjustable shock absorber with self-correcting damping characteristic, having curved, cylindrical and planar filling valves, according to one of the claims 1 to 17, **characterized in that**:
the inner cylinder (1), is lengthened at the top above the inner cylinder head (7), at the level of the upper outer upper lid (10), being fixed/centered in its tab (f'), taking over the function of the cylinder (17), too, that is the formation of the balance chamber (h), for this purpose it contains the orifices (g), for the circulation of the liquid and some disks (18), provided with the communication orifices (g');
the disks (18) are fixed inside and/or outside the cylinder (1), either rigidly by pressing or welding, or by shape, for the press fastening it is recommendable that the disk to be provided with a collar (h') with some orifices (i'), or channels/slots (j'), in order to favor the cupping, for the fastening by shape on the cylinder (1) there are provided some troughs or hollows (k'),
where the prominences (l') preferably inclined in the pre-ultimate area (m'), are fixed elastically or by molding, if there are several disks (18) two or more of them can be coupled through connecting links (n') provided with orifices (o') for oil passing;
the inner cylinder head (7), has its diameter correlated with the inner diameter of the inner cylinder (1), in order to enter by pressing, the fastening of the inner cylinder head (7) in the inner cylinder (1), is done either by pressing/binding favored by some fine circular troughs (s"") in the inner cylinder head (7) and the inner cylinder (1), or by one or more circular continuous or discontinuous tabs (u""), carried out in the inner cylinder (1), located on an annular dell/dull (y""') of the inner cylinder head (7), or by the safety rings (66), introduced in the troughs (z""') from the inner cylinder (1);
when the upper inner cylinder head (7), plays also the role of the valves body (70), containing the borings (s""), the inner cylinder (1) will have orifices (o""'), corresponding to the borings (s"").

19. Automotive self-adjustable shock absorber with self-correcting damping characteristic, having curved, cylindrical and planar filling valves, according to one of the claims 1 to 18, **characterized in that**:
the piston (4), has central aperture (g"), for the piston rod (5) passing, the aperture being conical in the lower area (c"""), an area where the head (b"""), formed by the flanging/molding of the lower extremity of the piston rod (5), fixes the piston;
it is recommendable that the indentations (j"""), on the mould head be horizontal or inclined to avoid the building up of the gas pocket, for this purpose, their level being under the level of the lower face (d"), of the piston (4).

20. Automotive self-adjustable shock absorber with self-correcting damping characteristic, having curved, cylindrical and planar filling valves, according to one of the claims 1 to 19, **characterized in that**:
the piston (4), at the bottom has a cutting (a"""), where there is the flanged head (b"""), formed by the flanging/molding of the lower extremity of the piston rod (5), the head (b"""), fixing the piston (4), on the piston rod (5), either directly when for favor the molding, the aperture (g"),for the piston rod (5) passing, is conical at the bottom (c"""),or indirectly through a washer (75), that has the conical area (e""") in the aperture (d"""), for passing the piston rod, in order to favor the cupping;
the cutting (a"""), is closed by a lid (29), setting on the bottom of the cutting (a"""), on the washer (75) respectively, so that the lower face (f"""), of the lid (29), be under the lower face (d") of the piston (4).

21. Automotive self-adjustable shock absorber with self-correcting damping characteristic, having curved, cylindrical and planar filling valves, according to one of the claims 1 to 20, **characterized in that**:
the piston (4), at the bottom has a cutting (a"""), closed at the bottom by a lid (76), provided at the top with an annular tab (g"""), ensuring the radial alignment against the cutting (a""") and the axial fastening through support on the lower face (d") of the piston (4);
the lid (76), is provided with a central opening (h"""), through which the piston rod (5) passes, against which it is radial aligned;
the flange head (b"""), formed by the flanging of the lower extremity of the piston rod (5), fixes the assembly piston (4) - lid (76), between the tab (c") of the rod (5), to favor the flanging of the head (b""") the boring (h"""), is conical at the bottom (i""");
it is recommendable that the indentations (j""") on the cupping head be horizontal or inclined to avoid the building up of the gas pocket, for this purpose, their level being under the level of the lower face (d""), of the piston (4).

22. Automotive self-adjustable shock absorber with self correcting damping characteristic, having curved, cylindrical and planar filling valves, according to one of the claims 1 to 21, **characterized in that**:
the removable gasket (52), is fixed directly in the inner cylinder (1), at its upper extremity, that is provided with some circular troughs (m"""), with the desired section, where the circular prominences (f"") enter. For a more secure fastening it is recommendable to use a safety ring (3), fixed in the trough x""").
the fastening/alignment of the inner cylinder (1), relative to the outer cylinder (6), is done at the upper area through the annular lid (2), with "L"-shaped section, the vertical crown (q) ensuring the radial fastening relative to the inner processed/unprocessed surface (p) of the outer cylinder (6), and the horizontal crown (r) ensuring the axial fastening relative to the edge of closing (s), of the outer cylinder (6).

23. Automotive self-adjustable shock absorber with self-correcting damping characteristic, having curved, cylindrical and planar filling valves, according to one of the claims 1 to 22, **characterized in that**:
the fastening/alignment of the inner cylinder (1), relative to the outer cylinder (6), is done at the bottom through the annular tab (n"""), carried out in the bottom outer lid (12), annular tab (n""") aligned relative to the inner processed/or not processed surface (p), of the outer cylinder (6).

24. Automotive self-adjustable shock absorber with self-correcting damping characteristic, having curved, cylindrical and planar filling valves, according to one of the claims 1 to 23, **characterized in that**:
the fastening/alignment of the inner cylinder (1), relative to the outer cylinder (6), is done at the upper area, axially through the edge (s) and radial through the longitudinal indentations (q"""), or the annular tab (r"""), that have the inner faces (s""') processed in order to adjust rigidly with the inner cylinder (1);
the longitudinal indentations (q'""'), can be prolonged downwards for reinforcing and improvement of the cooling when their inner faces (s""") are partially processed or on the whole surface, for reinforcing.

25. Automotive self-adjustable shock absorber with self correcting damping characteristic, having curved, cylindrical and planar filling valves, according to one of the claims 1 to 24, **characterized in that**:
it uses a curved filling valve, with rigid/semi rigid/elastic plates, with outer spring plate, composed of a curved/cylindrical/planar, rigid/semi rigid/elastic plate (51)/(33), placed inside the inner cylinder (1), or inside the inner annular body (47), or annular cover (43), or the injected/cast cover (74), directly or on the prominences (i"'), obstructing the orifices for the oil penetration (j"), (f'");
the plate (51)/(33), is fixed on the rivet/screw 53 through the orifice (z"'), both of them having rectangular or oval or other section, in order to avoid the rotation;
the rivet/screw (53) slides in the boring (y"""), from inner cylinder (1),/annular cover (43)/annular body (47)/cast/injected annular body (74), controlled by the spring plate (77),
fixed at its extremity by riveting or nut;
in order to permit the access of the liquid, the arms of the spring have borings/slots (j"').

## Patentansprüche

1. Selbstregelnder Stossdämpfer für Fahrzeuge, mit selbstkorrigierender Dissipationscharakteristik mit gekrümmten, zylindrischen und ebenen Füllventilen beinhaltend:
einen inneres Rohr (1) bildend einen Arbeitsraum (a) das innere Rohr ist auf seiner Länge mit mehrere kalibrierten Bohrungen/Schlitze zur Regelung beim Ausfedern (a') und kalibrierten Bohrungen/Schlitze zur Regelung beim Einfedern (b') ausgestattet;
einen gleitend innerhalb des Arbeitsraumes (a) montierten Kolben (4) welcher den Arbeitsraum in einem Ausfedernbereich (b) und einem Einfedernbereich (c), deren Volumen in Abhängigkeit von der Position des Kolbens (4) in dem Arbeitsraum (a) variieren, trennt;
eine Kolbenstange (5), befestigt an dem Kolben (4) und ausgedehnt vom Ende des Arbeitsraumes (a), dem Ausfedernbereich (b) anliegend, welche den Kolben (4) im Inneren des Arbeitsraums (a) bewegt;
ein äußeres Rohr (6) ausgerichtet ringsum dem inneren Rohr (1), das äußere Rohr (6) bildend eine Behälterkammer (d) zwischen dem inneren Rohr (1) und dem äußeren Rohr (6);
einen inneren oberen Deckel (7) des inneren Rohrs (1), schließend das Ende des Arbeitsraumes (a), an dem Ausfedernbereich (b) anliegend; der innere obere Deckel (7) wird mit einer ringförmigen Kolbenstangenführung (8) oder mit einer mittigen Öffnung (e) ausgestattet, welche für Gleitsitz mit der Kolbenstange (5), und mit einem starren Bund (f) solidarisch mit der Innenwand des äußeren Rohrs (6), dimensioniert wird.
ein äußerer obere Deckel (10), welcher mit einem Dichtring (11), mit einer mittigen für Gleitsitz mit der Kolbenstange (5) dimensionierten Öffnung, ausgestattet wird;
ein Labyrinthsystem (9) mit Bohrungen (g) für die Arbeitsflüssigkeit, gestützt auf der oberen Extremität des inneren oberen Deckel des inneren Rohrs (7) und oben begrentzt von dem äuβeren oberen Deckel (10), indem der Raum zwischen dem inneren oberen Deckel (7) des des inneren Rohrs (1), dem äußeren oberen Deckels (10), der Kolbenstange (5) und dem äußeren Rohr (6) einen Ausgleichraum (h) bildet;
eine Flüssigkeit füllt den Arbeitsraum (a) und wenigstens teilweise den Ausgleichraum (h);
einige Einfräsungen oder Öffnungen (i) in dem Bund (f) des inneren oberen Deckel des inneren Rohrs (7) für de Gewährleistung des Ölflusses zwischen dem Ausgleichraum (h) und der Behälterkammer (d);
eine Pluralität von Ausfedernfüllventile (30) wird an das untere Ende des inneren Rohrs (1) angebracht;
eine Pluralität vom Einfedernfüllventile (32) wird an das obere Ende des inneren Rohrs (1) angebracht;
eine Pluralität von äußeren Füllventile (31) wird auf dem inneren Rohr (1), zwischen dem Ausfüllventile (30) und dem Einfüllventile (32), vorgesehen;
**gekennzeichnet durch:**
innerhalb des unteren äußeren Deckel (12), gibt es einer Vorsprung (k) dessen bearbeitete Frontalfläche (1) eben, kegelförmig oder sphärisch bearbeitet wird, für das Einbringen-Zentrierung des inneren Rohrs (1), **durch** eine Befestigungsnabe (14) aus verformbarem, elastischem oder elasto-plastischem Leichtmetall oder Kunststoff; für die Verbesserung der Festigkeit-Einbringen bekleidet die Befestigungsnabe (14), im Innen und/oder Außen, die untere Extremität des inneren Rohrs (1); die Nabe (14) hat die innere Frontalflächen (n) für die Anlage des inneren Rohrs (1) und die Fläche (0) für die Anlage auf dem Vorsprung (k), mit Formen in Zusammenhang mit den Formen der Gelenkteilen, dessen bearbeitete untere Fläche (m) in Zusammenhang mit der Fläche (1) des Vorsprungs (k) steht;
die Fläche (q) des äußeren Deckels (10) und die innere Fläche (p) des äußeren Rohrs (6) werden vorzugsweise bearbeitet, um die Ausrichtung der Montage **durch** den inneren Rohr (1), den ineren oberen Deckel des inneren Rohrs (7), den Rohr des Ausgleichsraumes (17), den äußeren Deckel (10), mit der Fläche (1) von dem Vorsprung (k) auf der Unterseite der unteren äußeren Deckel (12) zu gewährleisten;
der äußere obere Deckel (10) hat eine starre Ringkante (q) mit den äußeren Rohr (6) in dem verarbeiteten oberen Bereich (p), axial **durch** die Fläche (r) von einer Schließbördelung (s) der oberen Ende des äußeren Rohrs (6) festgelegt, indem die Schließbördelung (s) **durch** eine Fase (t) in der äußereb oberen Deckel (10) geübt wird;
der Dichtring (11) der Kolbenstange (5) hat zwei Erweiterungen, eine obere Erweiterung (u) und eine untere Erweiterung (v), die den äußeren oberen Deckel (10) abdecken und auf dieser befestigt werden;
das Siegel des äußeren oberen Deckel (10) wird gegenüber dem äußeren Rohr (6) **durch** die obere Erweiterung (u) des Dichtrings 11 der Kolbenstange (5) hergestellt, der vorzugsweise zur Extremität einen runden Vorsprung (w) mit einem bequemen Abschnitt hat, der **durch** die Abspannung (s) des äußeren Rohrs, für die Bereitstellung der notwendigen Anpressdruck für die Dichtung, bei höheren Drücken, verformt wird;
die Öffnung (j) des Dichtrings (11) wird mit drei Randabschlüsse (x), (y), (z) ausgerüstet, die einen oberen Raum k""" und einen unteren Raum (1""") begrenzen; hinten des unteren Raums (1"'") befindet sich eine ringförmige Rinne (c'), in der einen Federring (15) für die Erhöhung der Spannkraft der Randabschlüsse (y), (z) eingefügt wird; die Einstellung des unteren Randabschlusses (z) wird **durch** eine Fase (d') getan, indem für die Hochdruckabdichtung eine ringförmige Rinne (e') für die Einführung eines zweiten Federerings (16), vorgesehen wird;
am unteren Rand des äußeren oberen Deckel (10) befindet sich ein ringförmiger Zentrierbund (f'), die das Labyrinthsystem (9) radial festlegt;
das Labyrinthsystem (9) besteht aus einem Rohr 17 mit Öffnungen (g) für den Durchfluss der Flüssigkeit und mit einigen Scheiben (18), die mit Kommunikationsscheiben (g) vorgesehen werden; die Scheiben (18) werden auf der Außen- oder auf der Innenseite des Rohrs (17) festgestellt, entweder starr, **durch** Pressen oder Schweißen, oder **durch** Form, indem bei der Druckeinstellung die Scheiben eine Kante (h') mit einigen Öffnungen (i') oder Wane (j') für die Förderung des Schröpfens haben; bei der Befestigung **durch** Form werden auf dem Rohr 17 einige Mulden oder Vertiefungen (k') vorgesehen, in den elastisch oder durch Schröpfen die Vorsprünge (1'), vorzugsweise in dem Pre-terminalen Bereich (m') geneigt, hergestellt werden; im Falle von mehreren Scheiben (18) können diese auf zwei oder auf mehreren Verbindungsglieder (n)' mit Öffnungen (o') befestigt werden.
der obere innere Deckel des inneren Rohrs (7) wird in der Öffnung (p'), für die Einführung des Leitfadens, mit einem Bund (q') und mit einer ringförmigen Rinne (r'), in dem einen Sicherungsring (19) eingeführt wird, ausgerüstet; der Bund (q') kann entweder auf der oberen oder auf der unteren Extremität des oberen inneren Deckels des inneren Rohrs (7) montiert werden;
es ist mit einem Ausfederung Anschlagpuffer (20) ausgestattet, mit ebenen oder profilierten oberen Flächen (s') und unteren Flächen (t'), indem die Form des Abschnittes des Puffers mit der gewünschten elastischen Eigenschaft korreliert wird; der Puffer wird auf dem Kolben (4), rundum der Kolbenstange (5), oder auf einem Träger (60) eingestellt, oder wird es in einer Aufhängertasse (22), auf der Kolbenstange (5), **durch** einen Bund (y'), oder **durch** einen Sicherungsring (61), eingefügt; die Hohe des Puffers (20) ist größer als die Tiefe der Tasse;
auf dem Kolben wird der Puffer (20) mit einer Begrenzungsgehäuse (21) ausgerüstet, die ein wenig höher als die Höhe des Puffers (20) ist, so dass der Puffer (20) auf den beiden Seiten der Gehäuse (21) durchbricht; die Beibehaltung der relativen Position der Gehäuse (21) gegenüber dem Püffer (20) wird **durch** die Festhaltung des Puffers (20) auf der Gehäuse (21) oder **durch** eine Rinne (u') oder **durch** mehrere Öffnungen (v') in der Gehäuse (21) für die Einführung des Materials des Puffers (20) hergestellt; Entweder der Puffer oder die Gehäuse wird in einem Mono-Körper abgegossen;
der obere innere Deckel des inneren Rohrs (7) und der Kolben (4) haben horizontale oder
kegelförmige Pufferanschlagflächen(w'), (x'), die nach oben oder nach unten geschrägt werden, gemäss der elastischen Eigenschaft und gemäss der Entluftung;
der Kolben (4) wird in dem Rohrbereich mit einem oder mit mehreren Kolbenringkanale (z') ausgerüstet, in den ein oder mehreren Kolbenringe (23), mit nach einem Zick-Zack mit geraden Kanten geschnittenem Kolbenringeinstich (a"), mit mehreren Stufen (b"), hergestellt werden;
Die Befestigung des Kolbens (4) auf der Kolbenstange (5) wird axial in dem oberen Bereich,
**durch** einen Bund (c") auf der Kolbenstange (5) und in dem unteren Bereich mit einer selbstsichernden Mutter (24) mit Bunden und mit einer Selbsblockierung auf einer Unterlegscheibe (25), oder mit einer üblichen Schraubenmutter (26), mit einer Grower Scheibe (27) und mit einer Unterlegscheibe (28), die unmittelbar auf der unteren Fläche (d") des Kolbens (4) oder auf einem Fräsen (e") in der unteren Fläche des Kolbens (4) besfestigt werden, hergestellt; die Schraubmuttern werden auf einem Einschraubgewinde (f") am unteren Ende der Kolbenstange (5) befestigt, indem die radiale Befestigung des Kolbens (4) auf der Kolbenstange (5) **durch** eine Bohrung (g") in dem mittingen Bereich des Kolbens hergestellt wird;
im innen des Kolbens wird ein Schneiden (a"""), oder einige Aussparrungen (h") in einer bequemen Form vorgesehen, die mit einem Deckel (29) am Boden des Schneidens oder in einem Bund (i") verschlossen werden;
die innere Ausfedernfüllventile (30) und Einfedernfüllventile (32) sind **durch** eine gebogenen/runden Ventilscheibe (33), auf der inneren Fläch (v") des inneren Rohrs (1) befestigt, oder auf einigen Abdrücken (i'"), als Folge des Materialhinzufügens oder - Aussparrung (y'") auf/von den inneren Flächen (v"); die Ventilscheibe (33) wird **durch** einen Niet oder Schraube mit einem profillierten Kopf (34) befestigt, dessen Körper **durch** einen Kanal (k") in dem Wand des inneren Rohrs (1) und **durch** einen Einstich (1") in der Ventilscheibe (33) befestigt wird; für die Verhinderung der Drehung kann man entweder mehrere Nieten oder Schrauben mit einem profillierten Kopf (34), die auf dem Generator des inneren Rohrs (1), oder in einem üblichen Plan, auf der radialen Achse des Rohrs, oder nach parallelen Achsen, eingestellt werden, oder Niete/Schrauben oder Büchse, die die Niete/Schraube decken, mit einen nicht runden Abschnitt (quadratisch, rechteckig oder eine andere Form), benutzen; die Zahl und die Form der Kanäle/Einstiche (K"), (1") werden mit der Zahl und der Form des Befestigungselementes mit proffiliertem Kopf (34) korreliert;
die Ventilscheibe (33) hat einen oder zwei symmetrische oder asymmetrische Lamellenarme (m"), (n"), deren Extremitäten die Öffnungen (j") in dem inneren Rohr (1) decken;
die Ventilscheibe (33) kann mit einer oder mit mehreren elastischen zusätzlichen Ventilscheiben (35) verstärkt werden, die identisch oder verschieden sein können, und die im Innenseite, über die Ventilscheibe (33) eingestellt werden; die Pfanne/die Pfannen (33)/(35) wird/werden auf dem Innenwand des inneren Rohrs (1), entweder unmittelbar **durch** den proffilierten Kopf (o") der Niete/Nieten mit profilliertem Kopf (34), oder der Schraube/Schrauben mit proffiliertem Kopf (34), wenn ihre innere Fläche (p") auf der Ventilscheibe die Breite und die Form der Ventilscheiben hat, oder **durch** die Nabe des inneren Kopfs (36), mit der Fläche (q") in der Richtung der Ventilscheibe profilliert gemäss der Breite und der Form der Ventilscheibe und mit der Fläche (r") neben dem Kopf (s") der Niete/Schraube mit ebenem Kopf (37) korreliert oder nicht mit der Nabe (42), mit ihrer Fläche (eben, kegelförmig) für die Niete/Schraube mit begrabenem Kopf (37), indem die Bohrung (y") mit der kegelförmig verarbeiteten Fläche (a'") in Richtung des Kopfes (t") der Niete/Schraube mir flachem Kopf (37) korreliert wird, befestigt;
in der Außenseite wird die Niete/Schraube (34)/(37) mit einem Außenkopf (t"),
beziehungsweise mit einer selbstsichernden Mutter (38), oder mit einer üblichen Schraubmutter (39) und mit einer Grower Scheibe (40), befestigt; der Außenkopf (t") der Niete (34)/(37), die selbstsichernde Mutter (38), die Grower Scheibe (40) und die Schraubmutter (39), werden unmittelbar auf dem inneren Rohr (1) befestigt, aber vorzugsweise auf einer inneren Flachsenkung (u"), im inneren Rohr (1), oder auf einer Nabe (41) mit der Fläche (w") im Kontakt mit dem Außenkopf der Niete/Schraube (34)/(37), oder mit der ebenen selbstsichernden Mutter (38) / Grower Scheibe (40) und Schraubmutter (39),
und die ringförmige Fläche (x") im Kontakt mit dem inneren Rohr (1), mit dem Durschmesser korreliert mit dem Durchmesser des inneren Rohrs (1); die Form der Einstiche (y")/(z") in den Naben (36)/(41)/(42) für die Einführung des Körpers der Niete/Schraube (34)/(37) wird mit der Form der Niete/Schraube (34)/(37) korreliert, und der Kanal (k") in dem inneren Rohr (1) und der Einstich (z") in der Nabe (41) ist kegelförmig in dem Endbereich (a'") in Richtung des Nietkopfes;
die äußere Füllventile (31) haben eine ähnliche Konstruktion mit den inneren Ausfedernfüllventile (30) und Einfedernfüllventile (32); die Differenz besteht in der Tatsache,
dass bei den äußeren Füllventile (31) die gekrümmte / zylindrische Ventischeibe/ Ventischeiben (33), (35) auf der inneren runden Fläche (b'") oder auf einigen Abdrücken (i'") eingestellt wird/werden; diese Abdrücken sind der Ergebnis des Materialhinzufügens oder - Aussparung (y'") auf/von den Einstellungsflächen (b'") auf dem seitlichen Körper (c'") einer ringförmigen Abdeckung (43), dessen zylindrischen Bunden (d") eine oder mehrere Bohrungen (j") decken und auf der Außenseite des inneren Rohrs (1) befestigt und
abgedichtet werden; die Innenflächen des seitlichen Körpers (c"') und der zylindrischen Bunden (d'") der ringförmigen Abdeckung (43) bilden zusammen mit der äußeren Fläche (g'") des inneren Rohrs (1) einen schlauchringförmiger Raum (e"'); in dem seitlichen Körper (c'") der ringförmigen Abdeckung (43), in der Richtung der Extremitäten der Arme (m"), (n") der gekrümmten / zylindrische Ventilscheibe (33), (35) werden Bohrungen oder Spalte (f'") hergestellt, indem die Befestigung der gekrümmten / zylindrische Ventilscheibe (33), (35) **durch** die Niete/Schraube (34), (37), dessen Körper **durch** einen Kanal (h'") in dem seitlichen Körper (c'") der ringförmigen Abdeckung (43) und **durch** den Kanal (1") in der Ventilscheibe (33), (35), eingeführt wird, hergestellt wird;
die gekrümmten / zylindrische Ventilscheibe (33), (35), haben in den Armen (m"), (n"),
Nuten (j"'), die an den Enden gekoppelt (n"') werden, Kanäle die symmetrisch oder
asymmetrisch sein können und, die einen oder mehrere Armen (k"') bilden, die den Befestigungsbereich (1"') an den Verdichtungsbereich der Ventilscheiben (m"') koppeln, und
eine oder mehrere Speichen (o"'), die vorzugsweise ab unter dem profilierten Kopf (o") der Niete/Schraube (34) oder ab unter der Nabe des Innenkopfes (36) beginnen; zur Verstärkung der Speichen (o'") können sie an der Spitze oder im Inneren **durch** einen Speichensteg (p"'),
eine bequeme Form, erreichen; die Speichen (o'") haben Bördelungen (q"') an den beiden Enden, um in der Pfanne zu gleiten; die Speichen der Ventilscheibe (33), (35) werden für das Laufen über dem Dichtungsbereich (m"') korreliert, indem die Ventilscheiben (33), (35) identisch aber in einer gedrehten Position sein können;
ein Zinnschicht (44) oder ein anderer formbare Material wird auf der gesamten Fläche für die Befestigung der Ventilscheiben, angewandt;
die kalibrierte Bohrungen/Schlitze (a'), (b') können unmittelbar oder in Stufen, gemäss der benutzten Technologie, hergestellt werden;
in dem inneren Rohr (1) wird über die Funktionsbohrungen r"'), oder über die fehlerhaften Bohrungen (t"'), einen der kallibrierten Bohrungen (s'") aus dem Ringkörper (45) mit einer Korrektur der Einstellung, platziert und, wenn man die Obturation der kallibrierten Bohrung (s'") möchtet, wird es verschoben gegenüber den Bohrungen (r"')/(t"') oder verfehlen die kallibrierte Bohrungen (s"');
die Fläche (b"') der ringförmigen Abdeckung (43) und die Vorsprüngen (i'") auf den inneren Rohr (1), beziehungsweise die ringförmige Abdeckung (43) haben gekrümten, zylindrischen, ebenen Flächen, einer bequemen Form, in Korrelation mit der Form der Ventilscheibe (33)

2. Selbstregelnder Stossdämpfer für Fahrzeuge, mit selbstkorrigierender Dissipationscharakteristik mit gekrümmten, zylindrischen und ebenen Füllventile, nach dem Anspruch 1, **dadurch gekennzeichnet, dass**:
zum Füllen verwendet es einen oder mehrere Aus- und/oder Einfederungsfüllventile,
auf den inneren ringförmigen Körper (46) durch die symmetrische oder asymmetrische gekrümmte/zylindrische/ebene Ventilscheibe (33) gebildet, eingestellt unmittelbar auf der gekrümmte/zylindrische/ebene Fläche (u"'), des Ringkörpers (47) oder auf den gekrümmten/zylindrischen/ebenen Vorsprüngen (i"') auf der inneren Fläche (u"'), oder auf gekrümmten/zylindrischen/ebenen Abdrücken (i'"), resultiert aus der Aussparung von einigen Kanäle (y'") in der inneren Fläche (u"'), des Ringkörpers (47) und einen oder mehrere gekrümmte/zylindrische/ebene, zusätzliche symmetrische oder asymmetrische Ventilscheiben (35), die auf der Ventilscheibe (33) eingestellt werden;
der Ringkörper (47) wird starr und fest im Inneren des inneren Rohrs (1), oder im Inneren der ringförmigen Abdeckung (43), eingestellt, indem die der äußeren Fläche (v"') des inneren Ringkörpers 47 im Zusammenhang mit der Innenfläche des inneren Rohrs (1), oder (b"') der ringförmigen Abdeckung (43) bearbeitet wird;
die Befestigung der Ventilscheiben (33), (35) wird durch den Niet / Schraube (34)/(37), die durch die Öffnung (1"), in den Ventilscheiben (33), (35) und durch die Bohrung (w"'), in dem inneren Ringkörper (47) durchgeht, hergestellt;
entweder werden die Endungen (t"), (s") des Nietes / Schraube (34)/(37) in dem inneren Ringkörper (47) begraben, um die Überschreitung der Innendurchmesser des inneren Rohrs (1) oder der ringförmigen Abdeckung (43) zu vermeiden, oder geht es auch durch durch eine Bohrung (k") im den inneren rohr (1), beziehungsweise (h") in der ringförmigen Abdeckung (43), wobei sie auf ihrer Außenseite durch einen der bisherigen Verfahren, die bei den inneren Ventile (30), (32), oder bei äußeren Ventile 31 benutzt werden, befestigt werden;
für das Zugang der Arbeitflüssigkeit in dem Ringkörper (47) werden unter den Armen (m"), (n") die Platten (33) einigen Bohrungen Nuten (x'") entsprechend den Bohrungen (j") in dem inneren Rohr (1), beziehungsweise (f"'), in der ringförmigen Abdeckung (43) hergestellt;
wenn die Platzierung des Kopfes des Nietes/Schraube (34)/(37) unmittelbar auf der äußeren Fläche (v'") des inneren Ringkörpers (47) oder an der äußeren Fläche des inneren Rohrs (1) oder der ringförmigen Abdeckung (43), gemäss dem Befestigungselement, durchgeführt wird, wird am Ende der Bohrungen (w'")/(k")/ (h"), für die Einführung des Nietes/Schraube (34)/(37), eine planierte Oberfläche (u") oder eine konische Bohrung (a"') bearbeitet;
wenn die Niete / Schraube (34)/(37) durch den Innen rohr (1) oder durch die ringförmige Abdeckung (43) führt, kann der innere Ringkörper (47) mit einem oder mit mehreren Ringsabschnitte, die Besfestigungselementen und Ventile umfassen, ergänzt werden;
die Flächen (b"')/(u"'), der ringförmigen Abdeckung (43)/ des inneren Ringkörpers (47) und die Vorsprünge (i"') können gekrümmte/ zylindrische/ebene Oberflächen haben, und die Form der Platten wird mit dieser korreliert.

3. Selbstregelnder Stossdämpfer für Fahrzeuge, mit selbstkorrigierender Dissipationscharakteristik mit gekrümmten, zylindrischen und ebenen Füllventile, nach dem Anspruch 1 oder 2, **dadurch gekennzeichnet, dass:**
zum Füllen verwendet es einen oder mehrere Aus- und/oder Einfederungsfüllventile (30)/(32), die auf dem inneren Rohr (1), eingestellt werden, und/oder eine oder mehrere Füllventile (46) auf dem inneren Ringkörper und/oder eine oder mehrere äußere Füllventile (31) bestehend in der symmetrischen oder asymmetrischen Platte, mit drei Armen (48) und möglicherweise in einer oder mehreren zusätzlichen symmetrischen oder asymmetrischen Platten, mit drei Armen (49), die über den Platten (48) eingestellt werden;
die Platte (48) wird an den inneren Ventile (30), (32) auf der Innenfläche (v") des inneren Rohrs (1), an der äußeren Ventile (31) auf der Innenfläche (b"') der ringförmigen Abdeckung (43), beziehungsweise an den Ventile (46) auf dem inneren Ringkörper, auf der Innenfläche (u"') des inneren Ringkörpers (47) oder auf den Abdrücken (i'"), die durch Materialhinzufügen oder Ausparrung, hergestellt werden, befestigt;
Die Platten (48), (49) werden durch den Niet / Schraube (34), (37), der durch die Öffnung (1") in den Platten (48), (49) eingeführt wird und durch die Bohrungen (k") in dem inneren Rohr (1), bei den inneren Ventile (30), (32), durch die Öffnung (h"'), bei den äußeren Ventile (31) auch durch den Bohrung (w"'), möglicherweise (k"), bei den Ventile (46) auf dem inneren Ringskörper, befestigt;
die Fülllöchern (j'") in dem inneren Rohr (1) an den inneren Füllventile (30), (32), beziehungsweise die Füllöffnungen (f"') in der ringförmigen Abdeckung (43), an den äußeren Füllventile (31), beziehungsweise die Füllungsöffnungen (x"') auf dem inneren Ringskörper (47), in den Ventile (46) an dem inneren Ringskörper, werden auf den beiden Seiten der Löchern (k"), für die Befestigung der Platten (48)/(49), symmetrisch oder asymmetrisch eingestellt;
in den Armen (m"), (n") der Platten (48), (49) werden einige Schlitze (j'"), die die Armen (k'") bilden und, wenn nötig, einige Speichen (o"'), die bei dem Kopf mit einer Bördelung (q'") vorgesehen werden, indem die Speichen (o'") so profilliert werden, dass sie über den Dichtbereich (m"') der Platte (48), im Falle einer Platte, beziehungsweise über der letzten Platte (49), im Falle mehrerer Platten, eingeführt wird, hergestellt;
die Oberflächen (b"')/(u'") der ringförmigen Abdeckung (43) / des inneren Ringkörpers (47) und der Vorsprünge (i'") können gekrümmt/zylindrisch/eben sein, indem die Form der Platten mit ihrer Form korreliert wird.

4. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 3, **dadurch gekennzeichnet, dass**:
zum Füllen verwendet es einen oder mehrere Aus- und/oder Einfederungsfüllventile (30)/(32), die auf dem inneren Rohr (1), eingestellt werden, und/oder eine oder mehrere Füllventile (46) auf dem inneren Ringkörper und/oder eine oder mehrere äußere Füllventile (31) bestehend in der symmetrischen oder asymmetrischen Platte, mit zwei Armen (33) und möglicherweise in einer oder mehreren zusätzlichen symmetrischen oder asymmetrischen Platten, mit zwei Armen (35), die über den Federplatte (50) eingestellt werden; diese Federplatte hat einen Befestigungsbereich (1"') fortgesetzt mit zwei Speichen (o"'), abgeschlossen mit einer Bördelung (q'"), die über den Dichtbereich (m'") der Platten (33), im Falle einer Platte, beziehungsweise über der letzten Platte (35), im Falle mehrerer Platten, eingeführt wird;
der Niet / Schraube (34), (37), führt durch die Öffnungen (1") in den Platten (33), (35) und durch die Bohrungen (k") in dem inneren Rohr (1), bei den inneren Ventile (30), (32), durch die Bohrung (h'"), bei den äußeren Ventile (31) auch durch Die Bohrung (w'"), bei den Ventile (46) und befestigt zwischen der Fläche (p") des proffilierten Kopfs (o") oder der Fläche (q") des inneren Ringkörpers des Innenkopfs (36) und der inneren Fläche (v") des inneren Rohrs (1), im Falle der inneren Ventile (30), (32), beziehungsweise der Fläche (b"') der ringförmigen Abdeckung (43), im Falle der äußeren Ventile (31), beziehungsweise der Fläche (u"')/(v") des inneren Ringkörpers (47) / des inneren Rohrs (1), im Falle der Ventile (46) auf dem inneren Ringkörper;
die Einstellung der Platte (33) wird unmittelbar auf der gebogenen/zylindrischen inneren Fläche (v")/(b'")/(u'") des inneren Rohrs (1) / der ringförmigen Abdeckung (43) / des inneren Ringkörpers (47), im Falle der inneren Ventile (30), (32) / der äußeren Ventile (31) / der Ventile (46) auf dem inneren Ringskörper, oder auf den Vorsprüngen (i'"), die auf den inneren Flächen eingestellt werden oder durch Materialaussparung (y'") von der inneren gebogenen/zylindrischen Fläche (v")/(b'")/(u'") des inneren Rohrs (1) / der ringförmigen Abdeckung (43) / des inneren Ringkörpers (47), im Falle der inneren Ventile (30), (32) / der äußeren Ventile (31) / der Ventile (46) auf dem inneren Ringskörper, resultiert haben, durchgeführt;
die Oberflächen (b'")/(u'") der ringförmigen Abdeckung (43) / des inneren Ringkörpers (47) und der Vorsprünge (i'") können gekrümmt/zylindrisch/eben sein, indem die Form der Platten mit ihrer Form korreliert wird.

5. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 4, **dadurch gekennzeichnet, dass:**
zum Füllen verwendet es einen oder mehrere Aus- und/oder Einfederungsfüllventile (30)/(32), die auf dem inneren Rohr (1), eingestellt werden, und/oder eine oder mehrere Füllventile (46) auf dem inneren Ringkörper und/oder eine oder mehrere äußere Füllventile (31) bestehend in einer starren oder halbstarren/elastischen Platte (51)/(33), die auf den Löchern für den Ölzugang von einem Federteller (50) abgedrückt wird;
die Platten (51)/(33),(50) haben einen Führungsbereich (1"), fortgefahren mit zwei Armen (m") , (n"), indem in der Mitte des Führungsbereichs 1" einen oder mehrere Bohrungen (z'") in den Platten (51)/(33), beziehungsweise (a"") in der Platte (50), wodurch den Niet/Schraube (53), mit proffiliertem Kopf und Körper, durchführt, eingestellt werden;
wenn eine einzige Niete / Schraube (53) verwendet wird, hat seinen Körper im Führungsbereich (c""), und die Bohrungen (z'"), (a""), eine unrunde Form (quadratisch, rechteckig, oval, sternförmig), um die Rotation zu behindern; wenn mehr Nieten / Schrauben (53) verwendet werden, kann der Führungsbereich (c"") , die Bohrungen (z'"), beziehungsweise (a"") kreisförmig sein;
die Abmessungen der Bohrungen (z"'), (a"") sind so vorgesehen, dass das Gleiten der Platten (51 / 33), (50) auf dem Gleitungsbereich c"" des Nietes/Schraube (53), versichert wird und der Führungsbereich (c"") des Nietes/Schraube 53 länger als die Summe der Dichten der Platten (51)/(33), (50) ist;
in dem Endbereich hat der Niet / Schraube (53) einen Befestigungsbund (b""), mit denen es in der Bohrung (k") aus dem inneren Rohr (1), an der inneren Ventile (30), (32), beziehungsweise in der Bohrung (h"'), von der ringförmigen Abdeckung (43), an der äußeren Ventile (31), beziehungsweise in der Bohrung (w'''), von dem inneren Ringskörper (47), an den Ventile auf dem inneren Ringskörper, befestigt wird;
für die Entlastung und wenn man die gewünschte Platte (51) in einer elastischen Weise zu betreiben möchte, werden in den Armen (m"), (n") Tröge der gewünschten Form hergestellt;
die Befestigung des Nietes / Schraube (53), außen, wird durch Nieten/Schreibmutter, in der gleichen Weise wie bei der bisherigen Lösungen, auf der inneren Ventile (30), (32), äußere Ventile (31), oder (46) an dem inneren Ringskörper, durchgeführt;
die Einstellung der Platte (51)/(33) wird unmittelbar auf der gebogenen/zylindrischen inneren Fläche (v")/(b''')/(u''') des inneren Rohrs (1) / der ringförmigen Abdeckung (43) / des inneren Ringkörpers (47), im Falle der inneren Ventile (30), (32) / der äußeren Ventile (31) / der Ventile (46) auf dem inneren Ringskörper, oder auf den Vorsprüngen (i'''), die auf den inneren Flächen eingestellt werden oder durch Materialaussparung (y''') von der inneren gebogenen/zylindrischen Fläche (v")/(b''')/(u''') des inneren Rohrs (1) / der ringförmigen Abdeckung (43) / des inneren Ringkörpers (47), im Falle der inneren Ventile (30), (32) / der äußeren Ventile (31) / der Ventile (46) auf dem inneren Ringskörper, resultiert haben, durchgeführt;
die Oberflächen (b''')/(u''') der ringförmigen Abdeckung (43) / des inneren Ringkörpers (47) und der Vorsprünge (i''') können gekrümmt/zylindrisch/eben sein, indem die Form der Platten mit ihrer Form korreliert wird.

6. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 5, **dadurch gekennzeichnet, dass**:
zum Füllen verwendet es einen oder mehrere Aus- und/oder Einfederungsfüllventile (30)/(32), die auf dem inneren Rohr (1), eingestellt werden, und/oder eine oder mehrere Füllventile (46) auf dem inneren Ringkörper und/oder eine oder mehrere äußere Füllventile (31) bestehend in einer starren oder halbstarren Platte (51)/elastischen Platte (33), die auf den Löchern für den Ölzugang von einem Presser (54) abgedrückt wird; der Presser wird von einer Spiralfeder (55), die auf dem profilierten Kopf (o"), des Nietes/Schraube (56), gestützt wird, betätigt; der Presser (54) wird in dem mittigen Bereich mit einem oder mit mehreren Bohrungen (d'''') für das Gleiten in dem Bereich (c'''') des Nietes/Schraube (56), vorgesehen;
die Platten (51)/(33) haben einen Führungsbereich (l''), fortgefahren mit zwei Armen (m"), (n"), indem in der Mitte des Führungsbereichs (l'') der Platte (51)/(33) einen oder mehrere Bohrungen (z'''), wodurch den Niet/Schraube (53), mit proffiliertem Kopf und Körper, durchführt, eingestellt werden;
wenn eine einzige Niete / Schraube (56) verwendet wird, hat seinen Körper im Führungsbereich (c''''), und die Bohrungen (z'''), (a''''), eine unrunde Form (quadratisch, rechteckig, oval, sternförmig), um die Rotation zu behindern; wenn mehr Nieten / Schrauben (56) verwendet werden, kann der Führungsbereich (c''''), die Bohrungen (z'''), beziehungsweise (a'''') kreisförmig sein;
die Zahl der Spiralfedern (55) und die Länge des Führungsbereichs (c'''') werden mit der Anzahl der Nieten/Schrauben (56) und mit der die gewünschte elastische Eigenschaft korreliert, indem die Form und die Abmessungen der Boohrungen (z'''), (d'''') so hergestellt wird, dass das Gleiten der Platte (51) und des Pressers (54) auf dem Führungsbereich (c'''') des Nietes/Schraube (56), versichert wird;
in dem Endbereich hat der Niet / Schraube (56) einen Befestigungsbund (b''''), mit denen es in der Bohrung (k'') aus dem inneren Rohr (1), an der inneren Ventile (30), (32), beziehungsweise in der Bohrung (h'''), von der ringförmigen Abdeckung (43), an der äußeren Ventile (31), beziehungsweise in der Bohrung (w'''), von dem inneren Ringskörper (47), an den Ventile auf dem inneren Ringskörper, befestigt wird;
der Führungsbereich (c''''), des Nietes/Schraube (56) ist länger als die Summe der Dichten der Platte (51)/(33), des Pressers (54) und der Spulen der Feder (55),
die Befestigung des Nietes / Schraube (56), außen, wird durch Nieten/Schreibmutter, in der gleichen Weise wie bei der bisherigen Lösungen, auf der inneren Ventile (30), (32), äußere Ventile (31), oder (46) an dem inneren Ringskörper, durchgeführt;
der Presser (54) kann vermissen, und in diesem Fall ist es empfehlenswert, dass die Einstellungsfläche der Feder (55) auf der Platte (51)/(33), entsprechend gestaltet werden;
für die Entlastung und wenn man die gewünschte Platte (51) in einer elastischen Weise zu betreiben möchte, werden in den Armen (m"), (n") Tröge der gewünschten Form hergestellt;
die Einstellung der Platte (51)/(33) wird unmittelbar auf der gebogenen/zylindrischen inneren Fläche (v")/(b''')/(u''') des inneren Rohrs (1) / der ringförmigen Abdeckung (43) / des inneren Ringkörpers (47), im Falle der inneren Ventile (30), (32) / der äußeren Ventile (31) / der Ventile (46) auf dem inneren Ringskörper, oder auf den Vorsprüngen (i'''), die auf den inneren Flächen eingestellt werden oder durch Materialaussparung (y''') von der inneren gebogenen/zylindrischen Fläche (v")/(b''')/(u''') des inneren Rohrs (1) / der ringförmigen Abdeckung (43) / des inneren Ringkörpers (47), im Falle der inneren Ventile (30), (32) / der äußeren Ventile (31) / der Ventile (46) auf dem inneren Ringskörper, resultiert haben, durchgeführt;
die Oberflächen (b''')/(u''') der ringförmigen Abdeckung (43) / des inneren Ringkörpers (47) und der Vorsprünge (i''') können gekrümmt/zylindrisch/eben sein, indem die Form der Platten mit ihrer Form korreliert wird.

7. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 6, **dadurch gekennzeichnet, dass**:
es hat die Gleitdichtung der Kolbenstange (5) durch eine Dichtung (57) hergestellt, die in einer Öffnung (e""), des oberen äußeren Deckels (10), eingestellt wird, indem das Siegel des oberen äußeren Deckels (10) gegenüber dem äußeren Rohr (6) durch einen Ring-Dichtung (58), O-Typ, eingeführt in einer kreisförmigen Fase (t), in dem oberen äußeren Deckel (10) und gedrückt durch die Schließungsflansche (s) des äußeren Rohrs (6), durchgeführt wird;
die Öffnung (j) des Dichtrings (11) wird mit drei Randabschlüsse (x), (y), (z) ausgerüstet, die einen oberen Raum (k""") und einen unteren Raum (l""") begrenzen; hinten des unteren Raums (l""") befindet sich eine ringförmige Rinne (c'), in der einen Federring (15) für die Erhöhung der Spannkraft der Randabschlüsse (y), (z) eingefügt wird; die Einstellung des unteren Randabschlusses (z) wird durch eine Fase (d') getan, indem für die Hochdruckabdichtung eine ringförmige Rinne (e') für die Einführung eines zweiten Federerings (16), vorgesehen wird;
die Stärke des Dichtungsrings (57) wird durch eine innere Verstärkung (59) sichergestellt; auf der Seitenfläche und auf den Stirnflächen werden einigen kreisförmigen Vorsprüngen (f"") eines bequemen Abschnittes, vorgesehen;
die Aussparung (e"") kann am oberen oder unteren Teil des äußeren oberen Deckels (10) angewendet werden, so dass der Befestigungsbund (g"") für die axiale Begrenzung des Dichtringes (57) oben oder unten platziert werden kann;
die Aussparung (e"") hat einige ringförmiger Trögen (m""") in den die Vorsprüngen (f"") befestigt/gedichtet werden.

8. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 7, **dadurch gekennzeichnet, dass**:
der untere Teil (w') des der oberen inneren Deckels des inneren Rohrs (7) wird durch eine kreisförmige Erweiterung (h"") mit einem geringeren Durchmesser im Vergleich zu der des Inneren Rohrs (1), fortgesetzt;
in der Oberseite (x') des Kolbens (4) wird eine kreisförmige Aussparungsblende (i"") durchgeführt, in dem der Ausfederungsanschlagpuffer (20) ganz oder teilweise tritt; der Durchmesser des durchgeführten Schröpfens (i"") ist größer als der der Verlängerung (h"");

9. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 8, **dadurch gekennzeichnet, dass**:
der äußere obere Deckel (10) wird im zentralen Bereich mit einer kreisförmigen Öffnung (e) vorgesehen, die verschiebbar mit der Kolbenstange (5) eingestellt wird, oder mit einer Aussparung (p'), wo eine zusätzliche mit der Kolbenstange (5) angepassten Führung (8) eingeführt wird, wobei die Führung axial durch eine Lasche (q') und möglicherweise durch einen elastischen in einer Mulde (r') eingestellten Sicherungsring (19), begrenzt wird;
der äußere obere Deckel (10) wird in der oberen Seite mit einer zentralen Aussparung (e"") vorgesehen, die einige kreisförmige Mulden (m""") hat, indem in der Aussparung (e"") einen Dichtungsring (57) eingeführt wird; dieser Dichtungsring wird mit einigen kreisförmigen Vorsprüngen (f"") eines bequemen Abschnittes, vorgesehen, die in den Mulden (m""") befestigt/verdichtet werden, indem die Aussparung axial von dem Besfestigungsbund (g"") begrenzt wird;
die Befestigung des äußeren oberen Deckel (10) gegenüber dem äußeren Rohr (6) wird radial durch den Besfestigungsbund (q), die starr auf der verarbeiteten Fläche (p) des äußeren Rohrs (6) und axial durch die Bördelung (s) des äußeren Rohrs (6), eingestellt wird, durchgeführt;
die Befestigung des äußeren oberen Deckel (10) gegenüber dem inneren Rohr (1) wird durch den Besfestigungsbund (f') durchgeführt;
die Befestigung des äußeren oberen Deckel (10), gegenüber dem äußeren Rohr (6), wird von einem kreisförmigen Dichtungsring (58), der in der kreisförmigen Fase (t) platziert wird, durchgeführt;
eine Gehäuse (j"") sammelt das durch den Dichtungsring verschrottenen Öl, der in der Behälterkammer (d) durch eine Bohrung (k"") zurückgesendet wird.
zur Gewichtsreduzierung und Material Wirtschaft werden auf der Seitenfläche des äußeren oberen Deckels (10) einige Fräsungen (o"") vorgesehen.

10. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 9, **dadurch gekennzeichnet, dass**:
die zentrale Aussparung (e"") des äußeren oberen Deckels (10) erhöht und erhält einen Deckel (52), mit dem Dichtungselement (11) der Kolbenstange und mit einer oberen Erweiterung (u) der Dichtung bis zum Ende des äußeren oberen Deckels (10); die Erweiterung (u) wird mit einer kreisförmigen Vorsprung (w) vorgesehen;
die axiale Befestigung des äußeren oberen Deckels (10) wird durch die Bördelung (s) des äußeren Rohrs (6) durchgeführt;
die Dichtung hat alle vorherig definierten Elementen und darüber hinaus hat es eine runde Speichen (l""), die auf einem Vorsprung (m""), des äußeren oberen Deckels (10), unterstützt wird, bestimmend das Gehäuse (n""), das mit der Behälterkammer (d) durch den Auspufflöcher (k"") kommuniziert, behindernd das Eindringen des Öls aus der Behälterkammer (d), in dem Gehäuse (n"") aber erlaubend die Entleerung des verschrottenen Öls in der Behälterkammer (d);
zur Gewichtsreduzierung und Material Wirtschaft werden auf der Seitenfläche des äußeren oberen Deckels (10) einige Fräsungen (o"") vorgesehen.

11. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 10, **dadurch gekennzeichnet, dass**:
der äußeren Rohr (6) wird im unteren Bereich des unteren äußeren Deckels (12) geschlossen,
der im Inneren, im unteren Bereich einen Vorsprüng (k) mit einer eben, kegelförmig oder sphärisch verarbeiteten Fläche (l), für die Einstellung-Zentrierung des inneren Rohrs (1) mit einer in Zusammenhang mit der Fläche (1) des Vorsprungs (k) verarbeiteten unteren Fläche (m), hat; die untere Fläche (m) des ineren Rohrs (1) und/oder der Fläche (l) des Vorsprungs (k) wird mit einem leicht verformbaren Material (13) beschichtet.

12. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 11, **dadurch gekennzeichnet, dass**:
es hat einen oberen Flachventil (62), bestehend in einer Scheibenplatte (63), gepresst auf der unteren Fläche (w') des oberen inneren Deckels des inneren Rohrs (7), oder auf einigen Vorsprüngen (i'''), von einem Spiral-, zylindrischen oder Kegelfeder (64) auf der inneren Fläche (r""), eines Ventilbundes (65), der zwischen dem oberen inneren Deckel des inneren Rohrs (7) und dem inneren Rohr (1) befestigt wird;
die Vorsprüngen (i''') umgeben die Versorgungslöchern (s"") bildend einen oder mehrere Beilangen (t"") die von einem oder von mehreren Mulden (t""') zusammenverbunden sind;
die Bohrungen (s"") beginnen in der unteren Fläche (w') des oberen inneren Deckels des inneren Rohrs (7) und kommunizieren mit den Löchern / Fräsen (i) in den Bund (f) des oberen inneren Deckels des inneren Rohrs (7);
der Ventilbund (65) wird auf dem inneren Rohr (1), entweder durch Pressen/Reifung, verbessert durch einige kleinen Mulden (p""") auf den Flächen der befestigten Stücken, oder durch einen ständigen oder untergebrochenen kreisförmigen Befestigungsbund (u""), in dem inneren Rohr (1), eingestellt auf einer Fase (y""') des oberen inneren Deckels des inneren Rohrs (7), oder duch einen Befestigungsrig (66), eingeführt in einer Wanne (z""') aus dem inneren Rohr (1), oder durch Vorsprünge (j""'), die die Befestigung in einem Trog sichern (k""'), auf dem oberen inneren Deckel des inneren Rohrs (7), oder durch eine oder mehrere dieser Kombinationen, eingestellt;
ist es empfehlenswert, dass der Ventilbund (65) auf einem kreisförmigen Befestigungsbund (v"") des oberen inneren Deckels des inneren Rohrs (7), oberhalb der unteren Fläche (w') des oberen inneren Deckels (7) eingestellt wird;
in den Abstützfüße (w"") des Ventilbundes (65) werden entweder innere Ausschnitte (x"") oder durchgehende Ausschnitte (y""), oder äußere Ausschnitte (z""), (a""'), vorgesehen, indem die Ausschnitte auf der ganzen Höhe des Ventilbundes (65) oder kürzer durchgeführt werden;
eine kreisförmige Mulde (c""'), in der Fläche (b""') nach außen, verbindet die Kanten/Schlitzen (x""), (y""), (z""), (a""');
bei den Versionen von Ausschnitte (x""), (y""), die die Fläche (b""') nicht perforieren, ist die Mulde (c""') obligatorisch;
bei den Versionen mit den Kanäle (a""') die nicht auf der ganzen Länge des Ventilbundes (65) hergestellt werden, bleiben die Abstützfüße (w"") in dem Einstellungsbereich auf dem oberen inneren Deckel des inneren Rohrs (7) intakt, bildend einen ständigen Bund (d""');

13. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 12, **dadurch gekennzeichnet, dass**:
die obere ebene Ventil (62) verwendet einen Tellerfeder (67) mit elastischen Beinen (e""'), rechten oder gebogenen, gekrümt gegenüber dem Plan der Platte; am unteren Ende haben die Beine (e""'), eine Wendepunkt / Felgen (f'""), ein Filet (g'""), für die Sicherstellung der Beseitigung der Konzentratoren in dem Bereich der Festsetzung der Beine auf der Festplatte (h""'), der Platte (67), und eine zentrale Öffnung (i""') in der Scheibe (h'""), sichert die Weitergabe der Kolbenstange (5);
eine Scheibenplatte (63), Einstellung auf den Tellerfeder (67), erhöht die Festigkeit und den Widerstand;
wenn die Scheibenplatte (63) verwendet wird, kann der Tellerfeder (67) umgekehrt (69) für die Erhöhung der Sensibilität der Ventile, eingestellt werden.

14. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 13, **dadurch gekennzeichnet, dass**:
es nutzt eine oder mehrere Füllventile auf dem gegossenen Ringkörper (68), bestehend in einem Ringkörper (74), der von leicht schmelzbaren Materialien gegossen oder oder aus widerstandsfähigem Kunststoff gespritzt wird, im Innneren des inneren Rohrs (1), oder im Inneren des ringförmige Abdeckung (43); der Ringkörper (74) enthielt die Füllungkanäle (m"'),
die Kanäle (w'"), für die Einführung der Niete/Schraube für die Befestigung der Ventile und einige Außenvorsprüngen (l'"");
die Einstellung der gekrümten/zylindrischen/ebenen Platten (33), (35) wird unmittelbar auf der inneren gekrümten/zylindrischen/ebenen Fläche (u'") des Ringkörpers (74) oder auf den gekrümten/zylindrischen/ebenen Abdrücken (i"') auf der inneren Fläche des Ringkörpers (74);
die gekrümten/zylindrischen/ebenen Platten der Ventile (33), (35), werden durch die früheren Verfahren, die bei den Ventilen auf dem inneren Ringkörper (46) oder bei den äußeren Ventile (31) dargestellt werden;
der Ringkörper kann ständig oder in Ausschnitte verteilt sein, die die Füllungs-, Dichtungs-, Befestigungsbereichen und äußeren Vorsprünge (l'"") umfassen, ausgedehnt aus dem Inneren des inneren Rohrs (1)/Ringkörper (43) durch die erweiterte Füllungsöffnungen (j")/(f").

15. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 14, **dadurch gekennzeichnet, dass**:
es benutzt für die Ausfederungfüllung einen unteren ebenen Füllventil (70), bestehend in dem unteren Deckel des inneren Rohrs (71), auf dessen oberen ebenen Flächen (n'"") oder auf einigen Vorsprünge (i"') die elastische Platte (72) eingestellt wird, befestigt auf den unteren Deckel des inneren Rohrs (71) durch eine Niete/Schraube (34)/(37), die durch Die Öffnung (o""') aus der Platte (72) und durch die Öffnung (p""') aus dem Deckel (71) durchgeht;
zwischen dem Kopf (s") der Niete/Schraube mit flachem Kopf (37) und der Platte (63) und zwischen der unteren Fläche des Körpers (71) und dem unteren Kopf (t") der Niete (34)/(37)/Schraubmutter (38)/(39), wird eine ebene Scheibe (73) befestigt;
der Deckel (71) hat in der unteren Fläche eine Öffnung (q'""), die mit dem Einfederungsraum (c) durch einige Versorgungsbohrungen (r'"") und mit der Behälterkammer (d) durch einige Bohrungen/Fräsungen (s""'), in der unteren Fläche des Deckels (71) kommuniziert;
die Vorsprünge (i"'), die den Versorgungsbohrungen (r'"") umgeben, bilden einen oder mehrere Gehäusen (t""), die mit einem oder mit mehreren kreisförmigen Mulden (t'"") verbunden werden, indem die Größe der Gehäusen (t"") mit der Widerstand der Platten korreliert wird.
die Befestigung des unteren inneren Deckels (71) wird gegenüber dem inneren Rohr (1) durch einen Befestigungsbund (u'"") und gegenüber dem Vorsprung (k) auf dem unteren äußeren Deckel (12) durch einen Bereich (v'"") mit einer korrelierten Form (k) durchgeführt.

16. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 14, **dadurch gekennzeichnet, dass**:
der oberen inneren Deckel des inneren Rohrs (7), hat einen Stellring (f), mit einem Durchmesser kleiner als der innere Durchmesser des äußeren Rohrs (6), damit die zwei Stücke, beziehungsweise der obere innere Deckel des inneren Rohrs (7) und der äußeren Rohrs (6) nicht im Kontakt stehen, indem zwischen sie einer ringförmige Raum (w""') gibt;
der Stellring (f) hat nur die Rolle der Dämpfung der Bewegung der Flüssigkeit in der Behälterkammer (d);
einer volle oder ringförmige Befestigungsbund (x""'), auf der oberen Fläche des oberen inneren Deckels des inneren Rohrs (7), versichert die Zentrierung des Rohrs (17), gegenüber dem oberen inneren Deckel des inneren Rohrs (7);

17. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 16, **dadurch gekennzeichnet, dass**:
in der unteren Fläche, wird der innere Rohr (1) mit dem unteren Deckel des inneren Rohrs (78) eingeschlossen, dem gegenüber es durch den Besfestigungsbund (u'"") zentriert wird;
der Deckel (78) wird mit der Fläche (v'"") auf dem inneren Besfestigungsbund (k) der unteren äußeren Deckel (12) des äußeren Rohrs (6) untergestützt und zentriert.

18. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 17, **dadurch gekennzeichnet, dass**:
der innere Rohr (1) wird in der oberen Seite, über dem oberen inneren Deckel des inneren Rohrs (7), zum Niveau des oberen äußeren Deckel (10), ausgedehnt und wird in ihrem Befestigungsbund (f') befestigt/zentriert, tragend auch die Funktion des Rohrs (17) für die Bildung des Ausgleichraums (h) über; demgemäss enthielt es Öffnungen (g) für den Umlauf der Flüssigkeit und einige Scheiben (18) mit Kommunikationsöffnungen (g');
die Scheiben (18) werden auf der äußeren oder auf der inneren Seite des Rohrs (1) festgestellt, entweder starr, durch Pressen oder Schweißen, oder durch Form, indem bei der Druckeinstellung die Scheiben eine Bördelung (h') mit einigen Bohrungen (i') oder Kanäle (j') für die Förderung des Schröpfens haben; bei der Befestigung durch Form werden auf dem Rohr (1) einige Mulden oder Vertiefungen (k') vorgesehen, in den elastisch oder durch Schröpfen die Vorsprünge (l'), vorzugsweise in dem Pre-terminalen Bereich (m') geneigt, hergestellt werden; im Falle von mehreren Scheiben (18) können diese auf zwei oder auf mehreren Stege zwischen den Scheiben (n' mit Öffnungen (o') befestigt werden.
der Durchmesser des oberen inneren Deckels des inneren Rohrs (7) wird mit dem inneren Durchmesser des inneren Rohrs (1) korreliert, um es in diesem gepresst eingeführt zu werden;
die Befestigung des oberen inneren Deckels des inneren Rohrs (7) im inneren Rohr (1) wird durch Pressen/Reifung durchgeführt; diese wird durch einige feine Bohrungen (s"") in dem oberen inneren Deckeln des inneren Rohrs (7) und in dem inneren Rohr (1), entweder durch eine oder mehrere ständige oder unterbrochene kreisförmigen Befestigungsbunden (u""), in dem inneren Rohr (l), auf einer Fase (y'"") des oberen inneren Deckels des inneren Rohrs (7), oder durch Befestigungsbunden (66), eingeführt in den Kanal (z'"") aus dem inneren Rohr (1), begünstigt;
wenn der obere innere Deckel des inneren Rohrs (7) die Rolle eines Körpers der ebenen Ventile (70), Kanäle (s"") umfassend, spielt, fasst der inneren Rohr (1) Öffnungen (o"""), entsprechend den Kanälen (s""), um.

19. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 18, **dadurch gekennzeichnet, dass**:
der Kolben (4) hat in der mittigen Seite eine Bohrung (g"), für die Einführung der Kolbenstange (5), kegelförmig in dem unteren Bereich (c"""), wo der Kopf (b"""), der durch die Abformung der unteren Extremität der Kolbenstange (5) hergestellt wird, den Kolben besfestigt;
es wird empfohlen, dass die Vertiefungen (j""") auf dem abgespannten Kopf, horizontal oder geneigt sind, so dass keine Gastasche gebildet wird; zu diesem Zweck liegt ihr Niveau unter dem Niveau der unteren Fläche (d") des Kolbens (4);

20. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 19, **dadurch gekennzeichnet, dass**:
der Kolben (4) hat in der unteren Fläche eine Schnittbreite (a"""), in dem der Kopf (b""") liegt, hergestellt durch die Abformung der unteren Extremität der Kolbenstange (5); der Kopf (b"""), befestigt den Kolben (4), auf der Kolbenstange (5), unmittelbar, wenn für die Ermöglichung der Abformung, die Aussparung (g") für die Einführung der Kolbenstange (5) kegelförmig in der unteren Fläche (c""") ist, oder mittelbar, durch eine Scheibe (75), mit einer kegelförmigen unteren Fläche (e""") in der Öffnung (d""") für die Einführung der Kolbenstange, für die Ermöglichung der Abformung;
Die Abformung (a""") wird mit einem Deckel (29) eingeschlossen, der sich auf der Bodenseite der Abformung (a"""), beziehungsweise auf der Scheibe (75) unterstützt, so dass die untere Fläche (f"""), des Deckels (29), unter der unteren Fläche (d") des Kolbens (4) liegt.

21. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 20, **dadurch gekennzeichnet, dass**:
der Kolben (4) hat in der unteren Seite eine Schnittbreite (a"""), das in der unteren Fläche durch einen Deckel (76) eingeschlossen wird, und in der oberen Fläche mit einem Befestigungsbund (g""") für die Versicherung der radialen Zentrierung gegenüber der Abformung (a""") und für die axiale Befestigung durch Unterstützung auf der unteren Fläche (d"), des Kolbens (4), vorgesehen wird;
der Deckel (76) wird mit einer mittigen Öffnung (h""") ausgestatten, wodurch die Kolbenstange (5), gegenüber der es radial zentriert wird, eingeführt wird;
der Kopf (b"""), hergestellt durch die Abformung der unteren Extremität der Kolbenstange (5), befestigt zwischen dem Befestigungsbund (c") der Kolbenstange (5) und der Kolbeneinheit (4), den Deckel (76), für die Ermöglichung der Abformung des Kopfs (b""");
die Bohrung (h""") ist kegekförmig in der unteren Fläche (i""");
es wird empfohlen, dass die Abdrücke (j""") auf dem abgespannten Kopf, horizontal oder geneigt sind, so dass keine Gastasche gebildet wird; zu diesem Zweck liegt ihr Niveau unter dem Niveau der unteren Fläche (d") des Kolbens (4);

22. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 22, **dadurch gekennzeichnet, dass**:
die abnehmbare Dichtung (57) wird unmittelbar in dem inneren Rohr (1) bei seinem oberen Extremität befestigt; sie wird mit einigen Mulden (m""") eines gewünschten Abschnittes, in dem die Vorsprüngen (f"") eingeführt werden, vorgesehen. Für eine sicherere Befestigung emfehlen wir die Benutzung eines Sicherheitsring (3), der in der Wanne (x""") befestigt wird.
die Befestigung/Zentrierung des inneren Rohrs (1), gegenüber dem äußeren Rohr (6) wird in dem oberen Bereich durch den ringförmigen Deckel (2) mit einem "L" Abschnitt durchgeführt; die vertikale Krone (q) versichert die radiale Befestigung gegenüber der verarbeiteten oder unverarbeiteten inneren Flächen (p) des äußeren Rohrs (6), und die horizontale Krone (r) versichert die axiale Befestigung gegenüber der Schließbördelung (s), des äußeren Rohrs (6).

23. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 22, **dadurch gekennzeichnet, dass**:
die Befestigung/Zentrierung des inneren Rohrs (1), gegenüber dem äußeren Rohr (6) wird in dem unteren Bereich durch den Befestigungsbund (n"""), in der unteren äußeren Deckel (12) hergestellt; der Befestigungsbund wird gegenüber der verarbeiteten oder unverarbeiteten inneren Flächen (p) des äußeren Rohrs (6) zentriert.

24. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 23, **dadurch gekennzeichnet, dass**:
die Befestigung/Zentrierung des inneren Rohrs (1), gegenüber dem äußeren Rohr (6) wird in dem oberen Bereich, axial durch die Kante (s) und radial durch die Längsvertiefungen (q"""), oder durch ringsförmige Befestigungsbunden (r"""), mit den inneren Flächen (s""") bearbeitet für die starre Einstellung mit dem Inneren Rohr (1);
die Längsvertiefungen (q""") können nach unten für die Verstarrung und Verbesserung des Kühlens verlängert werden, wenn ihre untere Flächen (s""") teilweise oder voll für die Verstarrung gegenüber dem inneren Rohr verarbeitet werden.

25. Selbstregelnder Stossdämpfer für Fahrzeuge, mit selbstkorrigierender Dissipationscharakteristik mit gekrümmten, zylindrischen und ebenen Füllventile, nach einem der Ansprüche 1 bis 24, **dadurch gekennzeichnet, dass**:
es benutzt einen gekrümmten Füllventil, mit starren/halbstarren/elastischen Platten, mit einer Außenplatte bestehend in einer gekrümmten/ zylindrischen/ebenen,
starren/halbstarren/elastischen Platte (51)/(33), die in der inneren Fläche des inneren Rohrs (1), oder des inneren Ringkörpers (47), oder der ringförmigen Abdeckung (43), oder der eingeblasenen/gegossenen Abdeckung (74), unmittelbar, oder auf Vorsprüngen (i"') für die Obturation der Öffnungen gegen dem Öleintritt (j"), (f"'), befestigt wird;
die Platte (51)/(33) wird auf dem Niet/Schraube (53) durch die Öffnung (z"") befestigt, indem beide einen rechteckigen oder ovalen Querschnitt, für die Verhinderung der Drehung, haben;
die Niete / Schraube (53) gleitet in der Bohrung (y"""), des inneren Rohrs (1) / der ringförmigen Abdeckung (43) / des inneren Ringkörpers (47) / des abgegossenen Ringkörpers (74), durch den Federteller (77) geregelt, der am oberen Extremität durch Nieten oder Schraubmuttern befestigt wird;
für die Ermöglichung des Flüssigkeitszugangs werden die Arme des Fedems mit Bohrungen (j'") ausgestattet.

## Revendications

1. Amortisseur auto-réglable à caractéristique dissipative autocorrective destiné aux véhicules, avec des soupapes de remplissage courbés, cylindriques et planes, comprenant:
un cylindre intérieur (1) formant une chambre de travail (a), le cylindre intérieur (1) étant prévus sur toute sa longueur d'une multitude de trous/fentes calibrés d'amortissement à la détente (a') et de trous/fentes calibrées d'amortissement à la compression (b');
un piston (4) monté coulissant dans la chambre de travail (a) et séparant la chambre de travail (a) dans un compartiment de détente (b) et un compartiment de compression (c), dont les volumes varient en fonction de la position du piston (4) dans la chambre de travail (a);
une tige de piston (5) connecté au piston (4) et prolongé du bout de la chambre de travail (a) adjacente à la chambre de détente (b); déplace le piston (4) à l'intérieur de la chambre de travail (a);
un cylindre extérieur (6) disposés autour du cylindre intérieur (1), le cylindre extérieur (6) formant une chambre réservoir (d), entre le cylindre intérieur (1) et le cylindre extérieur (6);
un couvercle supérieur (7), du cylindre intérieur (1) fermant le bout de la chambre de travail (a) adjacente à la chambre de détente (b), le couvercle supérieur du cylindre intérieur (7) étant équipe d'un guidage annulaire (8) de la tige ou une ouverture centrale (e), dimensionné pour ajustage coulissante autour de la tige (5) et avec un collet (f) rigide avec le paroi intérieure du cylindre extérieur (6);
un couvercle supérieur extérieur (10) équipé avec un élément d'étanchéité (11), ayant une ouverture centrale (j), dimensionnée pour l'ajustage coulissante de la tige (2);
un système de labyrinthes (9) avec des trous (g) pour le passage du liquide de travail, adossé sur l'extrémité supérieure du couvercle supérieur du cylindre intérieur (7), et supérieurement limitée d'un couvercle supérieur extérieur (10), le compartiment entre le couvercle supérieur (7), du cylindre intérieur (1), le couvercle supérieur extérieur (10), la tige (5) et le cylindre extérieur (6) formant une chambre de compensation (h);
un fluide remplit la chambre de travail (a) et remplit au moins partiellement la chambre de compensation (h);
des fraisages ou des orifices (i) pratiqués dans le collet (f) du couvercle supérieur du cylindre intérieur (7) pour assurer la circulation du l'huile entre la chambre de compensation (h) et la chambre réservoir (d);
une multitudes de soupapes de remplissage à la détente (30), à l'extrémité inférieure du cylindre intérieur (1);
une multitude des soupapes de remplissage à la compression(32), à l'extrémité supérieure du cylindre intérieur (1);
une multitude de soupapes de remplissage à la détente et à la compression (31), est prévue sur le cylindre intérieur (1) entre les soupapes de remplissage à la détente (30) et les soupapes de remplissage à la compression (32);
**caractérisé en ce que**:
à l'intérieur, le couvercle inférieur extérieur (12) a une proéminence (k) dont la face (1) est usinée en surface plane, conique ou sphérique, pour l'emplacement-centrage du cylindre intérieur (1), à l'aide d'un manchon de montage (14) de matériaux métalliques, plastiques, élastiques ou élastique-plastique, matériaux facilement déformables, pour l'amélioration de l'étanchéité - fixation, le manchon de montage (14) recouvrant à l'intérieur et / ou à l'extérieur l'extrémité inférieure du cylindre intérieur (1), le manchon de montage (14) ayant les faces intérieures (n) pour l'emplacement du cylindre intérieur (1) et la face (o) pour son emplacement sur la proéminence (k), avec des formes en corrélation avec les formes des pièces conjuguées, dont la face inférieure (m) est usinée en corrélation avec la face (1) de la proéminence (k);
la surface extérieure (q) du couvercle supérieur extérieur (10) et la surface intérieure supérieure (p) du cylindre extérieur (6), sont de préférence usinées, afin de parvenir à l'alignement de l'ensemble formé par le cylindre intérieur (1), le couvercle supérieur du cylindre intérieur (7), le cylindre de la chambre de compensation (17), le couvercle supérieur extérieur (10), avec la face (1) de la proéminence (k) de la partie bas du couvercle inférieur extérieur (12);
le couvercle supérieur extérieur (10) a le bord annulaire (q) rigide avec le cylindre extérieur (6) dans la zone supérieure traitée (p) étant fixé axialement par la face (r) d'un emboutissage des bords (s) de l'extrémité supérieure du cylindre extérieur (6), l'emboutissage des bords de fermeture (s) étant permis d'être autorisé par le chanfrein (t) usiné dans le couvercle supérieur extérieur (10);
l'élément d'étanchéité coulissante (11) de la tige (5) a deux extensions, la supérieure (u) et
celle du bas (v) qui couvre le couvercle supérieur extérieur (10) étant fixés sur celui-ci;
l'étanchéité du couvercle supérieur extérieur (10) se fait par rapport au cylindre extérieur (6) par l'extension supérieure (u) du l'élément d'étanchéité coulissante (11) de la tige (5), qui,
vers son extrémité est préférable d'avoir une proéminence annulaire (w) avec une section pratique, qui se déforme à l'emboutissage (s) du cylindre extérieur, assurant la pression de contact nécessaire à l'étanchéité aux pressions supérieures;
l'ouverture (j) de l'élément d'étanchéité (11) est prévue de trois lèvres (x), (y), (z), qui délimite une chambre supérieure (k""") et une chambre inférieure (1"""), derrière la chambre inférieure (l""") il ya une canal annulaire (c') ou on introduit un ressort annulaire (15) en vue d'augmenter la force de serrage des lèvres (y), (z), le calibrage de la lèvre inférieure (z) étant réalisée par un chanfrein (d'), pour l'étanchement aux hautes pressions étant prévue un seconde canal (e'), ou on introduit un deuxième ressort annulaire (16);
le couvercle supérieure extérieur (10) est prévue dans la zone inférieure avec une épaule annulaire de centrage (f') qui positionne d'un manière radial le système de labyrinthes (9) le système de labyrinthes (9) est formé par un cylindre (17) avec des orifices (g) pour le passage du liquide et de certains disques (18) prévus avec les orifices de communication (g),
les disques (18) étant fixée sur l'extérieur et / ou à l'intérieur du cylindre (17), la fixation peut être soit rigide par pressage ou par soudure, soit par la forme, à la fixation par pressage les disques ayant un bordure (h') prévue avec certains orifices (i') ou canaux (j'), afin d'améliorer l'emboutissage, et pour la fixation par la forme, sur le cylindre (17) il ya des creux ou des canaux (k') où les proéminences (l') sont fixés élastiquement ou par pressage, de préférence inclinées dans la zone d'avant-terminal (m'), et dans le cas de plusieurs disques (18), deux ou
plus peuvent être couplés par des liaisons de raccordement (n') prévues avec d'orifices (o');
le couvercle supérieure du de cylindre intérieur (7) est prévue dans le canal (p') pour l'introduction du guidage avec un épaule (q') et un canal annulaire (r') où on introduit un anneau de sécurité (19) l'épaule (q') peut être placé soit à l'extrémité supérieure, soit à l'extrémité inférieure du couvercle supérieurs du cylindre intérieur (7);
il est équipé d'un tampon limiteur à la détente (20) avec les surfaces supérieure (s') et
inférieure (t') planes ou profilés, la section du tampon ayant une forme en corrélation avec la caractéristique élastique recherchée, le tampon étant mis sur le piston (4), autour de la tige de piston (5) ou sur un support annulaire (60), ou il est introduit dans un verre de tampon (22),
fixés sur la tige de piston (5) par un épaule (y'), ou par un anneau de sécurité (61) la hauteur du tampon (20) étant plus grande que la profondeur du verre de tampon, le tampon (20) placé sur le piston étant prévue avec une enveloppe limiteur (21) moins plus élevés que le tampon (20) de telle sorte que le tampon (20) peut sortir des deux côtés de l'enveloppe limiteur (21), le maintien de la position relative de l'enveloppe (21), par rapport au tampon (20), se fait soit par collage du tampon (20) sur l'enveloppe limiteur (21), ou par un canal (u') ou par plusieurs orifices (v') réalisés dans l'enveloppe (21) où le matériau de l'enveloppe (20) entre, soit le tampon et l'enveloppe sont fondés mono-corps;
le couvercle supérieurs du cylindre intérieur (7) et le piston (4) auront les faces de contact avec le tampon (w'), (x') horizontales ou coniques, inclinés vers le haut ou vers le bas, en corrélation avec la caractéristique élastique et la ventilation;
le piston (4) est prévue dans la zone cylindrique avec un ou plusieurs canaux de segment annulaires (z') où un ou plusieurs segments (23) sont introduits, avec la fente (a") couper comme un zigzag à bords droits, ayant une ou plusieurs échelons (b");
la fixation du piston (4) sur la tige de piston (5) se fait axialement dans la partie supérieure,
par un épaule (c") de la tige de piston (5), et dans la partie inférieure avec un écrou à collet de blocage (24) sur une rondelle plate (25) ou avec l'écrou commun (26), une rondelle Grower (27) et une rondelle plate (28) appliquées directement sur la face inférieure (d") du piston (4) ou sur une fraiseuse (e"), réalisé dans la face inférieure du piston (4), les écrous étant fixé sur un filet (f") à l'extrémité inférieure de la tige de piston (5), la fixation radiale du piston (4) sur la tige de piston (5) en étant fait à travers un trou (g") réalisée dans la zone centrale du piston;
à l'intérieur du piston il y a une découpage (a""") ou des trous (h") d'une forme convenable,
fermés par un couvercle (29), soutenue sur le fond du trou, ou sur un épaule (i");
les soupapes intérieures de remplissage à la détente (30) et à la compression (32) sont formés par un clapet courbé/ cylindrique (33), placé sur la face intérieure (v"), du cylindre intérieur (1) ou sur certaines proéminences (i"'), résultantes par l'addition de matériel ou par découpage de matériel (y"') sur / des surfaces d'emplacement (v"), le clapet (33), étant fixé par un rivet ou par un vis à tête profilée (34), son corps passant par un trou (k") réalisé dans la paroi du cylindre intérieur (1) et un trou (l") réalisée dans la clapet (33), afin d'éviter la rotation, on peut utiliser soit plusieurs rivets ou vis avec des têtes profilées (34) placés sur la génératrice du cylindre intérieur (1), ou dans un plan perpendiculaire sur l'axe radial du cylindre ou après les axes parallèles, soit rivets / vis ou manchons qui couvrent le rivet / vis, avec un section différente de celle ronde (carrée, rectangulaire ou une autre forme), le nombre et la forme des trous
(k"), (l") étant en corrélation avec le nombre et la forme de l'élément de fixation avec tête profilée (34);
le clapet (33) a un ou deux symétriques ou asymétriques bras (m"), (n"), leurs extrémités couvrant les orifices (j") réalisées dans le cylindre intérieur (1);
le clapet (33) peut être renforcée par un ou plusieurs élastiques identiques ou différents clapets supplémentaires (35), situés à l'intérieur, sur le clapet (33), le clapet/s (33) / (35) étant fixé/s sur la paroi intérieur du cylindre intérieur (1), soit directement par la tête profilée (o") du rivet / rivets à tête profilée (34), ou de la vis / vis à tête profilée (34), lorsque leur face d'appui (p"), sur le clapet a la largeur et la forme des clapets, soit à travers le manchon d'appui sur la tête intérieure (36), avec la face (q"), vers le clapet forme en corrélation avec la largeur et la forme du clapet et la face (r"), vers la tête (s") du rivet / vis à tête plane enfouit (37) corrélées ou non avec le manchon (42), avec leurs face (plane, conique) pour le rivet / vis avec la tête plane enfouit (37), le trou (y") ayant le côté (a"'), vers la tête (t") de forme conique, en corrélation avec la forme de la tête (t"), du rivet / vis avec la tête plane enfouit (37);
a l'extérieur le rivet / la vis (34) / (27) sont fixés avec une tête extérieure (t"), respectivement avec un écrou autobloquant, (38), ou un écrou simple (39) et la rondelle Grower (40), la tête extérieure (t"), du rivet / vis (34) / (37), l'écrou (38), la rondelle Grower (40), et l'écrou (39),
étant placés directement sur le cylindre intérieur (1), mais de préférence sur une surface plane (u"), dans le cylindre (1), ou sur un manchon d'appui (41) qui a la face (w") en contact avec la tête extérieure du rivet / vis (34) / (37), ou avec l'écrou (38)/ la rondelle Grower (40), et
l'écrou plane (39), et la face cylindrique (x"), en contact avec le cylindre intérieur (1), avec le diamètre corrélé à celle du cylindre intérieur (1), les trous (y") / (z"), réalisés dans les manchons (36) / (41) / (42), pour le passage du corps de vis /rivet / (34) / (37), ayant la forme en corrélation avec la forme du rivet / vis (34) / (37), et le trou (k") du cylindre (1), et le trou (z") du manchon d'appui (41), étant coniques dans la zone terminale (a'") vers la tête du rivet;
les soupapes de remplissage extérieures (31), avec la construction similaire aux soupapes intérieures de remplissage à la détente (30) et à la compression (32), la différence étant qu'aux celles extérieures (31) le clapet/les clapets courbes/cylindriques (33), (35) est/sont placé/s sur la face intérieure cylindrique (b"'), ou sur certaines proéminences (i"'), qui résultent par l'addition ou le découpage de matériel (y'") sur / des surfaces d'appui (b'"), sur le corps (c'") d'un corps annulaire (43), ses épaules annulaires (d"'), couvrant une ou plusieurs orifices (j") et étant fixés et étanchés à l'extérieur du cylindre intérieur (1), les faces intérieures du corps (c") et des épaules annulaires (d'") du corps annulaire (43) formant avec la surface extérieure (g'") du cylindre intérieur (1), une chambre torique (e'"), dans le corps (c'") du corps annulaire (43), vers les extrémités des bras (m"), (n") du clapet courbe / cylindrique (33), (35), certaines orifices ou de fentes (f"') sont effectuées, la fixation du clapet courbe / cylindrique (33), (35), se fait par le rivet / vis (34), (37), son corps passant à travers un trou (h'") réalise dans le corps (c"') du corps annulaire (43) et le trou (l") réalisé dans le clapet (33), (35);
les clapets courbes / cylindriques (33) (35), ont, dans leurs bras (m"), (n"), des trous (j'"), raccordés (n"'), au niveau des terminaisons, des trous qui peuvent être symétriques ou asymétriques et qui forment un ou plusieurs bras (k"') qui lient la zone de fixation (l'"), avec la zone d'étanchéité des clapets (m"'), et une ou plusieurs languettes (o"'), qui commencent de préférence à partir de la tête profilée (o"), du rivet / vis (34), ou dessous le manchon d'appui de la tête intérieure (36), pour renforcer les languettes (o"'), peuvent être réunies au sommet, ou à l'intérieur par un joint (p'") d'une forme convenable, les languettes (o"'), en étant bordurées (q"'), aux extrémités, afin de coulisser sur le clapet, les languettes des clapets (33), (35), étant en corrélation, afin d'appuyer sur la zone d'étanchéité (m'"), les clapets (33), (35), peuvent être identiques, mais dans une position de rotation;
une couche d'étain (44), ou un autre matériau modelable est appliquée sur toute la surface d'appui des soupapes;
les trous/fentes de calibrage (a'), (b'), peut être effectuée directement ou par étapes, selon la technologie utilisée;
dans le cylindre intérieur (1), sur les trous technologique (r"'), ou sur les trous calibrés par erreur (t"'), il se trouve un des trous calibrés (s"'), réalisées dans le corps annulaire (45), il corriger le réglage et quand l'obstruction des orifices technologiques (r'"), ou des orifices erronée (t"") est souhaitée, les orifices de calibrage (s"') sont situées déplacés par rapport aux orifices (r"')/ (t'"), ou les' orifices(s"') manquent;
les surfaces (b"') du corps annulaire (43) et les proéminences (i"') réalisées dans ou sur le cylindre intérieur (1), respectivement dans / sur le corps annulaire (43), ont des formes convenables courbes/ cylindriques / planes, en corrélation avec la forme des clapets (33).

2. Amortisseur auto-réglable à caractéristique dissipative autocorrective destiné aux véhicules, avec des soupapes de remplissage courbés, cylindriques et planes, selon la première revendication, **caractérisé en ce que**:
pour le remplissage il utilise un ou plusieurs soupapes (46) de remplissage à la détente et/ou les compression sur le manchon intérieur, formée par le clapet symétrique ou asymétrique (33) courbe/cylindrique/plane, situe juste sur la face intérieure courbe/ cylindrique /plane (u"'), du -manchon (47) ou sur les proéminences (i"') courbes/cylindriques/planes, appliqués sur la surface intérieure (u'"), ou sur les empreintes courbes/ cylindriques /planes (i"'),
résultantes par le découpage de certains canaux (y'") dans la surface intérieure (u"'), du - manchon (47) et une ou plusieurs clapets courbes / cylindriques / planes, supplémentaires symétriques ou asymétriques (35), situés sur le clapet (33);
le -manchon (47) est fixe rigidement et étanchement à l'intérieur du cylindre intérieur (1), ou à l'intérieur du corps annulaire (43), le manchon intérieur (47) ayant la face extérieure (v"') usinées en corrélation avec la face intérieure du cylindre intérieur (1), ou (b"') du corps annulaire(43);
la fixation des clapets (33), (35) se fait par le rivet / vis (34) / (37), qui passe par le trou (1"), des clapets (33), (35) et le canal (w"'), du manchon intérieur (47);
le rivet / vis (34) / (37), soit a des terminaisons (t"), (s"), enterrées dans le -manchon (47) afin d'éviter le dépassement du diamètre intérieur du cylindre intérieur (1), ou du corps annulaire (43),soit elle passe par un trou (k"), réalisé dans le cylindre intérieur (1), respectivement (h"), effectués dans le corps annulaire (43), étant fixées sur leurs extérieur en utilisant l'une des procédures précédentes, utilisés pour les soupapes intérieurs (30), (32), ou aux soupapes extérieurs (31);
pour l'accès du fluide de travail dans le manchon intérieur (47), sous les bras (m"), (n"), des clapets (33), il sont réalises certaines orifices (x"'), correspondant aux orifices (j") du cylindre intérieur (1), respectivement (f"'), dans le corps annulaire (43);
lorsque la position de la tête du vis / rivet (34) /(37), se fait directement sur la face extérieure (v"'), du -manchon intérieur (47), ou à l'extérieur du cylindre intérieur (1), ou sur le corps annulaire (43), en fonction de l'élément de fixation, au bout des trous (w"')/(k") / (h"), pour le passage du rivet / vis (34) / (37) on fait un surface planée (u"), ou un trou conique (a"');
lorsque le rivet / vis (34) / (37), passe à travers le cylindre intérieur (1), ou le corps annulaire (43), le -manchon intérieur (47) peut être remplacé par un ou plusieurs segments annulaire contenant des éléments de fixation et des soupapes;
les surfaces (b"')/(u"'), du corps annulaire (43) / -manchon intérieur (47) et les proéminences (i"') peuvent avoir les surfaces courbes / cylindriques/planes, les clapets des soupapes ayant la forme en corrélation avec ceux-ci.

3. Amortisseur auto-réglable à caractéristique dissipative autocorrective destiné aux véhicules, avec des soupapes de remplissage courbés, cylindriques et planes, selon la première ou la IIème revendication, **caractérisé en ce que**:
pour le remplissage à la détente et / ou à la compression, il utilise un ou plusieurs soupapes de remplissage intérieure (30) / (32) situées sur le cylindre intérieur (1), et / ou une ou plusieurs soupapes de remplissage sur le manchon intérieur (46) et / ou un ou plusieurs soupapes de remplissage extérieures (31), formées par le symétrique ou asymétrique clapet à trois bras (48) et éventuellement un ou plusieurs autres symétrique ou asymétrique clapets à trois bras (49) situés au dessus des clapets (48);
le clapet (48) est situé aux soupapes intérieurs (30), (32) sur la face intérieure (v") du cylindre intérieur (1), aux soupapes extérieurs (31) sur la face intérieure (b"') du corps annulaire (43), respectivement aux soupapes (46), sur le manchon intérieur, sur la face intérieure (u"'), du manchon intérieur (47) ou sur les empreintes (i"'), résultantes à la suite de l'addition ou du découpage de matériel;
les clapets (48), (49), sont fixés par le rivet / vis (34), (37), qui passe à travers du trou (l"), des clapets (48), (49), et les trous (k") du cylindre intérieur (1), aux soupapes intérieurs (30), (32), à travers le trou (h"'), aux soupapes extérieures (31) et à travers le trou (w'"), éventuellement (k"), aux soupapes (46) sur le manchon intérieur;
les orifices de remplissage (j"), du cylindre intérieur (1), aux soupapes de remplissage intérieures (30), (32), respectivement les orifices de remplissage (f"') du corps annulaire (43), aux soupapes extérieures de remplissage (31), respectivement les orifices de remplissage (x "'), du -manchon intérieur (47), aux soupapes (46) sur le -manchon intérieur, sont placés d'un cote et de 1 autre des trous (k") de fixation des clapets (48) / (49) symétriquement ou asymétriquement;
dans les bras (m"), (n") des clapets (48), (49), on fait certains canaux (j"'), formant les bras (k"') et, si nécessaire, certaines languettes (o'"), qui sont prévues au bout d'un rebord (q'") les languettes (o"'), étant profilée de telle manière à être situé sur la zone d étanchement (m"'), du clapet (48), pour la solution avec un clapet, respectivement le dernière clapet(49), pour la solution avec plusieurs clapets.
les surfaces (b"')/(u"'), du corps annulaire (43) / manchon intérieur (47) et les proéminences (i"') peuvent avoir les surfaces courbes / cylindriques / forme plane, les clapets des soupapes ayant la forme en corrélation avec ceux-ci.

4. Amortisseur auto-réglable à caractéristique dissipative autocorrective destiné aux véhicules, avec des soupapes de remplissage courbés, cylindriques et planes, selon la première à la 3ième revendication, **caractérisé en ce que**:
pour le remplissage à la détente et / ou au compression, il utilise une ou plusieurs soupapes de remplissage intérieures (30) / (32) situés sur le cylindre intérieur (1), et / ou une ou plusieurs soupapes (46) de remplissage sur le manchon intérieur et / ou une ou plusieurs soupapes de remplissage extérieures (31), formées par le symétrique ou asymétrique clapet à deux bras (33) et éventuellement un ou plusieurs autres symétrique ou asymétriques clapets à deux bras (35), sur lesquels il y a un clapet ressort (50), avec un ou deux bras symétriques ou asymétriques, qui a une zone de fixation (l"'), qui se poursuit avec deux languettes (o"'), terminés par un rebord (q"') qui se trouve sur la le zone d'étanchement (m"'), des clapets (33), pour la version avec un clapet, respectivement sur le dernière clapet (35), pour la version avec plusieurs clapets;
le rivet / la vis (34) / (37), passe à travers les trous (l") des clapets (33), (35), les trous (k") du cylindre intérieur (1), aux clapets intérieurs (30), (32), à travers le trou (h"') aux soupapes extérieurs (31), et à travers le trou (w"') aux soupapes sur le manchon intérieur (46) et il ramasse entre la face (p") de la tête profilée (o"), ou le face (q") du manchon de la tête intérieure (36) et la face intérieure (v"), du cylindre intérieure (1), aux soupapes intérieurs (30), (32), respectivement la face (b"') du corps annulaire (43), aux soupapes extérieurs (31), respectivement la face (u"')/(v"), du manchon intérieur (47) / du cylindre intérieur (1), aux soupapes (46) sur le manchon intérieur;
la mise du clapet (33) peut être effectué directement sur la surface intérieure courbe/ cylindrique (v") / (b"')/(u"'), du cylindre intérieur (1) / du corps annulaires(43) / du manchon intérieur (47), aux soupapes intérieurs (30) / (L2), les soupapes extérieures (31) / les soupapes (46), sur le manchon intérieur , ou sur les proéminences(i"') appliqués sur la surface intérieure, ou à la suite de la découpage de matériel (y"'), de la surface intérieure courbe/ cylindrique (v") / (b"')/(u"'), du cylindre intérieur (1) / du corps annulaire(43) / du manchon intérieur (47), aux soupapes intérieures (30), (32) / les soupapes extérieures (31) / les soupapes (46) sur le manchon intérieur;
les surfaces (b"')/(u"'), du corps annulaire (43) / manchon intérieur (47) et les proéminences (i"') peuvent avoir les surfaces courbes / cylindriques / forme plane et les clapets auront les surfaces en corrélation avec ceux-ci.

5. Amortisseur auto-réglable à caractéristique dissipative autocorrective destiné aux véhicules, avec des soupapes de remplissage courbés, cylindriques et planes selon l'une des revendications 1 à 4, **caractérisé en ce que**:
pour le remplissage à la détente et / ou de compression, il utilise un ou plusieurs intérieures soupapes de remplissage (30/32) situées sur le cylindre intérieure (1), et / ou une ou plusieurs soupapes (46) de remplissage sur le manchon intérieur et / ou un ou plusieurs extérieures soupapes de remplissage (31), formées par le clapet rigide ou semi-rigide /élastique (51) / (33), qui est appuyé sur les orifices pénétration d'huile, par une clapet ressort (50);
les clapets (51) / (33), (50) ont une zone de guidage (l"), continuée par deux bras (m"), (n"), dans le centre de la zone de guidage (1") en faisant un ou plusieurs trous (z"') dans les clapets (51) / (33), respectivement (a"") dans le clapet (50), par lequel passe le rivet / la vis (53), avec la tête et le corps profilés;
quand on utilise un seul rivet / vis (53), le corps de celui-ci dans la zone de guidage (c""), et les trous (z"'), (a""), ont une forme non-annulaire (carrée, rectangulaire , de forme ovale, en forme d'étoile) en vue d'empêcher la rotation, lorsqu'on utilise plusieurs rivets / vis (53), la zone de guidage (c""), les trous (z"'), respectivement (a""), peuvent être annulaires;
les dimensions des trous (z'"), (a""), sont de telle manière qu'on assuraient le coulissement des clapets (51) / (33), (50) sur la zone de guidage (c""), du rivet / vis (53), et la zone de guidage (c""), du rivet / vis (53), est plus longue que la somme des grosseurs des clapets (51) / (33), (50)
à la fin de la zone le rivet / vis (53), a un épaule (b""), avec lequel il est fixé dans le trou (k"), du cylindre intérieure (1), aux soupapes intérieures (30), (32), respectivement dans le trou (h"'), du corps annulaire (43), aux soupapes extérieures (31), respectivement dans le trou (w"'), du manchon intérieur (47), aux soupapes sur le manchon intérieur;
pour faciliter et lorsque on souhaite que le clapet (51) fonctionnait de manière élastique, dans les bras (m"), (n"), on fait des trous conformément à la forme désirée;
la fixation du rivet / vis (53), à l'extérieur, on l'a fait par rivetage / écrou de la même manière qu'aux solutions antérieures de soupapes intérieures (30), (32), extérieures (31), ou (46) sur le manchon intérieur;
l'emplacement du clapet (51) / (33) peut être fait directement sur la surface intérieure courbe/ cylindrique (v") / (b"')/(u"'), du cylindre intérieur (1) / du corps annulaire (43) / du manchon intérieur (47), aux soupapes intérieures (30), (32) / aux soupapes extérieures (31) / les soupapes (46), sur le manchon intérieur , ou sur les proéminences (i"") obtenues par le détachement de matériel (y"'), de la surface intérieure courbe/ cylindrique (v") / (b"')/(u"'), du cylindre intérieur (1)/ du corps annulaire intérieur (43) / du manchon intérieur (47), aux soupapes intérieures (30), (32) / les soupapes extérieures (31) / les soupapes (46) sur le manchon intérieur;
les surfaces (b"')/(u"'), du corps annulaire (43) / du manchon intérieur (47) et les proéminences (i"') peuvent avoir les surfaces courbées / cylindriques /de forme plane , les clapets des soupapes ayant la forme en corrélation avec ceux-ci.

6. Amortisseur auto-réglable à caractéristique dissipative autocorrective destiné aux véhicules, avec des soupapes de remplissage courbés, cylindriques et planes, selon l'une des revendications 1 à 5, **caractérisé en ce que**:
pour le remplissage à la détente et / ou compression, il utilise un ou plusieurs soupapes intérieures de remplissage (30) / (32) situées sur le cylindre intérieur (1), et / ou une ou
plusieurs soupapes (46) de remplissage sur le manchon intérieur et / ou un ou plusieurs soupapes extérieures de remplissage (31), formées par la clapet rigide ou semi-rigide (51) / élastique (33), qui est appuyé sur les orifices par lesquels pénétré l'huile, par pièce à presser (54), actionné par un ressort hélicoïdal (55), qui est appuyé sur la tête profilée (o"), du rivet / vis (56), la pièce à presser (54), étant pourvue dans la zone centrale avec un ou plusieurs trous (d""), pour coulisser sur la zone (c"") du rivet / vis (56);
le clapet (51) / (33), a une zone de guidage (l"), continuée par deux bras (m"), (n"), dans le centre de la zone de guidage (l"), du clapet (51) / (33), en faisant un ou plusieurs trous (z"'), par lesquels passe le rivet / vis (56) avec la tête et le corps profilés;
quand on utilise un seul rivet / vis (56), le corps de celui-ci dans la zone de guidage (c""), et les trous (z"'), (d""), ont une forme non-annulaire (carrée, rectangulaire, ovales, en forme d'étoile) dans le but d'empêcher la rotation, et lorsque on utilise plus de rivets / vis (56), la zone de guidage (c""), les trous (z"'), respectivement (d""), peuvent être annulaires;
le nombre des ressorts hélicoïdales (55), et la longueur de la zone de guidage (c""), sont en corrélation avec le nombre de rivets / vis (56) et la caractéristique élastique désirée, la forme et les dimensions des trous (z"'), (d""), en étant faites de la manière de pouvoir assurer le coulissement du clapet (51) / (33) et de la pièce à presser (54) sur la zone de guidage (c""), du rivet / vis (56);
à la fin de la zone le rivet / vis (56), a un épaule (b""), avec lequel il est fixé dans le trou (k"), du cylindre intérieure (1), aux soupapes intérieures (30), (32), respectivement dans le trou (h"'), du corps annulaire (43), aux soupapes extérieures (31), respectivement dans le trou (w'"), du manchon intérieur (47), aux soupapes (46) sur le manchon intérieur;
la zone de guidage (c""), du rivet / vis (56), est plus longue que la somme des grosseurs du clapet (51) / (33), de la pièce à presser (54) et les spires du ressort (55);
la fixation du rivet / vis (56), à l'extérieur, se fait par rivetage / écrou de la même manière que les solutions antérieures pour les soupapes intérieurs (30), (32), extérieurs (31), ou (46) sur le manchon intérieur;
la pièce à presser (54) peut manquer, et dans ce cas il est recommandé que la surface d'appuy du ressort (55), sur le clapet (51) / (33), soit mise en forme conformément;
pour faciliter et lorsque on souhaite que le clapet (51) fonctionnait de manière élastique, dans les bras (m"), (n"), on fait des trous conformément à la forme désirée;
l'emplacement du clapet (51) / (33) peut être fait directement sur la surface intérieure courbe/ cylindrique (v") / (b"')/(u"'), du cylindre intérieur (1) / du corps annulaire (43) / du manchon intérieur (47), aux soupapes intérieures (30), (22) / aux soupapes extérieures (31) / les soupapes (46) sur le manchon intérieur , ou sur les proéminences (i"') appliquées sur la surface intérieure ou sur les proéminences (i'") obtenues par le détachement de matériel (y"'), de la surface intérieure courbe/ cylindrique (v") / (b"')/(u"'), du cylindre intérieur (1) /corps annulaire intérieur (43) / du manchon intérieur (47), aux soupapes intérieures (30), (32) / les soupapes extérieures (31) / les soupapes (46) sur le manchon intérieur;
les surfaces (b"')/(u"'), du corps annulaire (43) / du manchon intérieur (47) et les proéminences (i"') peuvent avoir les surfaces courbées / cylindriques /de forme plane , les clapets des soupapes ayant la forme en corrélation avec ceux-ci.

7. Amortisseur auto-réglable à caractéristique dissipative autocorrective destiné aux véhicules, avec des soupapes de remplissage courbés, cylindriques et planes, selon l'une des revendications 1 à 6, **caractérisé en ce que**:
il a une étanchéité coulissante de la tige (5), réalisé par un joint d'étanchéité (57), monté dans une dégagement (e""), du couvercle extérieur supérieur (10), l'étanchéité du couvercle extérieur supérieur (10), en étant faite par rapport au cylindre extérieur (6), par un joint d'étanchéité (58), type O, introduit dans chanfrein annulaire (t), réalisé dans le couvercle supérieur extérieur (10) et comprimé par la bordure de fermeture (s), du cylindre extérieur (6);
l'ouverture (j) de l'élément d'étanchéité (57) a trois lèvres (x), (y), (z) qui font la délimitation entre deux chambres (k"""), (l"""), derrière la chambre basse (l"") il y a un canal annulaire (c') où on introduit un ressort annulaire (15) et un deuxième canal (c') où on introduit un deuxième ressort annulaire (16), le calibrage de la lèvre inférieure (z), en étant réalisé par un chanfrein (d');
l'endurance du joint d'étanchéité (57) est assurée par une armature intérieure (59);
sur la face latérale et les faces frontales il y a certaines proéminences (f"") annulaires à section convenable;
le dégagement (e"") peut être appliqué à la partie supérieure ou inférieure du couvercle supérieure extérieur (10), de sorte que l'épaule (g"") de limitation annulaire de la garniture (57) peut être placé haut ou bas ;
le dégagement (e"") a certains clapets annulaires (m""") où on monte/étanche les proéminences (f"").

8. Amortisseur auto-réglable à caractéristique dissipative autocorrective destiné aux véhicules, avec des soupapes de remplissage courbés, cylindriques et planes, selon l'une des revendications 1 à 7, **caractérisé en ce que**:
la partie inférieure (w') de couvercle supérieur du cylindre intérieur (7) se prolonge par une extension annulaire (h"") avec un diamètre inférieur par rapport à celui du cylindre intérieur (1);
dans la face supérieure (x') du piston (4) on fait un dégagement annulaire(i""), dans lequel le tampon limiteur à la détente entre totalement ou partiellement (20), le diamètre de l'emboutissage (i"") étant supérieure à celui de l'extension (h"");

9. Amortisseur auto-réglable à caractéristique dissipative autocorrective destiné aux véhicules, avec des soupapes de remplissage courbés, cylindriques et planes , selon l'une des revendications 1 à 8, **caractérisé en ce que**:
le couvercle supérieur extérieur (10) est prévu dans la zone centrale avec une ouverture annulaire (e) réglé coulissement avec la tige de piston (5), ou un dégagement (p'), où on introduit un guidage supplémentaire (8), réglé coulissement avec la tige de piston (5), le guidage en étant limité axialement par un épaule (q') et éventuellement par l'anneau élastique (19) fixé dans un canal (r');
le couvercle supérieur extérieur (10), a dans la partie supérieure un dégagement centrale (e""), qui a certains canaux annulaires (m"""), dans le dégagement (e""), on introduit un joint d'étanchement (57), prévu avec des proéminences (f"") annulaires à section convenable, qui sont fixées / étanchées dans le canaux (m"""), le dégagement étant limitée axialement par l'épaule (g"");
la fixation du couvercle supérieure extérieur supérieure (10) vis-à -vis du cylindre extérieur (6), est radialement fait par l'épaule (q), placé de façon rigide sur la zone usinée (p), du cylindre extérieur (6) et axialement par l'emboutissage des bords (s), du cylindre extérieur (6);
la fixation du couvercle supérieur extérieur (10) vis-à-vis du cylindre intérieur (1), est fait par l'épaule (f');
l'étanchéité du couvercle supérieure extérieur (10), vis-à-vis du cylindre extérieur (6), est réalisé par un joint d'étanchement annulaire (58), placé dans le chanfrein annulaire (t);
une enceinte (i""), fait la collecte de l'huile gratté par le joint d'étanchéité, qui est renvoyé dans la chambre de réservoir (d), à travers un orifice (k"").
pour la réduction de poids et pour l'économie de matériel, sur la surface latérale du couvercle supérieure extérieur (10), sont prévus des fraisages (o"").

10. Amortisseur auto-réglable à caractéristique dissipative autocorrective destiné aux véhicules, avec des soupapes de remplissage courbés, cylindriques et planes, selon l'une des revendications 1 à 9, **caractérisé en ce que**:
le dégagement centrale (e""), du couvercle supérieure extérieur (10), est augmenté et reçoit un couvercle (52), avec le joint d'étanchement (11) coulissante de la tige de piston et avec une extension supérieure (u) du joint jusqu'au bout du couvercle supérieure extérieur (10), l'extension (u) ayant une proéminence annulaire (w);
la fixation axiale du couvercle supérieur extérieur (10) est faite par l'emboutissage des bords (s), du cylindre extérieur (6);
le joint d'étanchement a tous les éléments définis précédemment et en plus il a une langue annulaire (l"), qui est pris en charge sur une proéminence (m""), du couvercle supérieure extérieur (10), en réalisant la enceinte (n""), qui communique avec la chambre réservoir (d), à travers le trou d'évacuation (k""), ce qui empêche la pénétration de l'huile de la chambre réservoir (d) dans l'enceinte (n""), mais rendre possible l'évacuation de l'huile gratté, dans la chambre réservoir (d);
pour la réduction de poids et pour l'économie de matériel, sur la surface latérale du couvercle supérieure extérieur (10), sont prévus des fraisages (o"").

11. Amortisseur auto-réglable à caractéristique dissipative autocorrective destiné aux véhicules, avec des soupapes de remplissage courbés, cylindriques et planes, selon l'une des revendications 1 à 10, **caractérisé en ce que**:
le cylindre extérieur (6) est fermé dans la zone inférieure par un couvercle inférieur extérieure (12), qui a une proéminence à l'intérieur, dans la zone inférieure (k) dont la face (l) est usinée plane, conique ou sphérique, pour l'emplacement -le centrage du cylindre intérieur (1), dont la face inférieure (m) est usinée en corrélation avec la face (1) de la proéminence (k), la face inférieure (m) du cylindre intérieur (1), et / ou de la face (1) de la proéminence (k), sont recouverts d'un matériau facilement déformable (13).

12. Amortisseur auto-réglable à caractéristique dissipative autocorrective destiné aux véhicules, avec des soupapes de remplissage courbés, cylindriques et planes, selon l'une des revendications 1 à 11, **caractérisé en ce que**:
il a une soupape plane supérieure de remplissage à la compression (62), formé par un clapet annulaire (63), appuyé sur la face inférieure (w'), du couvercle supérieur du cylindre intérieur (7), ou sur certaines proéminences (i'"), par un ressort hélicoïdal cylindrique ou conique (64), placé sur la face intérieur (r""), d'une verre de tampon (65), fixée entre la couvercle supérieur du cylindre intérieur (7) et le cylindre intérieur (1);
les proéminences (i'"), entourent les orifices d'alimentation (s""),en formant une ou plusieurs enceintes (t""), reliés entre eux par un ou plusieurs canaux annulaires (t""');
les trous (s"") à partir de la face inférieure (w') du couvercle supérieur du cylindre intérieur (7), communiquent avec les orifices / fraisages (i) effectués dans le collet (f) du couvercle supérieur du cylindre intérieur (7);
la verre de tampon (65) est fixée sur le cylindre intérieure (1), soit par pressage/frettage, amélioré par certains petits canaux annulaires (p"""), appliqués sur les faces des pièces fixées, soit par un épaule annulaire (u""), continu ou discontinu, réalisé dans le cylindre intérieur (1), situé sur un chanfrein (y""') du couvercle supérieur du cylindre intérieur (7), soit par un anneau de fixation (66), introduit dans un canal (z""') du cylindre intérieur (1), soit par des proéminences (j""'), qui assurent la fixation dans un canal (k""'), fait dans le couvercle supérieur du cylindre intérieur (7), soit par une ou plusieurs combinaisons de ces éléments;
il est recommandé que la verre de tampon (65) soit mise sur une épaule annulaire (v"") du couvercle supérieur du cylindre intérieur (7), placé au-dessus de la face inférieure (w') du couvercle supérieur du cylindre supérieur intérieur (7);
dans la jupe (w"") de la verre de tampon (65) il sont prévues soit des découpages (x"") intérieures, soit de découpages (y""), qui percent la jupe, soit des découpages extérieures (z""), (a""'), les découpages en étant faits sur toute la hauteur de la verre de tampon (65), ou elles sont plus courtes;
un canal annulaire (c""'), fait dans la face (b""'), vers l'extérieur, relie les canaux/fentes (x""), (y""), (z""), (a""');
aux versions de découpage (x""), (y""), qui ne percent pas la face (b""'), le canal (c""") est obligatoire;
aux versions avec les canaux (a""') qui ne sont pas appliqués sur toute la longueur de la verre de tampon (65), la jupe (w"") reste intact dans la zone d'emplacement sur le couvercle supérieur du cylindre intérieur (7), en formant un collet continu (d""');

13. Amortisseur auto-réglable à caractéristique dissipative autocorrective destiné aux véhicules, avec des soupapes de remplissage courbés, cylindriques et planes, selon l'une des revendications 1 à 12, **caractérisé en ce que**:
la soupape supérieure plane (62), est fermée par un clapet ressort (67), avec des pieds élastiques (e""'), droites ou courbées, cintrés_par rapport au plan du clapet, à l'extrémité inférieure les pieds (e""'), ont un rebord (f""'), un raccordement (g""'), en assurant l'élimination des concentrateurs dans la zone de fixation des pieds sur le disque (h""'), du clapet (67), et une découpage centrale (i""'), dans le disque (h""'), assure le passage de la tige de piston (5);
un clapet de disque (63), mis sur le clapet ressort (67), augmente l'étanchement et la résistance;
lorsqu' on utilise un clapet disque (63) le clapet ressort (67) peut être utilisé inversé (69) dans le but d'augmenter la sensibilité de la soupape.

14. Amortisseur auto-réglable à caractéristique dissipative autocorrective destiné aux véhicules, avec des soupapes de remplissage courbés, cylindriques et planes, selon l'une des revendications, 1 à 13, **caractérisé en ce que**:
il utilise un ou plusieurs soupapes de remplissage (68) sur le manchon fondé, composé par le manchon (74), qui est fondé par de matériaux facilement fusible ou injectés à partir du matériel plastique résistante, à l'intérieur du cylindre intérieur (1), ou à l'intérieur du corps annulaire (43), le manchon (74) contenant des orifices de remplissage (m'''), des trous (w''') en vue d'assurer le passage du rivet / vis, pour la fixation des soupapes et quelques proéminences extérieures (1""');
les clapets courbes/ cylindriques/ planes (33), (35), sont situés soit directement sur la face intérieure courbe / cylindrique planes (u'''), du manchon (74), soit sur les empreintes (i''') courbes / cylindrique /planes, faites sur la face intérieure du manchon (74);
les clapets courbes/ cylindriques/ planes des soupapes (33), (35), sont fixés en utilisant les procédures précédentes, dont on a parlé aux soupapes (46) sur le manchon intérieur ou aux soupapes extérieures (31);
le manchon peut être continué ou segmenté en parties qui comprennent les zones de remplissage, étanchement, fixation et des proéminences extérieures (1""'). étendues de l'intérieur du cylindre (1) / du manchon (43), à travers les orifices de remplissage (j") / (f").augmentées;

15. Amortisseur auto-réglable à caractéristique dissipative autocorrective destiné aux véhicules, avec des soupapes de remplissage courbés, cylindriques et planes, selon l'une des revendications 1 à 14, **caractérisé en ce que**:
pour le remplissage à la détente il utilise une soupape de remplissage inférieure plane (70), formée par le couvercle bas du cylindre intérieur (71), sur sa face supérieure plane (n""'), ou sur certaines proéminences (i'''), en mettant le clapet élastique (72), fixé sur le couvercle bas du cylindre intérieur (71), par un rivet / vis (34) / (37), en passant par le trou (o""'), du clapet (72), et à travers le trou (p""'), du couvercle (71);
entre la tête (s"), du rivet / vis à tête plane (37), et la clapet (63) et la partie inférieure du corps (71) et la tête inférieure (t") du rivet (34) /du vis (37) / de l'écrou (38) / (39), on met un rondelle plane (73);
dans la zone inférieure, le couvercle (71) a une ouverture (q""") qui communique avec le compartiment de compression (c) par des orifices (r""") et avec la chambre de réservoir (d) par de orifices / fraisages (s""'), effectués dans la partie inférieure du couvercle (71);
les proéminences (i'''), qui entourent les trous d'alimentation (r""'), forment un ou plusieurs enceintes (t""), reliées à un ou plusieurs canaux annulaires (t""'), la dimension des enceintes (t""), étant en corrélation avec la résistance des clapets;
la fixation du couvercle bas intérieur (71) est faite vis-à-vis du cylindre intérieur (1) par un épaule (u""') et vis-à-vis de la proéminence (k) du couvercle bas extérieur (12), par une zone (v""') ayant la forme en corrélation avec (k).

16. Amortisseur auto-réglable à caractéristique dissipative autocorrective destiné aux véhicules, avec des soupapes de remplissage courbés, cylindriques et planes, selon l'une des revendications 1 à 14, **caractérisé en ce que**:
le couvercle supérieure du cylindre intérieur (7), a le collet (f), avec un diamètre inférieur au diamètre intérieur du cylindre extérieur (6), de sorte qu'il n'y ait aucun contact entre les deux parties, respectivement le couvercle supérieure du cylindre intérieur (7) et le cylindre extérieur (6), entre eux en étant une enceinte annulaire (w""'); le collet (f), ayant seulement le rôle d'atténuer le mouvement du liquide dans la chambre de réservoir (d);
un épaule plein ou annulaire (x""'), sur la face supérieure du couvercle supérieur du cylindre intérieur (7), assure le centrage du cylindre (17) par rapport au couvercle supérieur du cylindre intérieur (7);

17. Amortisseur auto-réglable à caractéristique dissipative autocorrective destiné aux véhicules, avec des soupapes de remplissage courbés, cylindriques et planes, selon l'une des revendications 1 à 16, **caractérisé en ce que**:
dans la zone bas le cylindre intérieur (1) il est fermé par le couvercle inférieur du cylindre intérieur (78), par rapport auquel on fait le centrage par l'épaule (u""'), le couvercle (78), étant pris en charge et centré avec la face (v""'), sur l'épaule intérieur (k), du couvercle inferieur extérieur (12) du cylindre extérieur (6).

18. Amortisseur auto-réglable à caractéristique dissipative autocorrective destiné aux véhicules, avec des soupapes de remplissage courbés, cylindriques et planes, selon l'une des revendications 1 à 17, **caractérisé en ce que**:
le cylindre intérieur (1), est allongée dans le partie supérieure au dessus du couvercle du cylindre intérieur (7), au niveau du couvercle supérieur extérieur (10), étant fixe / centré dans l'épaule de celui-ci (f'), en prenant en charge aussi la fonction du cylindre (17), de formation de la chambre de compensation (h), pour cet effet, il contient des orifices (g), pour la circulation du liquide et quelques disques (18) avec des orifices de communication (g');
les disques (18) sont fixés à l'extérieur et / ou à l'extérieur du cylindre (1), soit de façon rigide par pressage ou de soudure, soit par la forme, pour la fixation par pressage en étant recommandé que les disques soient prévus avec un collet (h') avec certains orifices (i'), ou des canaux (j'), afin de favoriser la l'emboutissage, pour fixer par la forme, sur le cylindre (1) il est prévu des canaux ou des cavités (k'), où les proéminences sont fixées d'un façon élastique ou par pressage (l') de préférence inclinée dans la zone de avant terminale (m'),
dans le cas de plusieurs disques (18) ceux-ci peuvent être couplés deux ou plusieurs par de ponts (n') qui auront des orifices (o') pour le passage de l'huile;
le couvercle supérieur du cylindre intérieur (7) a son diamètre en corrélation avec le diamètre intérieur du cylindre intérieur (1), afin d'entrer presse dans celui-ci, la fixation du couvercle supérieur du cylindre intérieur (7) dans le cylindre intérieur (1), en étant fait soit par pressage/frettage favorisés par de certains canaux annulaires (s"") dans le couvercle supérieur du cylindre intérieur (7) et du cylindre intérieur (1), soit par une ou plusieurs épaules annulaires, (u"") continu ou discontinu, réalisés dans le cylindre intérieur (1), situés sur un chanfrein (y""') du couvercle supérieur du cylindre intérieur (7), soit par de les anneaux de fixation (66), introduits dans les trous (z""') du cylindre intérieur (1);
lorsque le couvercle supérieur du cylindre intérieur (7) joue aussi le rôle de corps des soupapes planes (70), contenant des canaux (s""), le cylindre intérieur (1) aura des orifices (o"""), correspondant aux canaux (s"").

19. Amortisseur auto-réglable à caractéristique dissipative autocorrective destiné aux véhicules, avec des soupapes de remplissage courbés, cylindriques et planes, selon l'une des revendications 1 à 18, **caractérisé en ce que**:
le piston (4), a dans la partie centrale un trou (g"), pour pouvoir passer la tige de piston (5) le trou étant conique dans la zone inférieure (c"""), une zone où la tête (b"""), formé par l'emboutissage de l'extrémité inférieure de la tige (5), fixe le piston;
il est recommandé que les empreintes (j"""), qui se trouvent sur la tête emboutie soient horizontales ou inclinées pour éviter la formation du nid de gaz, leur niveau étant inférieur au niveau de la face inférieure (d"), du piston (4).

20. Amortisseur auto-réglable à caractéristique dissipative autocorrective destiné aux véhicules, avec des soupapes de remplissage courbés, cylindriques et planes, selon l'une des revendications 1 à 19, **caractérisé en ce que**:
le piston (4), a un découpage dans la partie inferieure (a"""), où se trouve la tête (b"""), formée soit par l'emboutissage de l'extrémité inférieure de la tige de piston (5), la tête (b"""). fixant le piston (4), sur la tige (5), soit directement, lorsque, pour favoriser l'emboutissage le trou (g"), pour le passage du piston (5) est de forme conique dans la zone inférieure (c"""), ou indirectement par l'intermédiaire d'une rondelle (75), qui a dans le trou (d"""), pour le passage de la tige de piston , la partie inferieure (e""") de forme conique, afin de favoriser l'emboutissage;
le découpage (a"""), est fermé par un couvercle (29), étayé sur le fond du découpage (a"""), respectivement sur la rondelle (75), de sorte que la face inférieure (f"""), du couvercle (29), soit sous la face inférieure (d") du piston (4).

21. Amortisseur auto-réglable à caractéristique dissipative autocorrective destiné aux véhicules, avec des soupapes de remplissage courbés, cylindriques et planes, selon l'une des revendications 1 à 20, **caractérisé en ce que**:
le piston (4), a dans la zone inferieure un découpage (a"""), fermé au fond par un couvercle (76), prévu au sommet avec un épaule annulaire (g"""), qui assure le centrage radial en rapport au découpage (a""") et la fixation axiale grâce à l'appui sur la face inférieure (d") du piston (4);
le couvercle (76), a un trou central (h"""), à travers lequel passe la tige de piston (5) par rapport à laquelle il est aligné d'une manière radial;
la tête (b"""), formée par l'emboutissage de l'extrémité inférieure de la tige de piston (5), fixe avec l'épaule (c") de la tige (5) l'ensemble piston (4), et le couvercle (76), pour favoriser l'emboutissage de la tête (b"""), le trou (h"""), est conique dans la zone inferieure (i""");
il est recommandé que les empreintes (j"""), situées sur la tête embouties soient horizontales ou inclinés pour éviter la formation du nid de gaz, à cet effet, leur niveau étant inférieur au niveau de la face inférieure (d"), du piston (4).

22. Amortisseur auto-réglable à caractéristique dissipative autocorrective destiné aux véhicules, avec des soupapes de remplissage courbés, cylindriques et planes, selon l'une des revendications 1 à 21, **caractérisé en ce que**:
le joint amovible (57), est fixé directement dans le cylindre intérieur (1), à son extrémité supérieure, qui est prévu avec quelques canaux annulaires (m"""), avec la section souhaites, où entrent les proéminences (f""). Pour une fixation plus sûre, il est recommandé d'utiliser un anneau de sécurité (3), fixe dans le canal (x""").
la fixation/le centrage du cylindre intérieur (1), par rapport au cylindre extérieur (6), se fait à la partie supérieure à travers le couvercle annulaire(2), avec une section en forme de "L" la couronne verticale (q) assurant la fixation radiale par rapport à la surface intérieure (p), surface usiné / brute (p) du cylindre extérieur (6), et la couronne horizontale (r) assure la fixation axiale par rapport au bordure de fermeture (s), du cylindre extérieur (6).

23. Amortisseur auto-réglable à caractéristique dissipative autocorrective destiné aux véhicules, avec des soupapes de remplissage courbés, cylindriques et planes, selon l'une des revendications 1 à 22, **caractérisé en ce que**:
la fixation /le centrage du cylindre intérieur (1), par rapport au cylindre extérieur (6), se fait dans la zone inferieure par l'épaule (n"""), utilisé dans le couvercle inférieur extérieur (12), l'épaule étant centré par rapport à la surface intérieure (p), usiné ou brute du cylindre extérieur (6).

24. Amortisseur auto-réglable à caractéristique dissipative autocorrective destiné aux véhicules, avec des soupapes de remplissage courbés, cylindriques et planes, selon l'une des revendications 1 à 23, **caractérisé en ce que**:
la fixation/le centrage du cylindre intérieur (1), par rapport au cylindre extérieur (6), se fait à la partie supérieure, axialement par la bordure (s) et radiale à travers les empreintes longitudinales (q"""), ou l'épaule annulaire (r"""), qui ont les faces intérieures (s""") usinées en vue d'être ajustées de façon rigide avec le cylindre intérieur (1);
les empreintes longitudinales (q''''''), peuvent être prolongée en bas pour les rendre rigides et l'amélioration de la réfrigération, lorsque leurs faces intérieures (s'''''') sont usinées partiellement ou sur toute la surface, pour les rendre rigides par rapport au cylindre intérieur

25. Amortisseur auto-réglable à caractéristique dissipative autocorrective destiné aux véhicules, avec des soupapes de remplissage courbés, cylindriques et planes, selon l'une des revendications 1 à 24, **caractérisé en ce que**:
il utilise une soupape de remplissage courbe, avec des clapets rigides / semi rigides / clapets élastiques, avec ressort clapet extérieur, composé par un clapet courbe / cylindrique / plane, rigide / semi rigide / élastique (51) / (33), placé à l'intérieur du cylindre intérieur (1), ou du manchon intérieur (47), ou du corps annulaire (43), ou du corps injecté/fondé (74), directement ou sur les proéminences (i'''), obturant les orifices de pénétration de l'huile (j''), (f''');
le clapet (51) / (33), est fixé avec le rivet / vis (53) à travers l'orifice (z'''), tous les deux ayant une section rectangulaire ou ovale, afin d'éviter la rotation;
le rivet / vis (53) coulisse dans le trou (y"""), du cylindre intérieur (1) /du corps annulaire (43) / du manchon intérieur (47) / manchon usiné (74), commandé par le ressort clapet (77), fixé à l'extrémité supérieure par rivetage ou écrou;
afin de permettre l'accès du liquide, les bras du l'arcs ont des canaux (j''')
